(19) **Europäisches Patentamt / European Patent Office / Office européen des brevets**

(11) **EP 4 456 644 A1**

(12) **EUROPEAN PATENT APPLICATION**
published in accordance with Art. 153(4) EPC

(43) Date of publication:
30.10.2024 Bulletin 2024/44

(21) Application number: 22909996.5

(22) Date of filing: 20.12.2022

(51) International Patent Classification (IPC):
*H04W 72/12* *(2023.01)*

(52) Cooperative Patent Classification (CPC):
H04L 1/1812; H04L 5/00; H04W 4/02;
H04W 72/0446; H04W 72/0453; H04W 72/12

(86) International application number:
PCT/CN2022/140327

(87) International publication number:
WO 2023/116684 (29.06.2023 Gazette 2023/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.12.2021 CN 202111572848

(71) Applicant: VIVO MOBILE COMMUNICATION CO.,
LTD.
Dongguan, Guangdong 523863 (CN)

(72) Inventors:
• WANG, Yuanyuan
  Dongguan, Guangdong 523863 (CN)
• SI, Ye
  Dongguan, Guangdong 523863 (CN)
• WU, Huaming
  Dongguan, Guangdong 523863 (CN)
• ZHUANG, Zixun
  Dongguan, Guangdong 523863 (CN)

(74) Representative: Lavoix
Bayerstraße 83
80335 München (DE)

(54) **SIDELINK POSITIONING SIGNAL SCHEDULING METHOD AND APPARATUS, TERMINAL, AND NETWORK SIDE DEVICE**

(57) This application provides a sensing measurement method, a sensing measurement indication method, a terminal, and a network-side device. The sensing measurement method includes: the terminal receives PEI, where the PEI includes sensing indication information; the terminal performs a target operation according to the sensing indication information, where the target operation includes at least one of: performing sensing measurement on a first signal and reporting a sensing measurement quantity; and sending, to a target device, a second signal for sensing measurement by the target device.

FIG. 2

**Description**

**CROSS-REFERENCE TO RELATED APPLICATIONS**

This application claims priority to Chinese Patent Application No. 202111572848.8, filed in China on December 21, 2021, which is incorporated herein by reference in its entirety.

**TECHNICAL FIELD**

This application pertains to the field of communication technologies, and specifically, relates to a sidelink positioning signal scheduling method and apparatus, a terminal, and a network-side device.

**BACKGROUND**

A long term evolution (Long Term Evolution, LTE) system supports sidelink (sidelink) transmission, that is, data transmission between user equipments (User Equipment, UE). LTE sidelink communication is based on broadcast, although supporting basic safety communication in vehicle to everything (Vehicle to everything, V2X), not suitable for other more advanced V2X services. A fifth generation (5th Generation Mobile Communication Technology, 5G) new radio (New Radio, NR) system supports more advanced sidelink transmission designs, such as unicast and multicast or groupcast, so as to support more comprehensive service types.

NR V2X defines two resource allocation modes (mode): in mode 1, resources are scheduled by a base station; in mode 2, UE determines itself what resources to be used for transmission, and in this case, resource information may be from a broadcast message of the base station or from pre-configured information. If the UE operates within coverage of the base station and has a radio resource control (Radio Resource Control, RRC) connection to the base station, the UE may operate in mode 1 and/or mode 2; if the UE operates within coverage of the base station but has no RRC connection to the base station, the UE can merely operate in mode 2; and if the UE is outside coverage of the base station, the LTE can merely operate in mode 2 and performs V2X transmission based on pre-configured information. In a case of mode 1, sidelink positioning is not supported in the prior art, and there is neither related scheme for signal scheduling during sidelink positioning.

**SUMMARY**

Embodiments of this application provide a sidelink positioning signal scheduling method and apparatus, a terminal, and a network-side device, so as to resolve the problem of sidelink positioning.

According to a first aspect, a sidelink positioning signal scheduling method is provided, applied to a first terminal, where the method includes:

receiving, by the first terminal, first sidelink positioning reference signal configuration information sent by a network-side device; and

performing, by the first terminal, a scheduling operation on a target sidelink positioning reference signal according to the first sidelink positioning reference signal configuration information; where

the first terminal is a transmit terminal or a receive terminal of the target sidelink positioning reference signal.

According to a second aspect, a sidelink positioning signal scheduling method is provided, applied to a network-side device, where the method includes:

sending, by the network-side device, first sidelink positioning reference signal configuration information to a first terminal; where

the first terminal is a transmit terminal or a receive terminal of a target sidelink positioning reference signal.

According to a third aspect, a sidelink positioning signal scheduling method is provided, applied to a second terminal, where the method includes:

exchanging, by a second terminal, first sidelink positioning reference signal configuration information with a network-side device; and/or

exchanging, by the second terminal, second sidelink positioning reference signal configuration information with a first terminal; where

the first terminal is a transmit terminal or a receive terminal of a target sidelink positioning reference signal, and the second terminal is a peer terminal of the first terminal.

According to a fourth aspect, a sidelink positioning signal scheduling apparatus is provided, applied to a first terminal and including:

a first receiving module, configured to receive first sidelink positioning reference signal configuration information sent by a network-side device; and
a first processing module, configured to perform a scheduling operation on a target sidelink positioning reference signal according to the first sidelink positioning reference signal configuration information; where
the first terminal is a transmit terminal or a receive terminal of the target sidelink positioning reference signal.

According to a fifth aspect, a sidelink positioning signal scheduling apparatus is provided, applied to a network-side device and including:

a first sending module, configured to send first sidelink positioning reference signal configuration information to a first terminal; where
the first terminal is a transmit terminal or a receive terminal of a target sidelink positioning reference signal.

According to a sixth aspect, a sidelink positioning signal scheduling apparatus is provided, applied to a second terminal and including:

a first information exchange module, configured to exchange first sidelink positioning reference signal configuration information with a network-side device; and/or
a second information exchange module, configured to exchange second sidelink positioning reference signal configuration information with a first terminal; where
the first terminal is a transmit terminal or a receive terminal of a target sidelink positioning reference signal, and the second terminal is a peer terminal of the first terminal.

According to a seventh aspect, a terminal is provided, where the terminal is a first terminal, the terminal includes a processor and a memory, and a program or instructions capable of running on the processor are stored in the memory. When the program or the instructions are executed by the processor, the steps of the method according to the first aspect are implemented.
According to an eighth aspect, a terminal is provided, where the terminal is a first terminal, including a processor and a communication interface, where the communication interface is configured to receive first sidelink positioning reference signal configuration information sent by a network-side device; and

the processor is configured to perform a scheduling operation on a target sidelink positioning reference signal according to the first sidelink positioning reference signal configuration information; where
the first terminal is a transmit terminal or a receive terminal of the target sidelink positioning reference signal.

According to a ninth aspect, a network-side device is provided, where the network-side device includes a processor and a memory, and a program or instructions capable of running on the processor are stored in the memory. When the program or the instructions are executed by the processor, the steps of the method according to the second aspect are implemented.
According to a tenth aspect, a network-side device is provided, including a processor and a communication interface, where the communication interface is configured to: send first sidelink positioning reference signal configuration information to a first terminal; and
the first terminal is a transmit terminal or a receive terminal of a target sidelink positioning reference signal.
According to an eleventh aspect, a terminal is provided, where the terminal is a second terminal, the terminal includes a processor and a memory, and a program or instructions capable of running on the processor are stored in the memory. When the program or the instructions are executed by the processor, the steps of the method according to the third aspect are implemented.
According to a twelfth aspect, a terminal is provided, where the terminal is a second terminal, including a processor and a communication interface, where the communication interface is configured to exchange first sidelink positioning reference signal configuration information with a network-side device; and/or exchange second sidelink positioning reference signal configuration information with a first terminal; where
the first terminal is a transmit terminal or a receive terminal of a target sidelink positioning reference signal, and the second terminal is a peer terminal of the first terminal.

According to a thirteenth aspect, a sidelink positioning signal scheduling system is provided, including a terminal and a network-side device, where the terminal may be configured to perform the steps of the sidelink positioning signal scheduling method according to the first aspect, or perform the steps of the sidelink positioning signal scheduling method according to the third aspect, and the network-side device may be configured to perform the steps of the sidelink positioning signal scheduling method according to the second aspect.

According to a fourteenth aspect, a readable storage medium is provided, where a program or instructions are stored in the readable storage medium; and when the program or the instructions are executed by a processor, the steps of the method according to the first aspect are implemented, or the steps of the method according to the second aspect are implemented, or the steps of the method according to the third aspect are implemented.

According to a fifteenth aspect, a chip is provided, where the chip includes a processor and a communication interface, the communication interface is coupled to the processor, and the processor is configured to run a program or instructions to implement the method according to the first aspect, or implement the method according to the second aspect, or implement the method according to the third aspect.

According to a sixteenth aspect, a computer program product is provided, where the computer program product is stored in a storage medium, and the computer program product is executed by at least one processor to implement the steps of the sidelink positioning signal scheduling method according to the first aspect, or the steps of the sidelink positioning signal scheduling method according to the second aspect, or the steps of the sidelink positioning signal scheduling method according to the third aspect.

In the embodiments of this application, the first terminal performs the scheduling operation on the target sidelink positioning reference signal according to the first sidelink positioning reference signal configuration information sent by the network-side device, and provides a scheme related to signal scheduling during the sidelink positioning, so as to implement sidelink positioning.

**BRIEF DESCRIPTION OF DRAWINGS**

FIG. 1 is a block diagram of a wireless communication system to which the embodiments of this application are applicable;

FIG. 2 is a first schematic flowchart of a sidelink positioning signal scheduling method according to an embodiment of this application;

FIG. 3 is a first schematic diagram of a sidelink positioning signal scheduling architecture according to an embodiment of this application;

FIG. 4 is a second schematic flowchart of a sidelink positioning signal scheduling method according to an embodiment of this application;

FIG. 5 is a second schematic diagram of a sidelink positioning signal scheduling architecture according to an embodiment of this application;

FIG. 6 is a third schematic flowchart of a sidelink positioning signal scheduling method according to an embodiment of this application;

FIG. 7 is a third schematic diagram of a sidelink positioning signal scheduling architecture according to an embodiment of this application;

FIG. 8 is a fourth schematic flowchart of a sidelink positioning signal scheduling method according to an embodiment of this application;

FIG. 9 is a fourth schematic diagram of a sidelink positioning signal scheduling architecture according to an embodiment of this application;

FIG. 10 is a fifth schematic flowchart of a sidelink positioning signal scheduling method according to an embodiment of this application;

FIG. 11 is a sixth schematic flowchart of a sidelink positioning signal scheduling method according to an embodiment of this application;

FIG. 12 is a seventh schematic flowchart of a sidelink positioning signal scheduling method according to an embodiment of this application;

FIG. 13 is a first schematic structural diagram of a sidelink positioning signal scheduling apparatus according to an embodiment of this application;

FIG. 14 is a second schematic structural diagram of a sidelink positioning signal scheduling apparatus according to an embodiment of this application;

FIG. 15 is a third schematic structural diagram of a sidelink positioning signal scheduling apparatus according to an embodiment of this application;

FIG. 16 is a schematic structural diagram of a communication device according to an embodiment of this application;

FIG. 17 is a first schematic structural diagram of a terminal according to an embodiment of this application;

FIG. 18 is a schematic structural diagram of a network-side device according to an embodiment of this application; and

FIG. 19 is a second schematic structural diagram of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

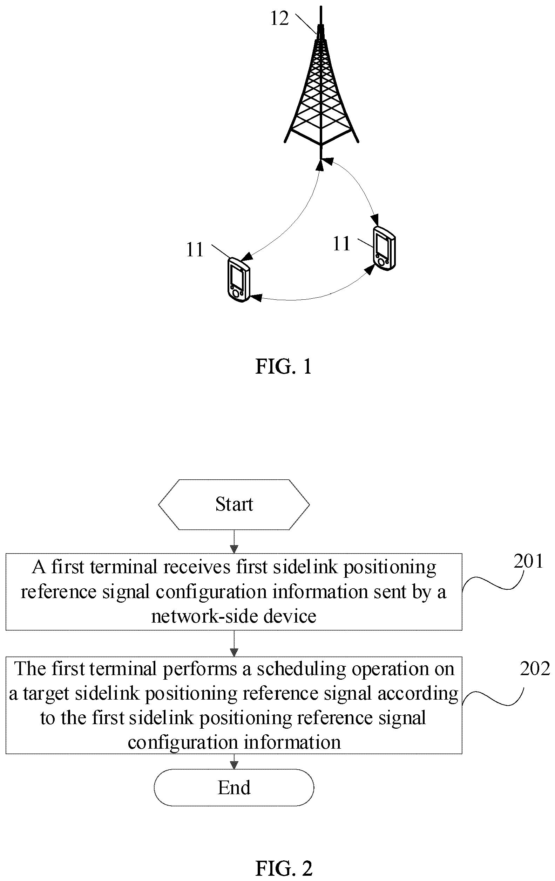

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a Transmitting Receiving point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), a location manage function (location manage function, LMF), an evolved serving mobile location centre (Evolved Serving Mobile Location Centre, E-SMLC), a network data analytics function (network data analytics function, NWDAF), and the like. It should be noted that in the embodiments of this application, a core network device in an NR system is used as an example for description, and a specific type of the core network device is not limited.

For description of the embodiments of this application, some concepts used in the following description are first described.

1. Resource allocation

NR V2X defines two resource allocation modes: in mode 1, resources are scheduled by a base station; in mode 2, UE determines itself what resources to be used for transmission.

(1) In mode 2, a specific operating manner is as follows:

1) After resource selection is triggered, transmit UE (Transmit UE, TX UE) first determines a resource selection window, with a lower boundary of the resource selection window being a time of T1 after triggering of resource selection and an upper boundary for resource selection being a time of T2 after triggering, where T2 is a value selected by the UE from a packet delay budget (Packet Delay Budget, PDB) for its TB transmission, and T2 is not earlier than T1.

2) Before resource selection, the UE needs to determine a candidate resource set (candidate resource set) for resource selection by comparing a reference signal received power (Reference Signal Received Power, RSRP) measured on resources in a resource selection window against a corresponding RSRP threshold (threshold) and then adding the resources into the candidate resource set if the RSRP is lower than the RSRP threshold.

3) After the resource set is determined, the UE randomly selects a transmission resource from the candidate resource set. In addition, the UE may reserve a transmission resource for a next transmission during a current transmission.

2. For mode 1, downlink control information (Downlink Control Information, DCI) for mode 1 will be described below.

A): DCI 3-0

DCI 3-0 is used to schedule NR physical sidelink control channel (Physical Sidelink Control Channel, PSCCH) or physical sidelink sharing channel (Physical Sidelink Sharing Channel, PSSCH). Cyclic redundancy check (Cyclic redundancy check, CRC) is a sidelink radio network temporary identifier (Sidelink Radio Network Temporary Identifier, SL-RNTI) or a sidelink configured scheduling RNTI (Sidelink Configured Scheduling RNTI, SL-CS-RNTI), where the SL-CS-RNTI is used for scheduling or activating sidelink configured grant type 2 (SL configured grant Type2).

Specifically, DCI 3-0 may include the following information:

resource pool indication information, such as $\lceil \log_2 I \rceil$ bits, where I is the number of resource pools;

time interval, 3bits, being a time interval between DCI and SL transmission;

hybrid automatic repeat request (Hybrid automatic repeat request, HARQ) process number (HARQ process number), with 4 bits;

new data indicator (New data indicator), with 1 bit;

a lowest position of subchannel (Subchannel);

sidelink control information (Sidelink Control Information, SCI) format 1-A conforming to a predetermined protocol, including frequency resource assignment (Frequency resource assignment) and time resource assignment (Time resource assignment);

PSFCH-to-HARQ feedback indicator, indicating the number of slots (slot) of the physical sidelink feedback channel (Physical Sidelink Feedback Channel, PSFCH) and the physical uplink control channel (Physical Uplink Control Channel, PUCCH);

PUCCH resource indicator (resource indicator), where this parameter is not configured when Type2 configured grant (Configured Grant, CG) is scheduled or activated by using DCI; and

configuration index (Configuration index), 0 bit for a case that RC scrambling by SL-CS-RNTI is not configured.

B): DCI 3-1

DCI 3-0 is used for scheduling LTE PSCCH or PSSCH. CRC is V-RNTI (used for semi-persistent scheduling).
DCI 3-1 specifically includes:

time interval, 3 bits, being a time interval between DCI and SL transmissions;
carrier indicator (Carrier indicator), 3 bits;
lowest position of subchannel;
initial transmission and retransmission at a frequency domain position;
time domain interval (initial transmission and retransmission);
SL indicator;
SL semi-persistent scheduling (Semi-Persistent Scheduling, SPS) configuration index (configuration index), 3 bits; and
activation/release indication (Activation/release indication), 1 bit.

C): Special bit description for SL configured grant type 2.

If DCI is scrambled by SL-CS-RNTI;

all new data indicators are set to 0;
HARQ process numbers being all 0 are for activation; and
HARQ process numbers and frequency resource assignment being all 1 are for deactivation.

3. For mode 1, a medium access control control element (Medium Access Control Control Element, MAC CE) for mode 1 will be described below.
For SL configured grant type 1: MAC CE semi-active static.

a) Type1 CG, configured by RRC and including:

SL configuration index CG (sl-ConfigIndexCG): identification information of sidelink configured grant;
SL CS RNTI: SLCS-RNTI for retransmission;
SL-NrOfHARQ-Processes: HARQ process number;
SL PeriodCG: period for configured grant type 1;
SL- TimeOffsetCG- Type 1: slot offset relative to a reference logical slot;
SL-TimeResourceCG-Type1: time domain resource position for configured grant type 1;
SL CG MaxTransNumList: the maximum number of times that TBs can be transmitted using a configured grant;
SL HARQ ProcID offset: offset of a HARQ process for configured grant type 1; and
SL-TimeReferenceSFN-Type1: system frame number (System frame number, SFN) that is used for determining a time domain reference resource. If present, UE uses the first slot of a resource pool closest to the SFN as reference logic; or if absent, it indicates that the reference SFN is 0.

b) Type 2CG, to be activated or deactivated by PDCCH and including:

SL ConfigIndexCG: identification information of SL configured grant;
SL CS RNTI: SLCS-RNTI for activation, deactivation, and retransmission;
sl-NrOfHARQ-Processes: HARQ process number;
SL PeriodCG: period for configured grant type 2;
SL CG MaxTransNumList: the maximum number of times that TBs can be transmitted using a configured grant; and
SL HARQ ProcID offset: offset of a HARQ process for configured grant type 1.

It should be noted that the total number of Type 1 CGs and Type2 CGs is at most 8.

4. Sidelink SCI

Including first-stage SCI and

7

second-stage SCI.

The following describes in detail a sidelink positioning signal scheduling method provided in the embodiments of this application by using some embodiments and application scenarios thereof with reference to the accompanying drawings.

As shown in FIG. 2, an embodiment of this application provides a sidelink positioning signal scheduling method, which is applied to a first terminal and includes the following steps.

Step 201: The first terminal receives first sidelink positioning reference signal configuration information sent by a network-side device.

The first terminal is a transmit terminal or a receive terminal of a target sidelink positioning reference signal. The first sidelink positioning reference signal configuration information may be sent by the network-side device, and the first sidelink positioning reference signal configuration information is used for scheduling the first terminal to perform a related scheduling operation on the target sidelink positioning reference signal.

The network-side device is, for example, a location server, a location management function (Location Management Function, LMF), a base station, or an evolved serving mobile location centre (Evolved Serving Mobile Location Centre, E-SMLC). The sidelink positioning reference signal may be used for determining location information of a target terminal, such as an S-SSB, a CSI-RS, or a demodulation reference signal (Demodulation Reference Signal, DMRS), or a signal extended to SL based on NR PRS or SRS, such as SL-PRS or SL-SRS.

When the first terminal is a transmit terminal of the target sidelink positioning reference signal, the second terminal is a receive terminal of the target sidelink positioning reference signal; or when the first terminal is a receive terminal of the target sidelink positioning reference signal, the second terminal is a transmit terminal of the target sidelink positioning reference signal. It should be noted that in this embodiment of this application, the second terminal may be one or more.

The transmit terminal is, for example, a roadside unit, and the roadside unit can periodically send a sidelink positioning reference signal for determining a location of the target terminal.

Step 202: The first terminal performs a scheduling operation on a target sidelink positioning reference signal according to the first sidelink positioning reference signal configuration information.

The first terminal performs a scheduling operation on the target sidelink positioning reference signal according to the first sidelink positioning reference signal configuration information. The first sidelink positioning reference signal configuration information may include configuration information for one or more sidelink positioning reference signals, or may include configuration information for one or more pre-configured sidelink positioning reference signals. The target sidelink positioning reference signal is one or more of the sidelink positioning reference signals, and the first terminal can determine the target sidelink positioning reference signal according to the first sidelink positioning reference signal configuration information and/or transmission requirements.

In this embodiment of this application, the first terminal performs the scheduling operation on the target sidelink positioning reference signal according to the first sidelink positioning reference signal configuration information sent by the network-side device, and provides a scheme related to signal scheduling during the sidelink positioning, so as to implement sidelink positioning.

Optionally, the first terminal is a target terminal for which location information is to be determined, and the location information includes at least one of the following:

relative location information; for example, a relative location of the target terminal relative to one known location or device (such as a second terminal, a reference terminal, or a base station);
absolute location information, such as latitude and longitude information of the target terminal;
relative distance information, such as a relative distance of the target terminal relative to one known location or device (such as a second terminal, a reference terminal, or a base station) and/or a relative angle of the target terminal relative to one known location or device (such as a second terminal, a reference terminal, or a base station); and
SL measurement result; where
the SL measurement result includes information obtained through measurement on the target sidelink positioning reference signal.

Specifically, the SL measurement result may include one or more of the following information:

1) Angle information, which may include an angle of arrival measurement result and/or an angle of departure measurement result. Optionally, the angle information may be angle information of the target terminal relative to one known location or device (such as a second terminal, a reference terminal, or a base station) or may be angle information relative to a reference direction.
2) Time information, where the time information includes at least one of a reference signal time difference measurement result, a round-trip delay measurement result, and a reference signal arrival time.

3) Energy information, where the energy information may be energy information of signals transmitted or received by the target terminal, the energy information may include reference signal received power (Reference Signal Received Power, RSRP) and/or received signal strength indication (Received Signal Strength Indication, RSSI), and the energy information may be relative energy information.

The information such as location information and SL measurement result may be obtained based on observed time difference of arrival (Observed Time Difference of Arrival, OTDOA), global navigation satellite system (Global Navigation Satellite System, GNSS), downlink time difference of arrival (TDOA), uplink time difference of arrival (Time Difference of Arrival, TDOA), uplink bluetooth angle-of-arrival (Angle-of-Arrival, AoA), bluetooth angle of departure (Angle of Departure, AoD), round trip time (Round Trip Time, RTT), multi-round trip time (Multi-Round Trip Time, Multi-RTT), bluetooth, sensor, or Wi-Fi.

The following describes the sidelink positioning reference signal scheduling method for a case that the first terminal is a transmit terminal or a receive terminal of the target sidelink positioning reference signal.

In an optional embodiment, the performing a scheduling operation on a target sidelink positioning reference signal according to the first sidelink positioning reference signal configuration information includes:
sending the target sidelink positioning reference signal according to the first sidelink positioning reference signal configuration information.

In this embodiment, the first terminal may be a transmit terminal of the target sidelink positioning reference signal, the second terminal is a receive terminal of the target sidelink positioning reference signal, and the first sidelink positioning reference signal configuration information is sent by the network-side device. The first sidelink positioning reference signal configuration information can be used for scheduling the first terminal to send a sidelink positioning reference signal or assist the first terminal in determining a sidelink positioning reference signal to be sent.

Optionally, the first sidelink positioning reference signal configuration information includes at least one of a time domain position or a frequency domain position for sending a sidelink positioning reference signal, and the first terminal determines sequence information for the sidelink positioning reference signal, and finally determines the target sidelink positioning reference signal to be sent and sends it. After receiving the first sidelink positioning reference signal configuration information, the first terminal determines the target sidelink positioning reference signal to be sent and sends it.

Optionally, in a case that the first terminal is a transmit terminal of the target sidelink positioning reference signal, the performing a scheduling operation on the target sidelink positioning reference signal according to the first sidelink positioning reference signal configuration information further includes at least one of the following operations:

(1) Sending second sidelink positioning reference signal configuration information to a second terminal, where content included in the second sidelink positioning reference signal configuration information may be at least partially the same as content of the first sidelink positioning reference signal configuration information. The second sidelink positioning reference signal configuration information may be used for scheduling the second terminal to receive and perform measurement on the target sidelink positioning reference signal. The second terminal is a receive terminal of the target sidelink positioning reference signal.

(2) Sending SL measurement request information to the second terminal; where the SL measurement request information may be used for scheduling the second terminal to receive and perform measurement on the target sidelink positioning reference signal.

(3) Receiving an SL measurement result sent by the second terminal; where the second terminal performs measurement on the target sidelink positioning reference signal sent by the first terminal to obtain an SL measurement result, and sends the SL measurement result to the first terminal.

(4) Sending an SL measurement result to the network-side device; where after receiving the SL measurement result sent by the second terminal, the first terminal may send the SL measurement result to the network-side device.

(5) Sending location information of the first terminal to the network-side device; where the first terminal may determine the location information based on its own parameters, or the second terminal may perform measurement to obtain the location information of the first terminal, and send the location information to the network-side device.

In an embodiment, when the second sidelink positioning reference signal configuration information and the first sidelink positioning reference signal configuration information indicate the same content, and include the same information. For example, when the first sidelink positioning reference signal configuration information includes at least one of the time domain position or frequency domain position for sending the sidelink positioning reference signal, the second sidelink positioning reference signal configuration information includes the foregoing information, and the information indicated by the second sidelink positioning reference signal configuration information is the same as the time domain position or frequency domain position indicated by the first sidelink positioning reference signal configuration information. In other words, the first terminal determines, according to the first sidelink positioning reference signal configuration information, the time-frequency position for sending the target sidelink positioning reference signal. The first terminal further needs to instruct the second terminal to perform measurement at the time-frequency position for sending the target sidelink positioning reference signal. The time-frequency positions for transmission and measurement are the same, and therefore those transmitted by the first terminal and measured by the second terminal are a same signal. A same time-frequency position is indicated finally, although indication manners may be different.

In this embodiment, in a case that the first terminal is a transmit terminal and the second terminal is a receive terminal, the network-side device schedules the first terminal to send the target sidelink positioning reference signal; The network-side device or the first terminal schedules the second terminal to perform measurement on the target sidelink positioning reference signal, which will be described by using specific embodiments.

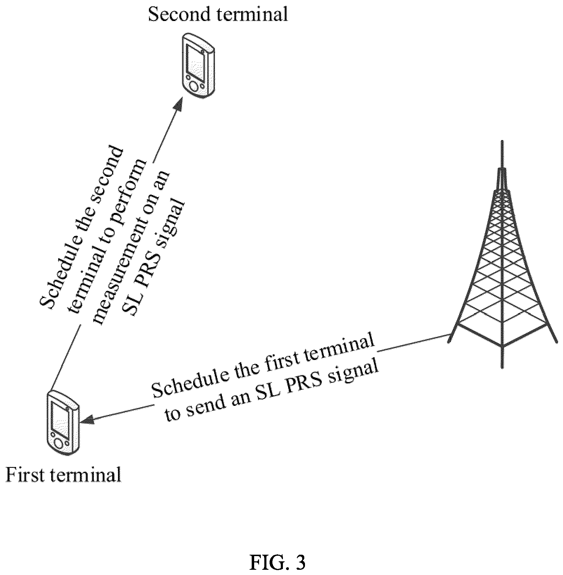

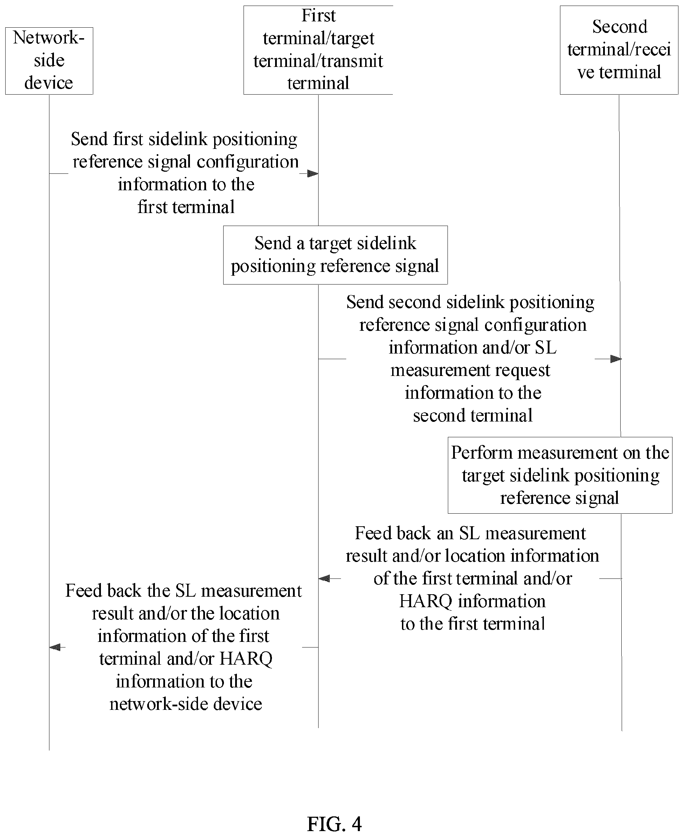

Example 1: As shown in FIG. 3, in an example in which the network-side device schedules the first terminal to send the target sidelink positioning reference signal and the first terminal schedules the second terminal to perform measurement on the target sidelink positioning reference signal, the first terminal is the target terminal for which location information needs to be determined, and the implementation process of the method is shown in FIG. 4, including the following steps.

Step 1: The network-side device sends the first sidelink positioning reference signal configuration information to the first terminal.

Step 2: The first terminal sends the target sidelink positioning reference signal.

Step 3: The first terminal sends the second sidelink positioning reference signal configuration information and/or SL measurement request information to the second terminal.

Step 4: The second terminal performs measurement on the target sidelink positioning reference signal to obtain an SL measurement result.

Step 5: The second terminal reports the SL measurement result and/or the location information of the first terminal and/or HARQ information to the first terminal.

Optionally, the second terminal may alternatively report the SL measurement result and/or the location information of the first terminal and/or HARQ information to the network-side device.

Step 6: The first terminal reports the SL measurement result and/or the location information of the first terminal to the network-side device, and optionally, the first terminal can also report the HARQ information to the network-side device.

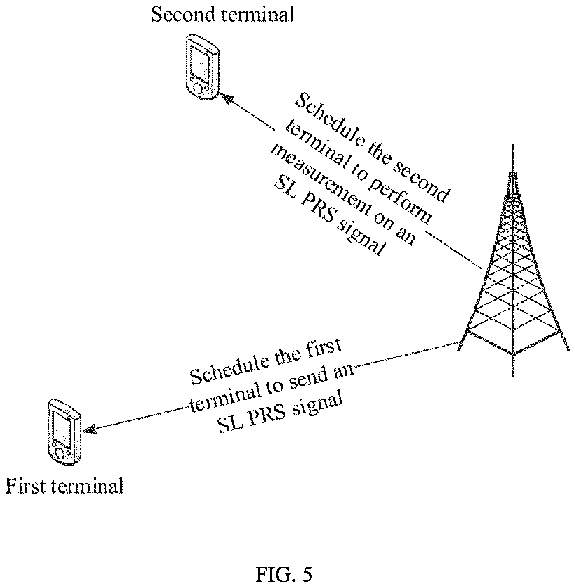

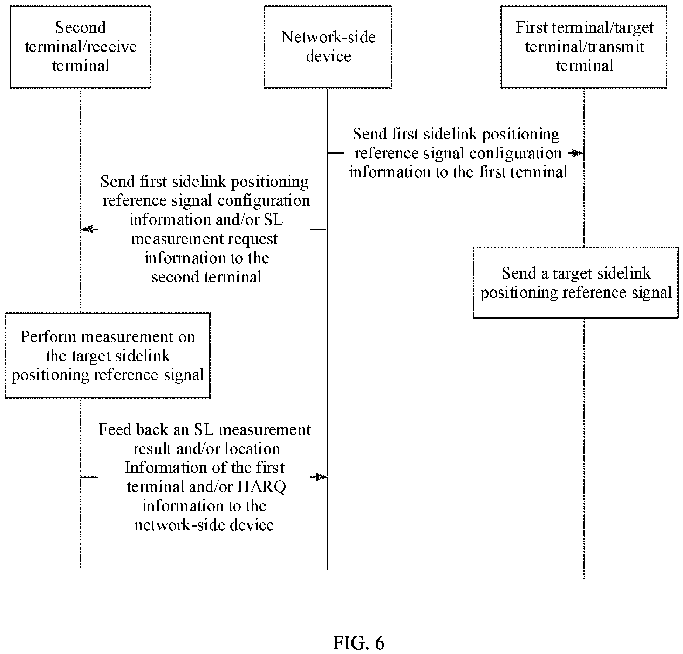

Example 2: As shown in FIG. 5, in an example in which the network-side device schedules the first terminal to send the target sidelink positioning reference signal and the network-side device schedules the second terminal to perform measurement on the target sidelink positioning reference signal, the first terminal is the target terminal for which location information needs to be determined, and the implementation process of the method is shown in FIG. 6, including the following steps.

Step 1: The network-side device sends the first sidelink positioning reference signal configuration information to the first terminal.

Step 2: The first terminal sends the target sidelink positioning reference signal.

Step 3: The network-side device sends the first sidelink positioning reference signal configuration information and/or SL measurement request information to the second terminal.

Step 4: The second terminal performs measurement on the target sidelink positioning reference signal to obtain an SL measurement result.

Step 5: The second terminal reports the SL measurement result and/or the location information of the first terminal and/or HARQ information to the network-side device.

Optionally, the second terminal may report the SL measurement result and/or the location information of the first terminal and/or the HARQ information to the first terminal, and the first terminal then forwards the foregoing information to the network-side device.

In an optional embodiment, the performing the scheduling operation on the target sidelink positioning reference signal according to the first sidelink positioning reference signal configuration information includes: performing measurement on the target sidelink positioning reference signal according to the first sidelink positioning reference signal configuration information to obtain an SL measurement result.

In this embodiment, the first terminal is a receive terminal of the target sidelink positioning reference signal, and the second terminal is a transmit terminal of the target sidelink positioning reference signal. The first terminal receives the first sidelink positioning reference signal configuration information sent by the network-side device, and the first sidelink positioning reference signal configuration information can be used for scheduling the first terminal to perform measurement on the target sidelink positioning reference signal. The network-side device may schedule the second terminal to send the target sidelink positioning reference signal.

Optionally, in a case that the first terminal performs measurement on the target sidelink positioning reference signal according to the first sidelink positioning reference signal configuration information to obtain an SL measurement result, the scheduling operation performed by the first terminal on the target sidelink positioning reference signal according to the first sidelink positioning reference signal configuration information further includes at least one of the following operations: (1) Sending the SL measurement result to the second terminal; and after receiving the SL measurement result, the second terminal may send the SL measurement result to the network-side device.

(2) Sending the SL measurement result to the network-side device, so that the network-side device may send the SL measurement result to the second terminal after receiving the SL measurement result.

(3) Sending location information of the first terminal to the network-side device. The network-side device may send the location information of the first terminal to the second terminal. The location information of the first terminal may be obtained through measurement by the first terminal or obtained based on its own parameters. Optionally, in this embodiment, in a case that the first terminal is a receive terminal of the target sidelink positioning reference signal and the second terminal is a transmit terminal of the target sidelink positioning reference signal, the network-side device may exchange the first sidelink positioning reference signal configuration information with the second terminal. The method for exchanging the first sidelink positioning reference signal configuration information may include any one of the following:

Method 1: The second terminal reports the first sidelink positioning reference signal configuration information to the network-side device.

Method 2: The network-side device configures the first sidelink positioning reference signal configuration information for the second terminal.

Method 3: Step 1. the network-side device sends configuration request information for sidelink positioning reference signal configuration information to the second terminal; Step 2. the second terminal sends response information to the network-side device, where the response information may include the first sidelink positioning reference signal configuration information. Optionally, the second terminal may report error (error) information, such as no sidelink positioning reference signal, or unable to enable.

Method 4: Step 1. the second terminal sends configuration request information for the first sidelink positioning reference signal configuration information to the network-side device; Step 2. the network-side device sends the first sidelink positioning reference signal configuration information to the second terminal.

The following describes specific implementation processes of this optional embodiment through specific examples.

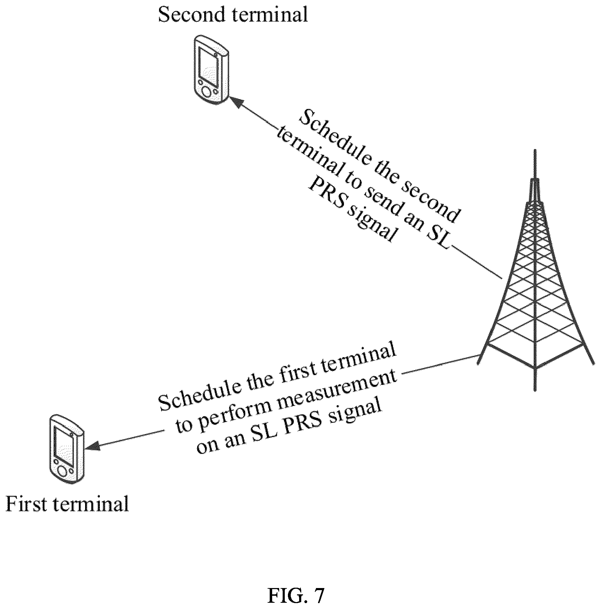

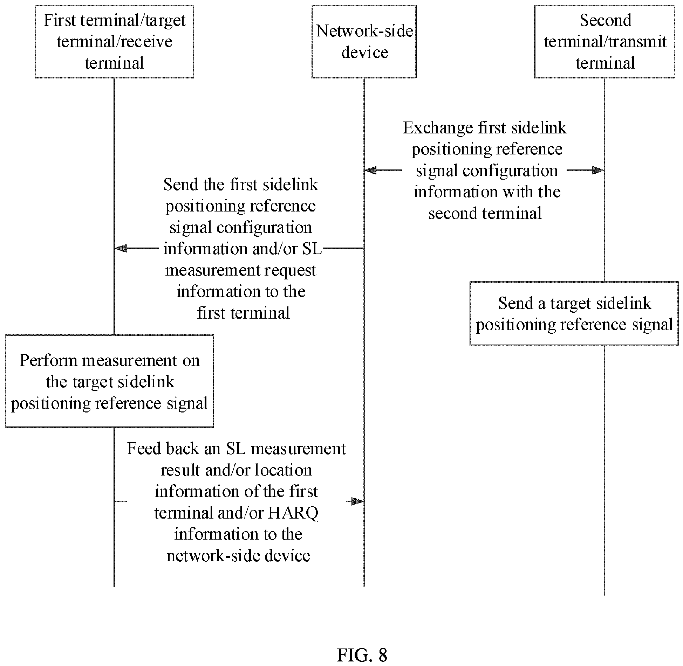

Example 3: As shown in FIG. 7, in an example in which the network-side device schedules the first terminal to perform measurement on the target sidelink positioning reference signal and the network-side device schedules the second terminal to send the target sidelink positioning reference signal, the first terminal is the target terminal for which location information needs to be determined, and the implementation process of the method is shown in FIG. 8, including the following steps.

Step 1: The network-side device exchanges the first sidelink positioning reference signal configuration information with the second terminal.

Step 2. The second terminal sends the target sidelink positioning reference signal.

Step 3: The network-side device sends the first sidelink positioning reference signal configuration information and/or measurement request information to the first terminal.

Step 4: The first terminal performs measurement on the target sidelink positioning reference signal to obtain an SL measurement result.

Step 5: The first terminal sends the SL measurement result and/or the location information of the first terminal and/or HARQ information to the network-side device.

Optionally, the first terminal may send the SL measurement result and/or the location information of the first terminal and/or the HARQ information to the second terminal, and the second terminal then sends the foregoing information to the network-side device.

In an optional embodiment, the method further includes:

receiving second sidelink positioning reference signal configuration information sent by the second terminal or a third terminal; and/or performing a scheduling operation on the target sidelink positioning reference signal according to the second sidelink positioning reference signal configuration information.

In this embodiment, the first terminal may alternatively receive the second sidelink positioning reference signal configuration information sent by the second terminal or the third terminal, where the second sidelink positioning reference signal configuration information may schedule the first terminal to perform a scheduling operation on the target sidelink positioning reference signal.

That is, the first sidelink positioning reference signal configuration information may be at least one of SL bandwidth part (Bandwidth Part, BWP), SL resource pool information, zone ID, and the like. The second terminal or the third terminal sends the second sidelink positioning reference signal configuration information to the first terminal, and the second sidelink positioning reference signal configuration information includes corresponding sidelink positioning reference signal configuration information, such as at least one of time-frequency resource and sequence information for transmission, and the first terminal receives the target sidelink positioning reference signal according to the second sidelink positioning reference signal configuration information.

Optionally, the scheduling operation performed on the target sidelink positioning reference signal according to the second sidelink positioning reference signal configuration information includes at least one of the following operations:

(1) Performing measurement on the target sidelink positioning reference signal according to the second sidelink positioning reference signal configuration information to obtain an SL measurement result.
In this case, the first terminal is a receive terminal of the target sidelink positioning reference signal, and the second terminal is a transmit terminal of the target sidelink positioning reference signal. After receiving the second sidelink positioning reference signal configuration information, the first terminal performs, according to the sidelink positioning reference signal configuration information, measurement on the target sidelink positioning reference signal sent by the second terminal to obtain an SL measurement result.
(2) Sending the target sidelink positioning reference signal according to the second sidelink positioning reference signal configuration information. In this case, the first terminal is a transmit terminal of the target sidelink positioning reference signal, and the second terminal is a receive terminal of the target sidelink positioning reference signal. After receiving the second sidelink positioning reference signal configuration information, the first terminal sends the target sidelink positioning reference signal according to the sidelink positioning reference signal configuration information.
(3) Sending the SL measurement result to the second terminal, where the SL measurement result may be obtained by the first terminal through measurement on the target sidelink positioning reference signal, and the first terminal can send the SL measurement result to the second terminal after obtaining the SL measurement result.
(4) Sending the SL measurement result to the network-side device; where the SL measurement result may be obtained by the first terminal through measurement on the target sidelink positioning reference signal, or may be obtained through measurement from the second terminal.
(5) Sending the location information of the first terminal to the network-side device; where the network-side device may send the location information of the first terminal to the second terminal. The location information of the first terminal may be obtained through measurement by the first terminal or obtained based on its own parameters.

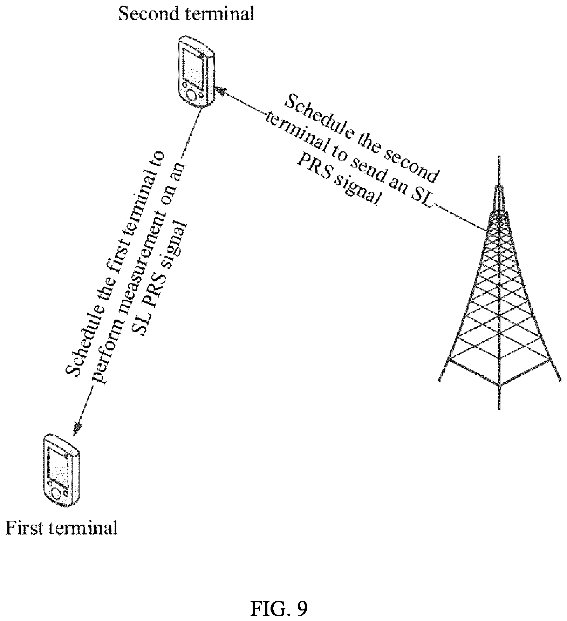

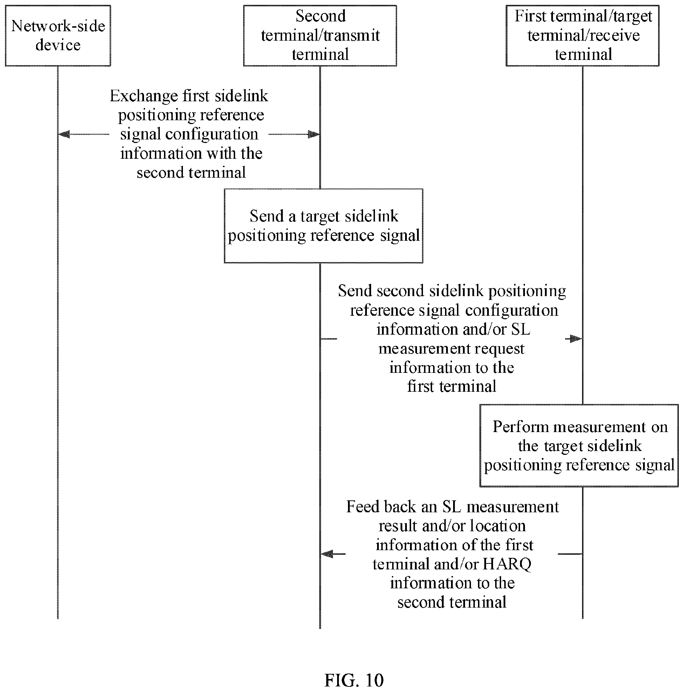

The following describes specific implementation processes of this optional embodiment through specific examples.
Example 3: As shown in FIG. 9, in an example in which the second terminal schedules the first terminal to perform measurement on the target sidelink positioning reference signal, and the network-side device schedules the second terminal to send the target sidelink positioning reference signal, that is, the first terminal is a receive terminal of the target sidelink positioning reference signal, and the second terminal is a transmit terminal of the target sidelink positioning reference signal, where the first terminal is the target terminal for which location information needs to be determined, and the implementation process of the method is shown in FIG. 10, including the following steps.
Step 1: The network-side device exchanges the first sidelink positioning reference signal configuration information with the second terminal.
Step 2. The second terminal sends the target sidelink positioning reference signal.
Step 3: The second terminal sends the second sidelink positioning reference signal configuration information and/or measurement request information to the first terminal.
Step 4: The first terminal performs measurement on the target sidelink positioning reference signal to obtain an SL measurement result.
Step 5: The first terminal sends the SL measurement result and/or the location information of the first terminal and/or the HARQ information to the second terminal, and the second terminal then sends the foregoing information to the network-side device.
Optionally, the first terminal may alternatively send the SL measurement result and/or the location information of the first terminal and/or HARQ information to the network-side device.
In an optional embodiment, the first sidelink positioning reference signal configuration information includes at least one of the following:

(1) Identification information of the first terminal. When the first terminal is a transmit terminal of the target sidelink positioning reference signal, the identification information of the first terminal is identification information (Source ID) of the transmit terminal, and when the first terminal is a receive terminal of the target sidelink positioning reference signal, the identification information of the first terminal is identification information (Destination ID) of the receive terminal. Optionally, the identification information of the first terminal is unique identification information in a group, and the identification information includes a group ID, such as at least one of a zone ID, a group ID, and a member ID. Optionally, the identification information of the first terminal is N-bit identification information, such as 24-bit identification information. Optionally, the identification information of the first terminal is a scrambling ID.

(2) Identification information of the second terminal. When the second terminal is a transmit terminal of the target sidelink positioning reference signal, the identification information of the second terminal is identification information (Source ID) of the transmit terminal, and when the second terminal is a receive terminal of the target sidelink positioning reference signal, the identification information of the second terminal is identification information (Destination ID) of the receive terminal. Optionally, the identification information of the second terminal is unique identification information in a group, and the identification information includes a group ID, such as at least one of a zone ID, a group ID, and a member ID. Optionally, the identification information of the second terminal is N-bit identification information, such as 24-bit identification information. Optionally, the identification information of the second terminal is a scrambling ID.

(3) Parameter information for a sidelink positioning reference signal. The first sidelink positioning reference signal configuration information may include parameter information for one or more sidelink positioning reference signals, including but not limited to one or more of signal sequence information, signal transmission period, signal time domain position, and signal frequency domain position. It should be noted that the parameter information for the sidelink positioning reference signal is the parameter information for one or more sidelink positioning reference signals, where the target sidelink positioning reference signal may be one or more thereof.

(4) Configuration information for a pre-configured sidelink positioning reference signal set. The first sidelink positioning reference signal configuration information may include configuration information for one or more pre-configured sidelink positioning reference signal sets, each sidelink positioning reference signal set may include one or more sidelink positioning reference signals, and the target sidelink positioning reference signal may be selected from one or more sidelink positioning reference signal sets.

Specifically, the configuration information for the pre-configured sidelink positioning reference signal set includes at least one of the following:

1) Identification information of the sidelink positioning reference signal set. That is, ID information of a pre-configured sidelink positioning reference signal set can be used to identify the pre-configured sidelink positioning reference signal set. Further, when the sidelink positioning reference signal set includes a plurality of sidelink positioning reference signals, identification information of the sidelink positioning reference signals is optionally included.

2) State information of the sidelink positioning reference signal set. The state information is, for example, an active/inactive state, or an initial state of sidelink positioning reference signals in the pre-configured sidelink positioning reference signal set is inactive by default.

3) Parameter information for sidelink positioning reference signals in the sidelink positioning reference signal set. The sidelink positioning reference signal set includes one or more sidelink positioning reference signals, and configuration information for the pre-configured sidelink positioning reference signal set includes parameter information for the sidelink positioning reference signals. Optionally, the configuration information for the pre-configured sidelink positioning reference signal set includes quantity information of the sidelink positioning reference signal set.

4) Quantity information of sidelink positioning reference signals in the sidelink positioning reference signal set. The sidelink positioning reference signal set includes one or more sidelink positioning reference signals, and the configuration information includes the number of sidelink positioning reference signals included in each sidelink positioning reference signal set.

In this embodiment, the transmit terminal determines the to-be-sent target sidelink positioning reference signal according to the first sidelink positioning reference signal configuration information and/or based on parameters selected by itself, and optionally, the target sidelink positioning reference signal is at least one of the following signals:

1) Sidelink positioning reference signal. That is, the target sidelink positioning reference signal is a sidelink positioning reference signal configured by the network-side device. In this embodiment, the first sidelink positioning reference signal configuration information sent by the network-side device may include related configuration information for the sidelink positioning reference signal, and then the first terminal may determine that the target sidelink positioning reference signal is the configured sidelink positioning reference signal.

2) Sidelink positioning reference signal selected from a plurality of sidelink positioning reference signals. When a plurality of sidelink positioning reference signals are configured, the target sidelink positioning reference signal is selected from the plurality of sidelink positioning reference signals.

3) Sidelink positioning reference signal set selected from a plurality of sidelink positioning reference signal sets. When a plurality of sidelink positioning reference signal sets are configured, the target sidelink positioning reference signal is selected from the plurality of sidelink positioning reference signal sets.

4) Sidelink positioning reference signal selected from a selected sidelink positioning reference signal set. When a plurality of sidelink positioning reference signal sets are configured and each set contains one or more sidelink positioning reference signals, the target sidelink positioning reference signal is selected from a selected sidelink positioning reference signal set.

Optionally, in an embodiment, the transmit terminal determines the to-be-sent target sidelink positioning reference signal according to the first sidelink positioning reference signal configuration information and/or based on parameters selected by itself. For example, an occasion for sending the positioning reference signal is determined according to the first sidelink positioning reference signal configuration information, and the transmit terminal determines information of the positioning reference signal other than the first sidelink positioning reference signal configuration information.

In an optional embodiment, the second sidelink positioning reference signal configuration information includes at least one of the following:

(1) Identification information of a terminal, which may include the ID of the first terminal and/or the second terminal.
(2) Location information of a terminal, which may include location information of the first terminal and/or the second terminal.
(3) Antenna information of a terminal, such as address resolution protocol (Address Resolution Protocol, ARP) location information, antenna quantity information, antenna location information, antenna configuration information, or the like.
(4) Parameter information for a sidelink positioning reference signal, that is, parameter information for a sidelink positioning reference signal configured by the second terminal or the third terminal and/or parameter information for a pre-configured sidelink positioning reference signal.

Optionally, the method further includes: sending request information for the parameter information for the sidelink positioning reference signal; where
the request information may include at least one of the following:

1) Identification information of a pre-configured sidelink positioning reference signal.
2) On/off indication information.

Specifically, the on/off indication information may include one of the following:

the on/off indication information is per terminal;
the on/off indication information is per panel/antenna of each terminal;
the on/off indication information is per transmit terminal;
the on/off indication information is per CC/FR of each transmit terminal;
the on/off indication information is per resource (Per resource) or resource set (resource set) of each transmit terminal; and
the on/off indication information is per sidelink positioning reference signal of each transmit terminal.

3) Start time information for the sidelink positioning reference signal.
Optionally, the method further includes:

determining the start time information for the sidelink positioning reference signal according to target characteristic information; where
the target characteristic information includes at least one of the following:

period information;
terminal quantity information;
zone identification (Zone ID) information;
location information of a target terminal;
serving cell information for a target terminal;
zone identification information for a target terminal;
group information of a target terminal;
identification information of the first terminal;
identification information of a second terminal;
quantity information of the first terminal;
quantity information of the second terminal;

on/off indication information for the first terminal;
on/off indication information for the second terminal;
start time information for the first terminal;
end time information for the first terminal;
duration information for the first terminal;
start time information for the second terminal;
end time information for the second terminal;
duration information for the second terminal; and
frequency information, for example, frequency range (Frequency range, FR) information, PointA information, SL-BWP, sidelink resource pool information, and common carrier (Common Carrier, CC)/band (band) information.

In this embodiment, the start time information is related to measurement of the positioning reference signal, and the start time information may include at least one of the following:

starting slot information;
serving cell ID information or cell information, which is used to indicate which cell the start time information is relative to;
synchronization mode information, such as global positioning system (Global Positioning System, GPS) and clock type information;
system frame number (System frame number, SFN) information or DFN indication information;
SFN offset information;
absolute time information; and
starting symbol (symbol) information.

4) End time information for the sidelink positioning reference signal.
5) Duration information for the sidelink positioning reference signal.
In this embodiment, the first terminal may request the parameter information for the sidelink positioning reference signal from the network-side device.
In this embodiment, the first terminal may request the parameter information for the sidelink positioning reference signal from the second terminal or the third terminal. The second terminal is a peer terminal and the third terminal is a head terminal or a scheduling terminal.
The request information includes one of the following:

request information associated with identification information of a terminal;
request information associated with identification information of a panel or antenna of a terminal;
request information associated with identification information of a transmit terminal;
request information associated with a carrier of a transmit terminal;
request information associated with a frequency domain range of a transmit terminal;
request information associated with a resource or resource set of a transmit terminal; and
request information associated with a sidelink positioning reference signal of a transmit terminal.

Optionally, the sending second sidelink positioning reference signal configuration information to the second terminal includes: sending first SL positioning assistance information to the second terminal, where the first SL positioning assistance information includes the second sidelink positioning reference signal configuration information.
In this embodiment, in a case that the first terminal is a transmit terminal of the target sidelink positioning reference signal and the second terminal is a receive terminal, when the first terminal sends the second sidelink positioning reference signal configuration information to the second terminal, the second sidelink positioning reference signal configuration information may be included in the first SL positioning assistance information.
Optionally, the first terminal and the second terminal establish a PC5 connection, and the first terminal performs unicast communication with the second terminal, for example, transmitting the second sidelink positioning reference signal configuration information through PC5-RRC, PC5-LPP, or PC5 higher layer protocol. For example, the first SL positioning assistance information is defined and includes the second sidelink positioning reference signal configuration information.
Further, the parameter information for the sidelink positioning reference signal may include at least one of the following:

identification information of the sidelink positioning reference signal;
resource pool information associated with the sidelink positioning reference signal, for example, resource pool indication information, resource pool identification information, or frequency domain starting point information, bandwidth information, and time domain information of a resource pool;

bandwidth part (Bandwidth Part, BWP) information associated with the sidelink positioning reference signal, for example, BWP identification information, such as lowest subchannel start information or bandwidth information;

radio network temporary identifier RNTI of the sidelink positioning reference signal;

period information for the sidelink positioning reference signal;

first time domain offset information for the sidelink positioning reference signal; time offset information relative to a specific time (such as DCI or SCI or a first reference time), where the time offset indicates a transmission time of the sidelink positioning reference signal;

first reference time information for the sidelink positioning reference signal;

start time information for the sidelink positioning reference signal;

end time information for the sidelink positioning reference signal;

frequency domain information for the sidelink positioning reference signal, for example, physical cell identifier (Physical Cell Identifier, PCI), absolute radio frequency channel number (Absolute Radio Frequency Channel Number, ARFCN), NR cell global identifier (NR Cell Global Identifier, NCGI), lowest position of subchannel, carrier ID, frequency layer indication information, or bandwidth;

sequence information for the sidelink positioning reference signal, for example, the number of symbols, the number of repetitions, resource element (Resource Element, RE) offset, comb value, or sequence identification information; and

the number of resource repetitions of the sidelink positioning reference signal, for example, repeatedly sending the sidelink positioning reference signal for N times or providing N resources for sending the sidelink positioning reference signal.

Optionally, the parameter information for the sidelink positioning reference signal further includes:
type information for the sidelink positioning reference signal. The types of the sidelink positioning reference signal may be divided in different manners, for example:

(1) first type: periodic SL-PRS, semi-static SL-PRS, aperiodic SL-PRS, on-demand SL-PRS, or the like; and
(2) second type: Type 1 (such as SL-PRS configured by using RRC), Type 2 (SL-PRS scheduled by using DCI), and Type 3 (SL-PRS scheduled by using MAC CE).

Optionally, in this embodiment of this application, a type of the target sidelink positioning reference signal includes at least one of the following:

periodic sidelink positioning reference signal;
semi-static sidelink positioning reference signal;
aperiodic sidelink positioning reference signal; and
on-demand (on-demand) sidelink positioning reference signal.

For example, the target sidelink positioning reference signal may include one of the following: a periodic sidelink positioning reference signal; a periodic sidelink positioning reference signal and an on-demand sidelink positioning reference signal; a periodic sidelink positioning reference signal and a semi-static sidelink positioning reference signal; a periodic sidelink positioning reference signal and an aperiodic sidelink positioning reference signal; a semi-static sidelink positioning reference signal and an aperiodic sidelink positioning reference signal; and an on-demand sidelink positioning reference signal. The target sidelink positioning reference signal may be one or a combination of the above types, which will not be described in detail herein.

If the target terminal or the network-side device detects that the periodic sidelink positioning reference signal is insufficient to meet the requirements, the target terminal or the network-side device can configure the target sidelink positioning reference signal as an on-demand sidelink positioning reference signal.

It should be noted that in this embodiment of this application, when the target terminal does not need to be located, the transmit terminal may not send the target sidelink positioning reference signal, that is, the target sidelink positioning reference signal does not need to be sent all the time.

In an optional embodiment, the first sidelink positioning reference signal configuration information is carried by one of the following information:

downlink control information DCI;
a media access control control element MAC CE;
radio resource control RRC; and

LTE positioning protocol LPP.

In an optional embodiment, the second sidelink positioning reference signal configuration information is carried by one of the following information:

sidelink control information SCI;
PC5-MAC CE;
PC5-RRC; and
PC5-LPP.

It should be noted that the first sidelink positioning reference signal configuration information may be transmitted through a higher layer protocol, such as media access control control element MAC CE, radio resource control RRC, or LTE positioning protocol LPP. The information content at least includes the parameter information for the sidelink positioning reference signal, and examples are not provided one by one herein.

In an optional embodiment, in a case that the first sidelink positioning reference signal configuration information is carried by DCI, the DCI may be used to schedule or activate the sidelink positioning reference signal, and the DCI format (format) includes at least one of the following:

DCI 3-0;
DCI 3-1; and
DCI 3-x; where it should be noted that the DCI 3-x is, for example, DCI 3-3 or DCI 3-4, which is not limited herein.

Optionally, in a case that the first sidelink positioning reference signal configuration information is carried by DCI, the DCI is used to indicate at least one of the following information:

resource pool indication information, such as $\lceil \log_2 I \rceil$ bits, where I is the number of resource pools;
BWP indication information;
time interval, which may include 3 bits and is a time interval between DCI transmission and SL-PRS transmission;
lowest position of a subchannel;
frequency domain resource configuration information for a sidelink positioning reference signal;
time domain resource configuration information for a sidelink positioning reference signal;
repetition count indication information for a sidelink positioning reference signal;
duration information for a sidelink positioning reference signal; and
identification information of a sidelink positioning reference signal.

In this embodiment, if the DCI is used to activate an SL-PRS, several DCI parameters may be set to 0 or 1 to indicate activating/deactivating SL-PRS transmission, for example:

setting all HARQ information to 1 or 0, which indicates activating/deactivating SL-PRS transmission;
setting all new data indicator (the new data indicator) information to 1 or 0, which indicates activating/deactivating SL-PRS transmission; and
setting all MCS information to 1 or 0, which indicates activating/deactivating SL-PRS transmission.

Optionally, in a case that the second sidelink positioning reference signal configuration information is carried by SCI, information of the SCI includes at least one of the following:

priority (Priority) information for a sidelink positioning reference signal; which may include 3 bits;
frequency domain resource configuration information for a sidelink positioning reference signal;
time domain resource configuration information for a sidelink positioning reference signal;
a time interval between SCI and sending of a sidelink positioning reference signal;
scheduling indication information for a sidelink positioning reference signal; and
transmission indication information for a sidelink positioning reference signal.

In a case that the first sidelink positioning reference signal configuration information is carried by SCI, a format of the SCI includes at least one of the following information:

(1) Information about first-stage SCI (1st SCI).

Optionally, a target information bit of the first-stage SCI is a first value, and the first value is used to indicate a scheduling or measurement request for the target sidelink positioning reference signal; and target information of the first-stage SCI includes at least one of the following:

reserved information bit (Reserved);
additional MCS table indicator information (Additional MCS table indicator);
time domain resource configuration information;
PSFCH overhead indication information (PSFCH overhead indication);
MCS indication information; and
second-stage SCI format (2nd-stage SCI format).

The second-stage SCI format is shown in Table 1 below:

**Table 1: 2nd-stage SCI format**

| Value of 2nd-stage SCI format field | 2nd-stage SCI format |
| --- | --- |
| 00 | SCI format 2-A is used for SL-PRS scheduling or request. |
| 01 | SCI format 2-B |
| 10 | SCI format 2-C is used for SL-PRS scheduling or request. |
| 11 | Reserved |

Setting "Reserved" to a predetermined value (for example, 1) may indicate a scheduling/measurement request of SL-PRS; and setting a wavelength division bit in the above parameter to a predetermined value (for example, 1) may indicate a scheduling/measurement request of SL-PRS.

(2) information about second-stage SCI.

Optionally, the information about the second-stage SCI can be used for PSSCH decoding and SL-PRS measurement, where:

(A) The information about the second-stage SCI may include at least one of the following:

hybrid automatic repeat request HARQ process number (HARQ process number), which may include 4 bits;
new data indicator (New data indicator), which may include 1 bit;
redundancy version (Redundancy version);
identification information of the first terminal; where when the first terminal is a transmit terminal of the target sidelink positioning reference signal, the identification information of the first terminal is a source ID, which may include 8 bits; and when the first terminal is a receive terminal of the target sidelink positioning reference signal, the identification information of the first terminal is a destination ID, which may include 16 bits;
identification information of the second terminal;
HARQ feedback enabled indicator (HARQ feedback enabled indicator) information, which may include 1 bit;
HARQ feedback disabled indicator (HARQ feedback disabled indicator) information, which may include 1 bit;
cast type indicator (Cast type indicator), which may include 2 bits;
channel state information CSI request (CSI request), which may include 1 bit;
time interval, which may include 3 bits and is a time interval between SCI transmission and SL-PRS transmission;
period of a sidelink positioning reference signal;
repetition count indication information for a sidelink positioning reference signal; and
duration information for a sidelink positioning reference signal.

(B) Optionally, information about the second-stage SCI includes at least one of the following:

zone (Zone) ID;
communication range information;
identification information of the first terminal;

identification information of the second terminal;

location information of the first terminal;

location information of the second terminal;

measurement request information;

measurement feedback information;

time interval;

period of a sidelink positioning reference signal;

repetition count indication information for a sidelink positioning reference signal; and

duration information for a sidelink positioning reference signal.

Optionally, the above (A) and (B) are information divided for different types of second-stage SCI formats, such as SCI format 2-A and SCI format 2-C described in Table 1, which are two different second-stage SCI formats.

Optionally, in this embodiment of this application, the first sidelink positioning reference signal configuration information and the second sidelink positioning reference signal configuration information indicate same transmission information for a sidelink positioning reference signal; and

the transmission information may include at least one of the following: a transmission time, a transmission frequency domain position, a transmission period, and identification information of the sidelink positioning reference signal.

The transmission time is time domain information, such as absolute time and relative time (such as slot, symbol, or SFN), for transmitting the sidelink positioning reference signal.

The transmission frequency domain position is frequency domain information for transmitting the sidelink positioning reference signal, for example, physical cell identifier (Physical Cell Identifier, PCI), absolute radio frequency channel number (Absolute Radio Frequency Channel Number, ARFCN), NR cell global identifier (NR Cell Global Identifier, NCGI), lowest position of subchannel, carrier ID, frequency layer indication information, or bandwidth.

In a case that the first sidelink positioning reference signal configuration information is carried by DCI and the second sidelink positioning reference signal configuration information is carried by SCI, the first sidelink positioning reference signal configuration information carried by DCI and the second sidelink positioning reference signal configuration information carried by SCI indicate same transmission information for the sidelink positioning reference signal.

Optionally, SL-PRS transmission time/transmission frequency domain/transmission period/identification information carried in SCI is consistent with SL-PRS transmission time/transmission frequency domain/transmission period/identification information carried in DCI/RRC/MAC CE.

In this embodiment, when the second sidelink positioning reference signal configuration information and the first sidelink positioning reference signal configuration information indicate the same content, the second sidelink positioning reference signal configuration information and the first sidelink positioning reference signal configuration information include the same information. For example, when the first sidelink positioning reference signal configuration information carried by DCI includes at least one of a time domain position or a frequency domain position for transmitting the sidelink positioning reference signal, the second sidelink positioning reference signal configuration information also includes the above information, and the indication information of the second sidelink positioning reference signal is the same as the time domain position or frequency domain position indicated by the first sidelink positioning reference signal configuration information. In other words, the first terminal determines the time-frequency position for sending the sidelink positioning reference signal according to DCI. The first terminal further needs to indicate the second terminal by using SCI to perform measurement at the time-frequency position for sending the positioning reference signal. The time-frequency positions for transmission and measurement are the same, and therefore those transmitted by the first terminal and measured by the second terminal are a same signal. A same time-frequency position is indicated finally by the DCI and SCI, although indication manners may be different.

In an optional embodiment, the method further includes:

receiving scheduling information for the target sidelink positioning reference signal; and performing a scheduling operation on the target sidelink positioning reference signal according to the scheduling information for the target sidelink positioning reference signal.

The scheduling information for the target sidelink positioning reference signal may be information for activating or deactivating transmission of the target sidelink positioning reference signal, that is, indicating activation or deactivation of the target sidelink positioning reference signal.

The scheduling information for the target sidelink positioning reference signal may alternatively be for activating or deactivating transmission of the target sidelink positioning reference signal. The scheduling information for the target sidelink positioning reference signal may alternatively be for activating or deactivating measurement of the target sidelink positioning reference signal.

Optionally, the receiving scheduling information for the target sidelink positioning reference signal includes at least one of the following:

receiving scheduling information for the target sidelink positioning reference signal from a second terminal; and receiving scheduling information for the target sidelink positioning reference signal from the network-side device.

In this embodiment, the scheduling information for the target sidelink positioning reference signal may be sent by the network-side device or the second terminal. The scheduling information for the target sidelink positioning reference signal is used for scheduling the first terminal to perform a scheduling operation on the target sidelink positioning reference signal. When the first terminal is a transmit terminal or a receive terminal of the target sidelink positioning reference signal, the scheduling operation performed by the first terminal may be different, which will be described by using specific embodiments below.

Optionally, the scheduling operation performed on the target sidelink positioning reference signal according to the scheduling information for the target sidelink positioning reference signal includes at least one of the following operations:

(1) Sending the target sidelink positioning reference signal according to the scheduling information for the target sidelink positioning reference signal; that is, the scheduling information for the target sidelink positioning reference signal is used to schedule the first terminal to send the target sidelink positioning reference signal.

(2) Scheduling the second terminal to perform measurement on the target sidelink positioning reference signal according to the scheduling information for the target sidelink positioning reference signal. That is, after receiving the scheduling information for the target sidelink positioning reference signal, the first terminal may schedule, according to the scheduling information and/or the first sidelink positioning reference signal configuration information, the second terminal to perform measurement on the target sidelink positioning reference signal sent by the first terminal.

(3) Sending the scheduling information for the target sidelink positioning reference signal to the second terminal according to the scheduling information for the target sidelink positioning reference signal. That is, after receiving the scheduling information for the target sidelink positioning reference signal, the first terminal may send the scheduling information to the second terminal, and the second terminal may perform, according to the scheduling information, measurement on the target sidelink positioning reference signal sent by the first terminal.

In the above operations (1) to (3), the first terminal is a transmit terminal of the target sidelink positioning reference signal, and the second terminal is a receive terminal of the target sidelink positioning reference signal, where FIG. 3 and FIG. 5 are illustrated by using the scheduling information for the target sidelink positioning reference signal sent by the network-side device as an example.

(4) Scheduling, according to the scheduling information for the target sidelink positioning reference signal, the second terminal to send the target sidelink positioning reference signal.

In the operation (4), the second terminal is a transmit terminal of the target sidelink positioning reference signal, and the first terminal is a receive terminal of the target sidelink positioning reference signal, where FIG. 7 and FIG. 9 are illustrated by using the scheduling information for the target sidelink positioning reference signal sent by the second terminal as an example. The first terminal may schedule, according to the scheduling information and/or the first sidelink positioning reference signal configuration information, the second terminal to send the target sidelink positioning reference signal.

Optionally, the scheduling information for the target sidelink positioning reference signal includes at least one of the following:

(1) Identification information of the first terminal.
(2) Identification information of a second terminal.
(3) Location information of the first terminal.
(4) Location information of the second terminal.
(5) Antenna information of the first terminal;
(6) Antenna information of the second terminal.
(7) Identification information of the target sidelink positioning reference signal.
(8) Parameter information for the target sidelink positioning reference signal.

Optionally, the parameter information for the target sidelink positioning reference signal includes at least one of the following:

resource pool information associated with the target sidelink positioning reference signal, for example, resource pool indication information, resource pool identification information, or frequency domain starting point information, bandwidth information, and time domain information of a resource pool.

BWP information associated with the target sidelink positioning reference signal, for example, BWP identification information, such as lowest subchannel start information or bandwidth information;

RNTI of the target sidelink positioning reference signal;
period information for the target sidelink positioning reference signal;
first time domain offset information for the target sidelink positioning reference signal; time offset information relative to a specific time (such as DCI or SCI or a first reference time), where the time offset indicates a transmission time of the sidelink positioning reference signal;
first reference time information for the target sidelink positioning reference signal;
start time information for the target sidelink positioning reference signal;
end time information for the target sidelink positioning reference signal;
frequency domain information for the target sidelink positioning reference signal; for example, PCI, ARFCN, NCGI, lowest position of subchannel, carrier ID, frequency layer indication information, or bandwidth;
sequence information for the target sidelink positioning reference signal, for example: the number of symbols, the number of repetitions, RE offset, comb value, or sequence identification information; and
the number of resource repetitions of the target sidelink positioning reference signal, for example, repeatedly sending the sidelink positioning reference signal for N times or providing N resources for sending the sidelink positioning reference signal.

(9) Identification information of a target sidelink positioning reference signal set.

It should be noted that in an embodiment, the scheduling information for the target sidelink positioning reference signal can be combined with the configuration information for the sidelink positioning reference signal. For example, receiving only the configuration information for the sidelink positioning reference signal does not mean that the terminal needs to send or perform measurement on the sidelink positioning reference signal, and only when the scheduling information for the target sidelink positioning reference signal is received, the transmission or measurement of the target sidelink positioning reference signal is activated. Further, the configuration information for the sidelink positioning reference signal includes a plurality of sidelink positioning reference signals or a plurality of groups of sidelink positioning reference signals, and only when the scheduling information for the target sidelink positioning reference signal is received, the target sidelink positioning reference signal to be finally transmitted or measured can be then determined.

Optionally, in this embodiment of this application, the scheduling information for the target sidelink positioning reference signal may be carried by one of the following information:

DCI;
MAC CE;
RRC;
LPP;
PC5;
PC5-RRC;
PC5-MAC CE;
SCI; and
physical sidelink shared channel PSSCH.

The following provides description by using the scheduling information for the target sidelink positioning reference signal being carried by DCI or SCI as an example.

In an optional embodiment, in a case that the scheduling information for the target sidelink positioning reference signal is carried by DCI, that is, the network-side device sends the scheduling information for the target sidelink positioning reference signal, the DCI can be used to schedule or activate the sidelink positioning reference signal, and the DCI format may include at least one of the following:

DCI 3-0;
DCI 3-1; and
DCI 3-x.

Optionally, the DCI is used to indicate at least one of the following information:

resource pool indication information, such as $\lceil \log_2 I \rceil$ bits, where I is the number of resource pools;
BWP indication information;
transmission indication information for the target sidelink positioning reference signal;
time interval between the target sidelink positioning reference signal and DCI;

lowest position of a transmission subchannel for the target sidelink positioning reference signal;
frequency domain resource configuration information for the target sidelink positioning reference signal;
time domain resource configuration information for the target sidelink positioning reference signal;
repetition count indication information for the target sidelink positioning reference signal;
duration information for the target sidelink positioning reference signal; and
identification information of the target sidelink positioning reference signal.

In this embodiment, if the DCI is used to activate SL-PRS, several DCI parameters may be set to 0 or 1 to indicate activating/deactivating SL-PRS transmission, for example:

setting all HARQ information to 1 or 0, which indicates activating/deactivating SL-PRS transmission;
setting all new data indicator information to 1 or 0, which indicates activating/deactivating SL-PRS transmission; and
setting all MCS information to 1 or 0, which indicates activating/deactivating SL-PRS transmission.

In an optional embodiment, in a case that the scheduling information for the target sidelink positioning reference signal is carried by SCI, information of the SCI may include at least one of the following:

priority information for the target sidelink positioning reference signal;
frequency domain resource configuration information for the target sidelink positioning reference signal;
time domain resource configuration information for the target sidelink positioning reference signal;
a time interval between SCI and sending of the target sidelink positioning reference signal;
scheduling indication information for the target sidelink positioning reference signal; and
transmission indication information for the target sidelink positioning reference signal.

Optionally, in a case that the scheduling information for the target sidelink positioning reference signal is carried by SCI, that is, the second terminal sends the scheduling information for the target sidelink positioning reference signal, the format of SCI includes at least one of the following information:

(1) Information about first-stage SCI.

Optionally, a target information bit of the first-stage SCI is a first value, and the first value is used to indicate a scheduling or measurement request for the target sidelink positioning reference signal; and
target information of the first-stage SCI includes at least one of the following:

reserved information bit;
additional MCS table indicator information;
time domain resource configuration information;
PSFCH overhead indication information;
MCS indication information; and
second-stage SCI format, where the second-stage SCI format is shown in Table 1, which is not described herein again.

(2) information about second-stage SCI.

Optionally, information about the second-stage SCI includes at least one of the following:

HARQ process number;
new data indicator;
redundancy version;
identification information of the first terminal;
identification information of the second terminal;
HARQ feedback enabled indicator information;
HARQ feedback disabled indicator information;
cast type indicator;
channel state information CSI request;
time interval, being a time interval between SCI transmission and SL-PRS transmission;
period of the target sidelink positioning reference signal;
repetition count indication information for the target sidelink positioning reference signal; and
duration information for the target sidelink positioning reference signal.

Optionally, information about the second-stage SCI includes at least one of the following:

zone ID;
communication range information;
identification information of the first terminal;
identification information of the second terminal;
location information of the first terminal;
location information of the second terminal;
measurement request information;
measurement feedback information;
time interval;
period of the target sidelink positioning reference signal;
repetition count indication information for the target sidelink positioning reference signal; and
duration information for the target sidelink positioning reference signal.

It should be noted that in one case, the configuration information for the sidelink positioning reference signal is transmitted through a higher layer, such as RRC, LPP, or MAC CE. The scheduling information for the target sidelink positioning reference signal is transmitted by DCI. For another example, the positioning reference signal configuration information is transmitted through a higher layer, such as PUSCH, PC5-RRC, or PC5-LPP. However, the scheduling information for the target sidelink positioning reference signal is transmitted by SCI.

In this embodiment of this application, the first terminal performs the scheduling operation on the target sidelink positioning reference signal according to the first sidelink positioning reference signal configuration information sent by the network-side device, and provides a scheme related to signal scheduling during the sidelink positioning, so as to implement sidelink positioning.

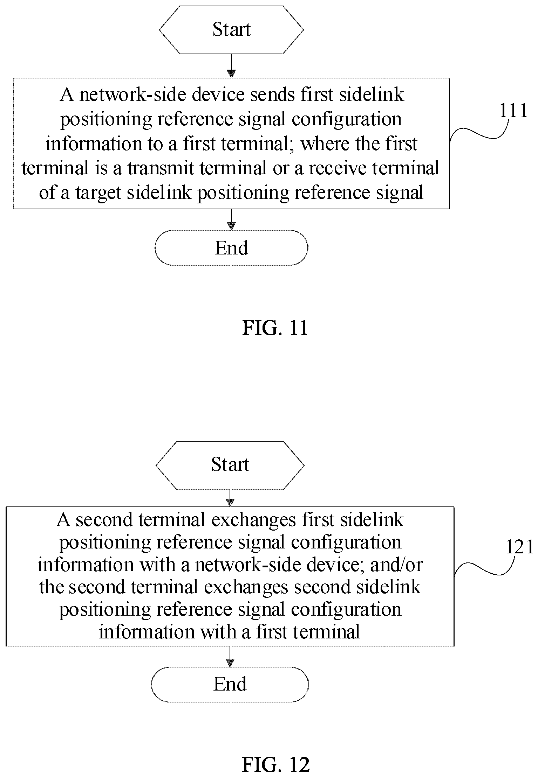

As shown in FIG. 11, an embodiment of this application further provides a sidelink positioning signal scheduling method, which is applied to a network-side device and includes:

Step 111: The network-side device sends first sidelink positioning reference signal configuration information to a first terminal; where the first terminal is a transmit terminal or a receive terminal of a target sidelink positioning reference signal.

In this embodiment, the network-side device is, for example, a location server, an LMF, a base station, and an E-SMLC. The sidelink positioning reference signal may be used for determining location information of a target terminal. The sidelink positioning reference signal is, for example, an S-SSB, a CSI-RS, a DMRS, or a signal extended to SL based on NR PRS or SRS, such as SL-PRS or SL-SRS.

In this embodiment of this application, the first terminal performs data transmission with the second terminal, and when the first terminal is a transmit terminal of the target sidelink positioning reference signal, the second terminal is a receive terminal of the target sidelink positioning reference signal; and when the first terminal is a receive terminal of the target sidelink positioning reference signal, the second terminal is a transmit terminal of the target sidelink positioning reference signal. It should be noted that in this embodiment of this application, the second terminal may be one or more.

The transmit terminal is, for example, a roadside unit, and the roadside unit can periodically send a sidelink positioning reference signal for determining a location of the target terminal.

In this embodiment of this application, the network-side device sends the first sidelink positioning reference signal configuration information to the first terminal, and the first terminal can perform the scheduling operation on the target sidelink positioning reference signal according to the first sidelink positioning reference signal configuration information, so as to implement sidelink positioning.

Optionally, the first terminal is a target terminal for which location information is to be determined, and the location information includes at least one of the following:

relative location information; for example, a relative location of the target terminal relative to one known location or device (such as a second terminal, a reference terminal, or a base station);
absolute location information, such as latitude and longitude information of the target terminal;
relative distance information, such as a relative distance of the target terminal relative to one known location or device (such as a second terminal, a reference terminal, or a base station) and/or a relative angle of the target terminal relative to one known location or device (such as a second terminal, a reference terminal, or a base station); and
SL measurement result; where
the SL measurement result includes information obtained through measurement on the target sidelink positioning reference signal.

Specifically, the SL measurement result may include one or more of the following information:

1) Angle information, which may include an angle of arrival measurement result and/or an angle of departure measurement result. Optionally, the angle information may be angle information of the target terminal relative to one known location or device (such as a second terminal, a reference terminal, or a base station) or may be angle information relative to a reference direction.

2) Time information, where the time information includes at least one of a reference signal time difference measurement result, a round-trip delay measurement result, and a reference signal arrival time.

3) Energy information, where the energy information may be energy information of signals transmitted or received by the target terminal, the energy information may include reference signal received power RSRP and/or received signal strength indication RSSI, or the energy information may be relative energy information.

The following describes the configuration and scheduling method for sidelink positioning reference signal for a case that the first terminal is a transmit terminal or a receive terminal of the target sidelink positioning reference signal.

In an optional embodiment, the method further includes at least one of the following operations:

(1) Sending SL measurement request information to the second terminal. In this case, the second terminal is a receive terminal of the target sidelink positioning reference signal, and the second terminal can perform, according to the SL measurement request information, measurement on the target sidelink positioning reference signal sent by the first terminal.

(2) Receiving an SL measurement result sent by the second terminal. In this case, the first terminal may be a transmit terminal of the target sidelink positioning reference signal, the second terminal is a receive terminal, the second terminal performs measurement on the target sidelink positioning reference signal to obtain an SL measurement result, and the second terminal may send the SL measurement result to the network-side device. Optionally, in this case, the first terminal may be a receive terminal of the target sidelink positioning reference signal, the second terminal is a transmit terminal, the first terminal obtains an SL measurement result after performing measurement on the target sidelink positioning reference signal, the first terminal may send the SL measurement result to the second terminal, and the second terminal may send the SL measurement result to the network-side device.

(3) Receiving an SL measurement result sent by the first terminal. In this case, the first terminal may be a receive terminal of the target sidelink positioning reference signal, the first terminal obtains an SL measurement result after performing measurement on the target sidelink positioning reference signal and sends the SL measurement result to the network-side device; or, the second terminal is a receive terminal of the target sidelink positioning reference signal, the second terminal obtains an SL measurement result after performing measurement on the target sidelink positioning reference signal, the second terminal may send the SL measurement result to the first terminal, and the first terminal may send the SL measurement result to the network-side device.

(4) Receiving location information of the first terminal sent by the first terminal. The location information of the first terminal may be obtained through measurement by the first terminal or obtained by the first terminal based on its own parameters; or the second terminal obtains location information of the first terminal through measurement and sends the location information to the network-side device.

(5) Sending SL measurement request information to the first terminal. The network-side device may send the SL measurement request information to the first terminal, and the first terminal performs, according to the SL measurement request information, measurement on the target sidelink positioning reference signal sent by the second terminal.

In an optional embodiment, the method further includes:

(A) obtaining the first sidelink positioning reference signal configuration information; and/or
(B) sending the first sidelink positioning reference signal configuration information to the second terminal.

In this embodiment, the network-side device may exchange the first sidelink positioning reference signal configuration information with the second terminal. The following describes the method for exchanging the first sidelink positioning reference signal configuration information by the network-side device.

Optionally, the obtaining the first sidelink positioning reference signal configuration information includes one of the following:

1) Receiving the first sidelink positioning reference signal configuration information sent by the second terminal. That is, the second terminal reports the first sidelink positioning reference signal configuration information to the network-side device.

2) Sending configuration request information for a sidelink positioning reference signal to the second terminal, and receiving response information sent by the second terminal according to the configuration request information, where the response information includes the first sidelink positioning reference signal configuration information. Optionally, the second terminal may report error information, such as no sidelink positioning reference signal, or unable to enable. In this case, the second terminal may be a transmit terminal of the target sidelink positioning reference signal, and the second terminal is a transmit terminal of the target sidelink positioning reference signal. The second terminal provides the first sidelink positioning reference signal configuration information to the network-side device.

Optionally, the sending the first sidelink positioning reference signal configuration information to the second terminal includes receiving configuration request information for a sidelink positioning reference signal from the second terminal; and sending, according to the configuration request information, the first sidelink positioning reference signal configuration information to the second terminal.

In this embodiment, the first terminal may be a receive terminal of the target sidelink positioning reference signal, the second terminal is a transmit terminal of the target sidelink positioning reference signal, and the network-side device provides the first sidelink positioning reference signal configuration information to the second terminal.

In an optional embodiment, the first sidelink positioning reference signal configuration information includes at least one of the following:

(1) Identification information of the first terminal. Optionally, the identification information of the first terminal is unique identification information in a group, and the identification information includes a group ID, such as at least one of a zone ID, a group ID, and a member ID. Optionally, the identification information of the first terminal is N-bit identification information, such as 24-bit identification information. Optionally, the identification information of the first terminal is a scrambling ID.

(2) Identification information of the second terminal. Optionally, the identification information of the second terminal is unique identification information in a group, and the identification information includes a group ID, such as at least one of a zone ID, a group ID, and a member ID. Optionally, the identification information of the second terminal is N-bit identification information, such as 24-bit identification information. Optionally, the identification information of the second terminal is a scrambling ID.

(3) Parameter information for a sidelink positioning reference signal. The first sidelink positioning reference signal configuration information may include parameter information for one or more sidelink positioning reference signals, including but not limited to one or more of signal sequence information, signal transmission period, signal time domain position, and signal frequency domain position. It should be noted that the parameter information for the sidelink positioning reference signal is the parameter information for one or more sidelink positioning reference signals, where the target sidelink positioning reference signal may be one or more thereof.

(4) Configuration information for a pre-configured sidelink positioning reference signal set. The first sidelink positioning reference signal configuration information may include configuration information for one or more pre-configured sidelink positioning reference signal sets, each sidelink positioning reference signal set may include one or more sidelink positioning reference signals, and the target sidelink positioning reference signal may be selected from one or more sidelink positioning reference signal sets.

Optionally, the configuration information for the pre-configured sidelink positioning reference signal set includes at least one of the following:

identification information of the sidelink positioning reference signal set; where further, when the sidelink positioning reference signal set includes a plurality of sidelink positioning reference signals, identification information of the sidelink positioning reference signals is optionally included;
state information of the sidelink positioning reference signal set;
parameter information for sidelink positioning reference signals in the sidelink positioning reference signal set; where optionally, the configuration information for the pre-configured sidelink positioning reference signal set includes quantity information of the sidelink positioning reference signal set; and
quantity information of sidelink positioning reference signals in the sidelink positioning reference signal set.

In this embodiment, the transmit terminal determines the to-be-sent target sidelink positioning reference signal according to the first sidelink positioning reference signal configuration information and/or based on parameters selected by itself, and optionally, the target sidelink positioning reference signal is at least one of the following signals:

a sidelink positioning reference signal; that is, the target sidelink positioning reference signal is a sidelink positioning reference signal configured by the network-side device;
a sidelink positioning reference signal selected from a plurality of sidelink positioning reference signals; where when a plurality of sidelink positioning reference signals are configured, the target sidelink positioning reference signal is selected from the plurality of sidelink positioning reference signals;

a first sidelink positioning reference signal set selected from a plurality of sidelink positioning reference signal sets; where when a plurality of sidelink positioning reference signal sets are configured, the target sidelink positioning reference signal is selected from the plurality of sidelink positioning reference signal sets; and

a sidelink positioning reference signal selected from a selected first sidelink positioning reference signal set; where when a plurality of sidelink positioning reference signal sets are configured and each set contains one or more sidelink positioning reference signals, the target sidelink positioning reference signal is selected from the selected sidelink positioning reference signal set.

Optionally, in an embodiment, the transmit terminal determines the to-be-sent target sidelink positioning reference signal according to the first sidelink positioning reference signal configuration information and/or based on parameters selected by itself. For example, an occasion for sending the positioning reference signal is determined according to the first sidelink positioning reference signal configuration information, and the transmit terminal determines information of the positioning reference signal other than the first sidelink positioning reference signal configuration information.

In an optional embodiment, the second sidelink positioning reference signal configuration information includes at least one of the following:

(1) Identification information of a terminal, which may include the ID of the first terminal and/or the second terminal.

(2) Location information of a terminal, which may include location information of the first terminal and/or the second terminal.

(3) Antenna information of a terminal, such as ARP location information, antenna quantity information, antenna location information, antenna configuration information, or the like.

(4) Parameter information for a sidelink positioning reference signal, that is, parameter information for a sidelink positioning reference signal configured for the first terminal by the second terminal or the third terminal and/or parameter information for a pre-configured sidelink positioning reference signal.

Optionally, the method further includes: receiving request information for the parameter information for the sidelink positioning reference signal, where the request information includes at least one of the following:

identification information of a pre-configured sidelink positioning reference signal;
on/off indication information;
start time information for the sidelink positioning reference signal;
end time information for the sidelink positioning reference signal; and
duration information for the sidelink positioning reference signal.

Optionally, the request information includes one of the following:

request information associated with identification information of a terminal;
request information associated with identification information of a panel or antenna of a terminal;
request information associated with identification information of a transmit terminal;
request information associated with a carrier of a transmit terminal;
request information associated with a frequency domain range of a transmit terminal;
request information associated with a resource or resource set of a transmit terminal; and
request information associated with a sidelink positioning reference signal of a transmit terminal.

Optionally, the parameter information for the sidelink positioning reference signal includes at least one of the following:

identification information of the sidelink positioning reference signal;
resource pool information associated with the sidelink positioning reference signal;
bandwidth part BWP information associated with the sidelink positioning reference signal;
radio network temporary identifier RNTI of the sidelink positioning reference signal;
period information for the sidelink positioning reference signal;
first time domain offset information for the sidelink positioning reference signal;
first reference time information for the sidelink positioning reference signal;

start time information for the sidelink positioning reference signal;
end time information for the sidelink positioning reference signal;
frequency domain information for the sidelink positioning reference signal;
sequence information for the sidelink positioning reference signal; and
the number of resource repetitions of the sidelink positioning reference signal.

Optionally, the parameter information for the sidelink positioning reference signal further includes: type information for the sidelink positioning reference signal. The types of the sidelink positioning reference signal may be divided in different manners, for example:

(1) first type: periodic SL-PRS, semi-static SL-PRS, aperiodic SL-PRS, on-demand SL-PRS, or the like; and
(2) second type: Type 1 (such as SL-PRS configured by using RRC), Type 2 (SL-PRS scheduled by using DCI), and Type 3 (SL-PRS scheduled by using MAC CE).

Optionally, in this embodiment of this application, a type of the target sidelink positioning reference signal includes at least one of the following:

periodic sidelink positioning reference signal;
semi-static sidelink positioning reference signal;
aperiodic sidelink positioning reference signal; and
on-demand sidelink positioning reference signal;

Optionally, the first sidelink positioning reference signal configuration information is carried by one of the following information:

downlink control information DCI;
a media access control control element MAC CE;
radio resource control RRC; and
LTE positioning protocol LPP.

It should be noted that the first sidelink positioning reference signal configuration information may be transmitted through a higher layer protocol, such as media access control control element MAC CE, radio resource control RRC, or LTE positioning protocol LPP. The information content at least includes the parameter information for the sidelink positioning reference signal. Examples are not provided one by one herein.

The following provides description by using the first sidelink positioning reference signal configuration information being carried by DCI as an example.

In an optional embodiment, the sending the first sidelink positioning reference signal configuration information to the first terminal includes sending the first sidelink positioning reference signal configuration information to the first terminal by using DCI, that is, the first sidelink positioning reference signal configuration information is carried by DCI, and the DCI format includes at least one of the following:

DCI 3-0;
DCI 3-1; and
DCI 3-x.

Optionally, the sending the first sidelink positioning reference signal configuration information to the first terminal includes sending the first sidelink positioning reference signal configuration information to the first terminal by using DCI, that is, the first sidelink positioning reference signal configuration information is carried by DCI, and the DCI is used to indicate at least one of the following information:

resource pool indication information, such as $\lceil \log_2 I \rceil$ bits, where I is the number of resource pools;
BWP indication information;
time interval, being a time interval between DCI transmission and SL-PRS transmission;
lowest position of a subchannel;
frequency domain resource configuration information for a sidelink positioning reference signal;
time domain resource configuration information for a sidelink positioning reference signal;
repetition count indication information for a sidelink positioning reference signal; and
duration indication information for a sidelink positioning reference signal; and

identification information of a sidelink positioning reference signal.

In this embodiment, if the DCI is used to activate SL-PRS, several DCI parameters may be set to 0 or 1 to indicate activating/deactivating SL-PRS transmission, for example:

setting all HARQ information to 1 or 0, which indicates activating/deactivating SL-PRS transmission;
setting all new data indicator (the new data indicator) information to 1 or 0, which indicates activating/deactivating SL-PRS transmission; and
setting all MCS information to 1 or 0, which indicates activating/deactivating SL-PRS transmission.

Optionally, in the embodiment of this application, the first sidelink positioning reference signal configuration information and the second sidelink positioning reference signal configuration information indicate same transmission information for a sidelink positioning reference signal; and the transmission information includes at least one of the following: a transmission time, a transmission frequency domain position, a transmission period, and identification information of the sidelink positioning reference signal.

The transmission time is time domain information, such as absolute time and relative time (such as slot, symbol, or SFN), for transmitting the sidelink positioning reference signal.

The transmission frequency domain position is frequency domain information for the sidelink positioning reference signal; for example, PCI, ARFCN, NCGI, lowest position of subchannel, carrier ID, frequency layer indication information, or bandwidth.

In a case that the first sidelink positioning reference signal configuration information is carried by DCI and the second sidelink positioning reference signal configuration information is carried by SCI, the first sidelink positioning reference signal configuration information carried by DCI and the second sidelink positioning reference signal configuration information carried by SCI indicate same transmission information for the sidelink positioning reference signal.

In this embodiment, when the second sidelink positioning reference signal configuration information and the first sidelink positioning reference signal configuration information indicate the same content, the second sidelink positioning reference signal configuration information and the first sidelink positioning reference signal configuration information include the same information. For example, when the first sidelink positioning reference signal configuration information carried by DCI includes at least one of a time domain position or a frequency domain position for transmitting the sidelink positioning reference signal, the second sidelink positioning reference signal configuration information also includes the above information, and the indication information of the second sidelink positioning reference signal is the same as the time domain position or frequency domain position indicated by the first sidelink positioning reference signal configuration information. In other words, the first terminal determines the time-frequency position for transmitting the sidelink positioning reference signal according to DCI. The first terminal further needs to indicate the second terminal by using SCI to perform measurement at the time-frequency position for sending the positioning reference signal. The time-frequency positions for transmission and measurement are the same, and therefore those transmitted by the first terminal and measured by the second terminal are a same signal. A same time-frequency position is indicated finally by the DCI and SCI, although indication manners may be different.

In an optional embodiment, the method further includes: sending scheduling information for the target sidelink positioning reference signal to the first terminal and/or the second terminal. The scheduling information for the target sidelink positioning reference signal may be information for activating or deactivating transmission of the target sidelink positioning reference signal, that is, indicating activating or deactivating of the target sidelink positioning reference signal. The scheduling information for the target sidelink positioning reference signal may alternatively be for activating or deactivating transmission of the target sidelink positioning reference signal. The scheduling information for the target sidelink positioning reference signal may alternatively be for activating or deactivating measurement of the target sidelink positioning reference signal.

The first terminal performs the scheduling operation on the target sidelink positioning reference signal according to the scheduling information for the target sidelink positioning reference signal and/or the first sidelink positioning reference signal configuration information, and the specific process of the scheduling operation by the first terminal is not repeated herein. The second terminal performs a scheduling operation on the target sidelink positioning reference signal according to the scheduling information for the target sidelink positioning reference signal and/or the scheduling information for the target sidelink positioning reference signal.

Optionally, the scheduling information for the target sidelink positioning reference signal includes at least one of the following:

(1) Identification information of the first terminal.
(2) Identification information of a second terminal.
(3) Location information of the first terminal.

(4) Location information of the second terminal.
(5) Antenna information of the first terminal.
(6) Antenna information of the second terminal.
(7) Identification information of the target sidelink positioning reference signal.
(8) Parameter information for the target sidelink positioning reference signal.

Optionally, the parameter information for the target sidelink positioning reference signal includes at least one of the following:
resource pool information associated with the target sidelink positioning reference signal, for example, resource pool indication information, resource pool identification information, or frequency domain starting point information, bandwidth information, and time domain information of a resource pool.

BWP information associated with the target sidelink positioning reference signal, for example, BWP identification information, such as lowest subchannel start information or bandwidth information;

RNTI of the target sidelink positioning reference signal;
period information for the target sidelink positioning reference signal;
first time domain offset information for the target sidelink positioning reference signal; time offset information relative to a specific time (such as DCI or SCI or a first reference time), where the time offset indicates a transmission time of the sidelink positioning reference signal;
first reference time information for the target sidelink positioning reference signal;
start time information for the target sidelink positioning reference signal;
end time information for the target sidelink positioning reference signal;
frequency domain information for the target sidelink positioning reference signal; for example, PCI, ARFCN, NCGI, lowest position of subchannel, carrier ID, frequency layer indication information, or bandwidth;
sequence information for the target sidelink positioning reference signal, for example: the number of symbols, the number of repetitions, RE offset, comb value, or sequence identification information; and
the number of resource repetitions of the target sidelink positioning reference signal, for example, repeatedly sending the sidelink positioning reference signal for N times or providing N resources for sending the sidelink positioning reference signal.

(9) Identification information of a target sidelink positioning reference signal set.
It should be noted that in an embodiment, the scheduling information for the target sidelink positioning reference signal can be combined with the configuration information for the sidelink positioning reference signal. For example, receiving only the configuration information for the sidelink positioning reference signal does not mean that the terminal needs to send or perform measurement on the sidelink positioning reference signal, and only when the scheduling information for the target sidelink positioning reference signal is received, the transmission or measurement of the target sidelink positioning reference signal is activated. Further, the configuration information for the sidelink positioning reference signal includes a plurality of sidelink positioning reference signals or a plurality of groups of sidelink positioning reference signals, and only when the scheduling information for the target sidelink positioning reference signal is received, the target sidelink positioning reference signal to be finally transmitted or measured can be then determined.
Optionally, the scheduling information for the target sidelink positioning reference signal is carried by one of the following information:

DCI;
MAC CE;
RRC;
LPP;
PC5;
PC5-RRC;
PC5-MAC CE; and
SCI;
PSSCH.

In an optional embodiment, in a case that the scheduling information for the target sidelink positioning reference signal is carried by DCI, that is, the network-side device sends the scheduling information for the target sidelink positioning reference signal to the first terminal and/or the second terminal by using DCI, the DCI can be used to schedule or activate the sidelink positioning reference signal, and the DCI format may include at least one of the following:

DCI 3-0;
DCI 3-1; and
DCI 3-x.

Optionally, the scheduling information for the target sidelink positioning reference signal includes at least one of the following information:

resource pool indication information;
BWP indication information;
transmission indication information for the target sidelink positioning reference signal;
time interval between the target sidelink positioning reference signal and DCI;
lowest position of a transmission subchannel for the target sidelink positioning reference signal;
frequency domain resource configuration information for the target sidelink positioning reference signal;
time domain resource configuration information for the target sidelink positioning reference signal;
repetition count indication information for the target sidelink positioning reference signal;
duration information for the target sidelink positioning reference signal; and
identification information of the target sidelink positioning reference signal.

In this embodiment, in a case that the scheduling information for the target sidelink positioning reference signal is carried by DCI, the DCI may be used to indicate one or more of the foregoing information.
If the DCI is used to activate SL-PRS, several DCI parameters may be set to 0 or 1 to indicate activating/deactivating SL-PRS transmission, for example:

setting all HARQ information to 1 or 0, which indicates activating/deactivating SL-PRS transmission;
setting all new data indicator information to 1 or 0, which indicates activating/deactivating SL-PRS transmission; and
setting all MCS information to 1 or 0, which indicates activating/deactivating SL-PRS transmission.

It should be noted that in one case, the configuration information for the sidelink positioning reference signal is transmitted through a higher layer, such as RRC, LPP, or MAC CE. The scheduling information for the target sidelink positioning reference signal is transmitted by DCI. For another example, the positioning reference signal configuration information is transmitted through a higher layer, such as PUSCH, PC5-RRC, or PCS-LPP: However, the scheduling information for the target sidelink positioning reference signal is transmitted by SCI.
In this embodiment of this application, the network-side device sends the first sidelink positioning reference signal configuration information to the first terminal, and the first terminal can perform the scheduling operation on the target sidelink positioning reference signal according to the first sidelink positioning reference signal configuration information, so as to implement sidelink positioning.
It should be noted that, in the foregoing method embodiment applied to the first terminal, all the embodiments related to the network-side device can be applied to the method embodiments applied to the network-side device, with the same technical effects achieved. Details are not repeated herein.
As shown in FIG. 12, an embodiment of this application further provides a sidelink positioning signal scheduling method, which is applied to a second terminal and includes:
Step 121: The second terminal exchanges first sidelink positioning reference signal configuration information with a network-side device; and/or the second terminal exchanges second sidelink positioning reference signal configuration information with a first terminal.
The first terminal is a transmit terminal or a receive terminal of a target sidelink positioning reference signal, and the second terminal is a peer terminal of the first terminal.
In this embodiment, if the first terminal is a transmit terminal of the target sidelink positioning reference signal, the second terminal is a receive terminal of the target sidelink positioning reference signal; or if the first terminal is a receive terminal of the target sidelink positioning reference signal, the second terminal is a transmit terminal of the target sidelink positioning reference signal.
For example, in a case that the first terminal is a transmit terminal of the target sidelink positioning reference signal, the second terminal can receive the first sidelink positioning reference signal configuration information sent by the network-side device, for scheduling the second terminal to perform measurement on the target sidelink positioning reference signal. In a case that the first terminal is a receive terminal, the second terminal (that is, the transmit terminal) exchanges with the network-side device the first sidelink positioning reference signal configuration information used, for scheduling the second terminal to send the target sidelink positioning reference signal.
In a case that the first terminal is a transmit terminal, the second terminal may receive the second sidelink positioning reference signal configuration information sent by the first terminal, for scheduling the second terminal to perform measurement on the target sidelink positioning reference signal; and in a case that the first terminal is a receive terminal, the second terminal (that is, the transmit terminal) may send the second sidelink positioning reference signal configuration information to the first terminal, for scheduling the second terminal to send the target sidelink positioning reference signal.

In this embodiment, the second terminal exchanges the first sidelink positioning reference signal configuration information with the network-side device, and/or the second terminal exchanges the second sidelink positioning reference signal configuration information with the first terminal, so that the first terminal and/or the network-side device can perform the scheduling operation on the target sidelink positioning reference signal according to the configuration information for the sidelink positioning reference signal, so as to implement sidelink positioning.

Optionally, the first terminal is a target terminal for which location information is to be determined, and the location information includes at least one of the following:

relative location information; for example, a relative location of the target terminal relative to one known location or device (such as a second terminal, a reference terminal, or a base station);

absolute location information, such as latitude and longitude information of the target terminal;

relative distance information, such as a relative distance of the target terminal relative to one known location or device (such as a second terminal, a reference terminal, or a base station) and/or a relative angle of the target terminal relative to one known location or device (such as a second terminal, a reference terminal, or a base station); and

SL measurement result; where

the SL measurement result includes information obtained through measurement on the target sidelink positioning reference signal.

Specifically, the SL measurement result may include one or more of the following information:

1) Angle information, which may include an angle of arrival measurement result and/or an angle of departure measurement result. Optionally, the angle information may be angle information of the target terminal relative to one known location or device (such as a second terminal, a reference terminal, or a base station) or may be angle information relative to a reference direction.

2) Time information, where the time information includes at least one of a reference signal time difference measurement result, a round-trip delay measurement result, and a reference signal arrival time.

3) Energy information, where the energy information may be energy information of signals transmitted or received by the target terminal, the energy information may include reference signal received power RSRP and/or received signal strength indication RSSI, or the energy information may be relative energy information.

In an optional embodiment, the exchanging first sidelink positioning reference signal configuration information with the network-side device includes at least one of the following operations:

(1) Receiving the first sidelink positioning reference signal configuration information sent by the network-side device. In this case, the first terminal may be a transmit terminal or a receive terminal of the target sidelink positioning reference signal.

(2) Sending the first sidelink positioning reference signal configuration information to the network-side device. In this case, the first terminal may be a receive terminal of the target sidelink positioning reference signal, and the second terminal is a transmit terminal of the target sidelink positioning reference signal, that is, the transmit terminal exchanges the first sidelink positioning reference signal configuration information with the network-side device.

Optionally, the method further includes receiving SL measurement request information sent by the network-side device; and performing measurement on the target sidelink positioning reference signal according to the second sidelink positioning reference signal configuration information and/or the SL measurement request information to obtain an SL measurement result.

In this embodiment, the first terminal is a transmit terminal of the target sidelink positioning reference signal, and the second terminal is a receive terminal. The SL measurement request information can be used for scheduling the second terminal to receive and perform measurement on the target sidelink positioning reference signal sent by the first terminal and obtain an SL measurement result.

Optionally, the method further includes: sending the SL measurement result to the first terminal and/or the network-side device. In this embodiment, the second terminal performs measurement on the target sidelink positioning reference signal sent by the first terminal, and after obtaining the SL measurement result, may send the SL measurement result to the first terminal and/or the network-side device.

Optionally, the sending the first sidelink positioning reference signal configuration information to the network-side device may include:
receiving configuration request information for a sidelink positioning reference signal from the network-side device; and sending response information to the network-side device according to the configuration request information, where the response information includes the first sidelink positioning reference signal configuration information.

Optionally, the receiving the first sidelink positioning reference signal configuration information sent by the network-side device includes: sending configuration request information for a sidelink positioning reference signal to the network-side device; and receiving the first sidelink positioning reference signal configuration information sent by the network-side device according to the configuration request information.

In an optional embodiment, the exchanging second sidelink positioning reference signal configuration information with the first terminal includes at least one of the following operations:

(1) Receiving second sidelink positioning reference signal configuration information sent by the first terminal. In this case, the first terminal may be a transmit terminal of the target sidelink positioning reference signal, and the second terminal is a receive terminal of the target sidelink positioning reference signal, and the second sidelink positioning reference signal configuration information may be used by the first terminal to schedule the second terminal to receive and perform measurement on the target sidelink positioning reference signal.

(2) Sending the second sidelink positioning reference signal configuration information to the first terminal. In this case, the first terminal may be a receive terminal of the target sidelink positioning reference signal, and the second terminal is a transmit terminal of the target sidelink positioning reference signal, and the second sidelink positioning reference signal configuration information is used by the second terminal to schedule the first terminal to receive and perform measurement on the target sidelink positioning reference signal.

Optionally, when the second sidelink positioning reference signal configuration information and the first sidelink positioning reference signal configuration information indicate the same content, and include the same information, for example, when the first sidelink positioning reference signal configuration information includes at least one of the time domain position or frequency domain position for sending the sidelink positioning reference signal, the second sidelink positioning reference signal configuration information includes the foregoing information, and the information indicated by the second sidelink positioning reference signal configuration information is the same as the time domain position or frequency domain position indicated by the first sidelink positioning reference signal configuration information. In other words, the first terminal determines, according to the first sidelink positioning reference signal configuration information, the time-frequency position for sending the target sidelink positioning reference signal. The first terminal further needs to instruct the second terminal to perform measurement at the time-frequency position for sending the target sidelink positioning reference signal. The time-frequency positions for transmission and measurement are the same, and therefore those transmitted by the first terminal and measured by the second terminal are a same signal. A same time-frequency position is indicated finally, although indication manners may be different.

Optionally, the first sidelink positioning reference signal configuration information may be at least one of SL BWP, SL resource pool information, zone ID, and the like. The second terminal sends the second sidelink positioning reference signal configuration information to the first terminal, and the second sidelink positioning reference signal configuration information includes corresponding sidelink positioning reference signal configuration information, such as at least one of time-frequency resource and sequence information for transmission, and the first terminal receives the target sidelink positioning reference signal according to the second sidelink positioning reference signal configuration information.

Optionally, the method further includes receiving SL measurement request information sent by the first terminal; and performing measurement on the target sidelink positioning reference signal according to the second sidelink positioning reference signal configuration information and/or the SL measurement request information to obtain an SL measurement result.

Optionally, the method further includes: sending the SL measurement result to the first terminal and/or the network-side device.

In this embodiment, the second terminal performs, according to the second sidelink positioning reference signal configuration information and/or the SL measurement request information, measurement on the target sidelink positioning reference signal sent by the first terminal, and after obtaining an SL measurement result, may report the SL measurement result to the first terminal and/or the network-side device.

Optionally, the method further includes receiving an SL measurement result sent by the first terminal.

In this embodiment, in a case that the first terminal is a receive terminal of the target sidelink positioning reference signal and the second terminal is a transmit terminal, the first sidelink positioning reference signal configuration information may be used for scheduling the first terminal to receive and perform measurement on the target sidelink positioning reference signal sent by the second terminal to obtain an SL measurement result. The first terminal may send the SL measurement result to the second terminal and/or the network-side device.

In an optional embodiment, the method further includes at least one of the following operations:

(1) receiving scheduling information for the target sidelink positioning reference signal from the first terminal and/or the network-side device; and

(2) sending the scheduling information for the target sidelink positioning reference signal to the first terminal.

In this embodiment, the second terminal may receive scheduling information for the target sidelink positioning reference signal from the first terminal and/or the network-side device. When the second terminal is a transmit terminal of the target sidelink positioning reference signal, the scheduling information for the target sidelink positioning reference signal may be used to schedule the second terminal to send the target sidelink positioning reference signal. When the second terminal is a receive terminal of the target sidelink positioning reference signal, the scheduling information for the target sidelink positioning reference signal may be used to schedule the second terminal to receive and perform measurement on the target sidelink positioning reference signal sent by the first terminal.

The second terminal may alternatively send the scheduling information for the target sidelink positioning reference signal to the first terminal, for scheduling the first terminal to send the target sidelink positioning reference signal, or scheduling the first terminal to receive and perform measurement on the target sidelink positioning reference signal.

In an optional embodiment, the first sidelink positioning reference signal configuration information includes at least one of the following:

(1) Identification information of the first terminal. Optionally, the identification information of the first terminal is unique identification information in a group, and the identification information includes a group ID, such as at least one of a zone ID, a group ID, and a member ID. Optionally, the identification information of the first terminal is N-bit identification information, such as 24-bit identification information. Optionally, the identification information of the first terminal is a scrambling ID.

(2) Identification information of the second terminal. Optionally, the identification information of the second terminal is unique identification information in a group, and the identification information includes a group ID, such as at least one of a zone ID, a group ID, and a member ID. Optionally, the identification information of the second terminal is N-bit identification information, such as 24-bit identification information. Optionally, the identification information of the second terminal is a scrambling ID.

(3) Parameter information for a sidelink positioning reference signal. The first sidelink positioning reference signal configuration information may include parameter information for one or more sidelink positioning reference signals, including but not limited to one or more of signal sequence information, signal transmission period, signal time domain position, and signal frequency domain position. It should be noted that the parameter information for the sidelink positioning reference signal is the parameter information for one or more sidelink positioning reference signals, where the target sidelink positioning reference signal may be one or more thereof.

(4) Configuration information for a pre-configured sidelink positioning reference signal set. The first sidelink positioning reference signal configuration information may include configuration information for one or more pre-configured sidelink positioning reference signal sets, each sidelink positioning reference signal set may include one or more sidelink positioning reference signals, and the target sidelink positioning reference signal may be selected from one or more sidelink positioning reference signal sets.

Optionally, the configuration information for the pre-configured sidelink positioning reference signal set includes at least one of the following:

1) identification information of the sidelink positioning reference signal set;

2) state information of the sidelink positioning reference signal set;

3) parameter information for sidelink positioning reference signals in the sidelink positioning reference signal set; and

4) quantity information of sidelink positioning reference signals in the sidelink positioning reference signal set.

In an optional embodiment, the second sidelink positioning reference signal configuration information includes at least one of the following:

(1) identification information of a terminal;

(2) location information of a terminal;

(3) antenna information of a terminal; and

(4) parameter information for a sidelink positioning reference signal.

Optionally, the receiving, by the second terminal, second sidelink positioning reference signal configuration information sent by the first terminal includes: receiving first SL positioning assistance information sent by the first terminal, where the first SL positioning assistance information includes the second sidelink positioning reference signal configuration information.

Optionally, the first terminal and the second terminal establish a PC5 connection, and the first terminal performs unicast communication with the second terminal, for example, transmitting the second sidelink positioning reference signal configuration information through PC5-RRC, PC5-LPP, or PC5 higher layer protocol. For example, the first SL positioning assistance information is defined and includes the second sidelink positioning reference signal configuration information.

Further, the parameter information for the sidelink positioning reference signal may include at least one of the following:

identification information of the sidelink positioning reference signal;
resource pool information associated with the sidelink positioning reference signal;
BWP information associated with the sidelink positioning reference signal;
RNTI of the sidelink positioning reference signal;
period information for the sidelink positioning reference signal;
first time domain offset information for the sidelink positioning reference signal;
first reference time information for the sidelink positioning reference signal;
start time information for the sidelink positioning reference signal;
end time information for the sidelink positioning reference signal;
frequency domain information for the sidelink positioning reference signal; for example, PCI, ARFCN, NCGI, lowest position of subchannel, carrier ID, frequency layer indication information, or bandwidth;
sequence information for the sidelink positioning reference signal, for example: the number of symbols, the number of repetitions, RE offset, comb value, or sequence identification information; and
the number of resource repetitions of the sidelink positioning reference signal, for example, repeatedly sending the sidelink positioning reference signal for N times or providing N resources for sending the sidelink positioning reference signal.

Optionally, in this embodiment of this application, a type of the target sidelink positioning reference signal includes at least one of the following:

periodic sidelink positioning reference signal;
semi-static sidelink positioning reference signal;
aperiodic sidelink positioning reference signal; and
on-demand (on-demand) sidelink positioning reference signal.

In an optional embodiment, the first sidelink positioning reference signal configuration information is carried by one of the following information:

DCI;
MAC CE;
RRC; and
LPP.

The second sidelink positioning reference signal configuration information may be carried by one of the following information:

SCI;
PC5-MAC CE;
PC5-RRC; and
PC5-LPP.

It should be noted that the first sidelink positioning reference signal configuration information may be transmitted through a higher layer protocol, such as media access control control element MAC CE, radio resource control RRC, or LTE positioning protocol LPP. The information content at least includes the parameter information for the sidelink positioning reference signal. Examples are not provided one by one herein.

Optionally, in a case that the first sidelink positioning reference signal configuration information is carried by DCI, the DCI is used to indicate at least one of the following information:

resource pool indication information, such as $\lceil \log_2 I \rceil$ bits, where I is the number of resource pools;
BWP indication information;
time interval, which may include 3 bits and is a time interval between DCI transmission and SL-PRS transmission;
lowest position of a subchannel;
frequency domain resource configuration information for a sidelink positioning reference signal;
time domain resource configuration information for a sidelink positioning reference signal;
repetition count indication information for a sidelink positioning reference signal; and
duration information for a sidelink positioning reference signal; and
identification information of a sidelink positioning reference signal.

Optionally, in a case that the second sidelink positioning reference signal configuration information is carried by SCI, information of the SCI includes at least one of the following:

priority information for a sidelink positioning reference signal;
frequency domain resource configuration information for a sidelink positioning reference signal;
time domain resource configuration information for a sidelink positioning reference signal;
a time interval between SCI and sending of a sidelink positioning reference signal;
scheduling indication information for a sidelink positioning reference signal; and
transmission indication information for a sidelink positioning reference signal.

Optionally, in this embodiment of this application, the first sidelink positioning reference signal configuration information and the second sidelink positioning reference signal configuration information indicate same transmission information for a sidelink positioning reference signal; and
the transmission information may include at least one of the following: a transmission time, a transmission frequency domain position, a transmission period, and identification information of the sidelink positioning reference signal.
The transmission time is time domain information, such as absolute time and relative time (such as slot, symbol, or SFN), for transmitting the sidelink positioning reference signal;
The transmission frequency domain position is frequency domain information for the sidelink positioning reference signal; for example, PCI, ARFCN, NCGI, lowest position of subchannel, carrier ID, frequency layer indication information, or bandwidth;
In a case that the first sidelink positioning reference signal configuration information is carried by DCI and the second sidelink positioning reference signal configuration information is carried by SCI, the first sidelink positioning reference signal configuration information carried by DCI and the second sidelink positioning reference signal configuration information carried by SCI indicate same transmission information for the sidelink positioning reference signal.
In this embodiment, when the second sidelink positioning reference signal configuration information and the first sidelink positioning reference signal configuration information indicate the same content, the second sidelink positioning reference signal configuration information and the first sidelink positioning reference signal configuration information include the same information. For example, when the first sidelink positioning reference signal configuration information carried by DCI includes at least one of a time domain position or a frequency domain position for transmitting the sidelink positioning reference signal, the second sidelink positioning reference signal configuration information also includes the above information, and the indication information of the second sidelink positioning reference signal is the same as the time domain position or frequency domain position indicated by the first sidelink positioning reference signal configuration information. In other words, the first terminal determines the time-frequency position for sending the sidelink positioning reference signal according to DCI. The first terminal further needs to indicate the second terminal by using SCI to perform measurement at the time-frequency position for sending the positioning reference signal. The time-frequency positions for transmission and measurement are the same, and therefore those transmitted by the first terminal and measured by the second terminal are a same signal. A same time-frequency position is indicated finally by the DCI and SCI, although indication manners may be different.
In an optional embodiment, the scheduling information for the target sidelink positioning reference signal includes at least one of the following:

(1) identification information of the first terminal;
(2) identification information of a second terminal;
(3) location information of the first terminal;
(4) location information of the second terminal;
(5) antenna information of the first terminal;

(6) antenna information of the second terminal;

(7) identification information of the target sidelink positioning reference signal;

(8) parameter information for the target sidelink positioning reference signal; and

(9) identification information of a target sidelink positioning reference signal set.

It should be noted that in an embodiment, the scheduling information for the target sidelink positioning reference signal can be combined with the configuration information for the sidelink positioning reference signal. For example, receiving only the configuration information for the sidelink positioning reference signal does not mean that the terminal needs to send or perform measurement on the sidelink positioning reference signal, and only when the scheduling information for the target sidelink positioning reference signal is received, the transmission or measurement of the target sidelink positioning reference signal is activated. Further, the configuration information for the sidelink positioning reference signal includes a plurality of sidelink positioning reference signals or a plurality of groups of sidelink positioning reference signals, and only when the scheduling information for the target sidelink positioning reference signal is received, the target sidelink positioning reference signal to be finally transmitted or measured can be then determined.

Optionally, in this embodiment of this application, the scheduling information for the target sidelink positioning reference signal may be carried by one of the following information:

DCI;
MAC CE;
RRC;
LPP;
PC5;
PC5-RRC;
PC5-MAC CE;
SCI; and
PSSCH.

In a case that the scheduling information for the target sidelink positioning reference signal is carried by DCI, the DCI may be used to schedule or activate the sidelink positioning reference signal, and the DCI format may include at least one of the following:

DCI 3-0;
DCI 3-1; and
DCI 3-x.

Optionally, the DCI is used to indicate at least one of the following information:

resource pool indication information;
BWP indication information;
transmission indication information for the target sidelink positioning reference signal;
time interval between the target sidelink positioning reference signal and DCI;
lowest position of a transmission subchannel for the target sidelink positioning reference signal;
frequency domain resource configuration information for the target sidelink positioning reference signal;
time domain resource configuration information for the target sidelink positioning reference signal;
repetition count indication information for the target sidelink positioning reference signal;
duration information for the target sidelink positioning reference signal; and
identification information of the target sidelink positioning reference signal.

In a case that the scheduling information for the target sidelink positioning reference signal is carried by SCI, information of the SCI may include at least one of the following:

priority information for the target sidelink positioning reference signal;
frequency domain resource configuration information for the target sidelink positioning reference signal;
time domain resource configuration information for the target sidelink positioning reference signal;
a time interval between SCI and sending of the target sidelink positioning reference signal;
scheduling indication information for the target sidelink positioning reference signal; and
transmission indication information for the target sidelink positioning reference signal.

Optionally, in a case that the scheduling information for the target sidelink positioning reference signal is carried by SCI, a format of the SCI includes at least one of the following information:

information about first-stage SCI; and
information about second-stage SCI.

Information content specifically included in the information about the first-stage SCI and the information about the second-stage SCI will not be repeated herein.

It should be noted that in one case, the configuration information for the sidelink positioning reference signal is transmitted through a higher layer, such as RRC, LPP, or MAC CE. The scheduling information for the target sidelink positioning reference signal is transmitted by DCI. For another example, the positioning reference signal configuration information is transmitted through a higher layer, such as PUSCH, PC5-RRC, or PCS-LPP: However, the scheduling information for the target sidelink positioning reference signal is transmitted by SCI.

In this embodiment, the second terminal exchanges the configuration information for the sidelink positioning reference signal with the network-side device and/or the first terminal, so that the first terminal and/or the network-side device can perform the scheduling operation on the target sidelink positioning reference signal according to the configuration information for the sidelink positioning reference signal, implementing sidelink positioning.

In the sidelink positioning signal scheduling method provided in the embodiments of this application, the execution subject may be a sidelink positioning signal scheduling apparatus. In the embodiments of this application, the sidelink positioning signal scheduling method being executed by the sidelink positioning signal scheduling apparatus is used as an example to describe the sidelink positioning signal scheduling apparatus provided in the embodiments of this application.

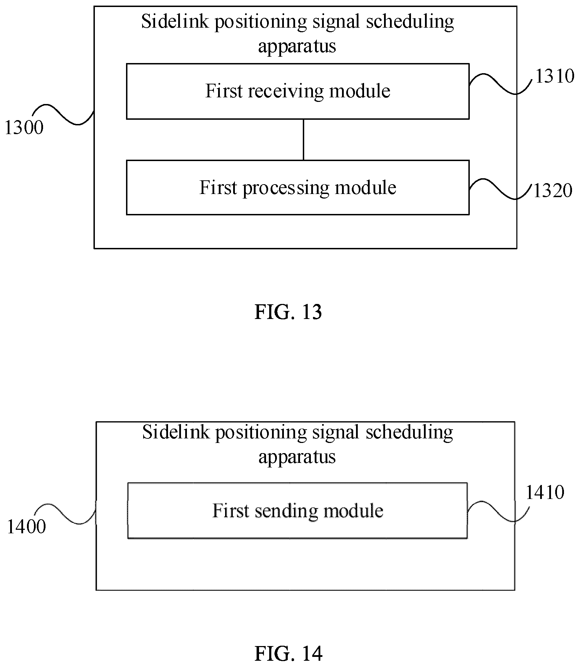

As shown in FIG. 13, an embodiment of this application provides a sidelink positioning signal scheduling apparatus 1300, which is applied to a first terminal and includes:

a first receiving module 1310, configured to receive first sidelink positioning reference signal configuration information sent by a network-side device; and
a first processing module 1320, configured to perform a scheduling operation on a target sidelink positioning reference signal according to the first sidelink positioning reference signal configuration information; where
the first terminal is a transmit terminal or a receive terminal of the target sidelink positioning reference signal.

Optionally, the first terminal is a target terminal for which location information is to be determined, and the location information includes at least one of the following:

relative location information;
absolute location information;
relative distance information; and
SL measurement result; where
the SL measurement result includes information obtained through measurement on the target sidelink positioning reference signal.

Optionally, the first processing module 1320 is specifically configured to send the target sidelink positioning reference signal according to the first sidelink positioning reference signal configuration information.

Optionally, the first processing module 1320 is further configured to perform at least one of the following operations:

sending second sidelink positioning reference signal configuration information to a second terminal;
sending SL measurement request information to the second terminal;
receiving an SL measurement result sent by the second terminal;
sending an SL measurement result to the network-side device; and
sending location information of the first terminal to the network-side device; where
the second terminal is a receive terminal of the target sidelink positioning reference signal.

Optionally, the first processing module 1320 is specifically configured to perform measurement on the target sidelink positioning reference signal according to the first sidelink positioning reference signal configuration information to obtain an SL measurement result.

Optionally, the apparatus further includes:

a second receiving module, configured to receive first sidelink positioning reference signal configuration information sent by a second terminal or a third terminal; and/or

a second processing module, configured to perform a scheduling operation on the target sidelink positioning reference signal according to the second sidelink positioning reference signal configuration information; where

the third terminal is a scheduling terminal other than a transmit terminal and a receive terminal of the target sidelink positioning reference signal.

Optionally, the second processing module is specifically configured to perform at least one of the following operations:

performing measurement on the target sidelink positioning reference signal according to the second sidelink positioning reference signal configuration information to obtain an SL measurement result;
sending the target sidelink positioning reference signal according to the second sidelink positioning reference signal configuration information;
sending the SL measurement result to the second terminal;
sending the SL measurement result to the network-side device; and
sending location information of the first terminal to the network-side device.

Optionally, the first sidelink positioning reference signal configuration information includes at least one of the following:

identification information of the first terminal;
identification information of a second terminal;
parameter information for a sidelink positioning reference signal; and
configuration information for a pre-configured sidelink positioning reference signal set.

Optionally, the configuration information for the pre-configured sidelink positioning reference signal set includes at least one of the following:

identification information of the sidelink positioning reference signal set;
state information of the sidelink positioning reference signal set;
parameter information for sidelink positioning reference signals in the sidelink positioning reference signal set; and
quantity information of sidelink positioning reference signals in the sidelink positioning reference signal set.

Optionally, the second sidelink positioning reference signal configuration information includes at least one of the following:

identification information of a terminal;
location information of a terminal;
antenna information of a terminal; and
parameter information for a sidelink positioning reference signal.

Optionally, the target sidelink positioning reference signal is at least one of the following signals:

a sidelink positioning reference signal;
a sidelink positioning reference signal selected from a plurality of sidelink positioning reference signals;
a sidelink positioning reference signal set selected from a plurality of sidelink positioning reference signal sets; and
a sidelink positioning reference signal selected from a selected sidelink positioning reference signal set.

Optionally, when sending the second sidelink positioning reference signal configuration information to the second terminal, the first processing module 1320 is specifically configured to:
sending first SL positioning assistance information to the second terminal, where the first SL positioning assistance information includes the second sidelink positioning reference signal configuration information.

Optionally, a type of the target sidelink positioning reference signal includes at least one of the following:

periodic sidelink positioning reference signal;
semi-static sidelink positioning reference signal;
aperiodic sidelink positioning reference signal; and

on-demand sidelink positioning reference signal.

Optionally, the parameter information for the sidelink positioning reference signal includes at least one of the following:

identification information of the sidelink positioning reference signal;
resource pool information associated with the sidelink positioning reference signal;
bandwidth part BWP information associated with the sidelink positioning reference signal;
radio network temporary identifier RNTI of the sidelink positioning reference signal;
period information for the sidelink positioning reference signal;
first time domain offset information for the sidelink positioning reference signal;
first reference time information for the sidelink positioning reference signal;
start time information for the sidelink positioning reference signal;
end time information for the sidelink positioning reference signal;
frequency domain information for the sidelink positioning reference signal;
sequence information for the sidelink positioning reference signal; and
the number of resource repetitions of the sidelink positioning reference signal.

Optionally, the parameter information for the sidelink positioning reference signal further includes:
type information for the sidelink positioning reference signal.

Optionally, the first sidelink positioning reference signal configuration information is carried by one of the following information:

downlink control information DCI;
a media access control control element MAC CE;
radio resource control RRC; and
LTE positioning protocol LPP.

Optionally, the second sidelink positioning reference signal configuration information is carried by one of the following information:

sidelink control information SCI;
PC5-MAC CE;
PC5-RRC; and
PC5-LPP.

Optionally, in a case that the first sidelink positioning reference signal configuration information is carried by DCI, a format of the DCI includes at least one of the following:

DCI 3-0;
DCI 3-1; and
DCI 3-x.

Optionally, in a case that the first sidelink positioning reference signal configuration information is carried by DCI, the DCI is used to indicate at least one of the following information:

resource pool indication information;
BWP indication information;
time interval;
lowest position of a subchannel;
frequency domain resource configuration information for a sidelink positioning reference signal;
time domain resource configuration information for a sidelink positioning reference signal;
repetition count indication information for a sidelink positioning reference signal;
duration information for a sidelink positioning reference signal; and
identification information of a sidelink positioning reference signal.

Optionally, in a case that the second sidelink positioning reference signal configuration information is carried by SCI, a format of the SCI includes at least one of the following information:

information about first-stage SCI; and
information about second-stage SCI.

Optionally, information about the SCI includes at least one of the following:

priority information for a sidelink positioning reference signal;
frequency domain resource configuration information for a sidelink positioning reference signal;
time domain resource configuration information for a sidelink positioning reference signal;
a time interval between SCI and sending of a sidelink positioning reference signal;
scheduling indication information for a sidelink positioning reference signal; and
transmission indication information for a sidelink positioning reference signal.

Optionally, information about the second-stage SCI includes at least one of the following:

hybrid automatic repeat request HARQ process number;
new data indicator;
redundancy version;
identification information of the first terminal;
identification information of the second terminal;
HARQ feedback enabled indicator information;
HARQ feedback disabled indicator information;
cast type indicator;
channel state information CSI request;
time interval;
period of a sidelink positioning reference signal;
repetition count indication information for a sidelink positioning reference signal; and
duration information for a sidelink positioning reference signal.

Optionally, information about the second-stage SCI includes at least one of the following:

zone ID;
communication range information;
identification information of the first terminal;
identification information of the second terminal;
location information of the first terminal;
location information of the second terminal;
measurement request information;
measurement feedback information;
time interval;
period of a sidelink positioning reference signal;
repetition count indication information for a sidelink positioning reference signal; and
duration information for a sidelink positioning reference signal.

Optionally, the first sidelink positioning reference signal configuration information and the second sidelink positioning reference signal configuration information indicate same transmission information for a sidelink positioning reference signal; and
the transmission information includes at least one of the following: a transmission time, a transmission frequency domain position, a transmission period, and identification information of the sidelink positioning reference signal.

Optionally, in a case that the first sidelink positioning reference signal configuration information is carried by DCI and the second sidelink positioning reference signal configuration information is carried by SCI, the first sidelink positioning reference signal configuration information carried by DCI and the second sidelink positioning reference signal configuration information carried by SCI indicate same transmission information for the sidelink positioning reference signal.

Optionally, the apparatus further includes:

a second sending module, configured to send request information for the parameter information for the sidelink positioning reference signal; where
the request information includes at least one of the following:

identification information of a pre-configured sidelink positioning reference signal;
on/off indication information;
start time information for the sidelink positioning reference signal;
end time information for the sidelink positioning reference signal; and
duration information for the sidelink positioning reference signal.

Optionally, the request information includes one of the following:

request information associated with identification information of a terminal;
request information associated with identification information of a panel or antenna of a terminal;
request information associated with identification information of a transmit terminal;
request information associated with a carrier of a transmit terminal;
request information associated with a frequency domain range of a transmit terminal;
request information associated with a resource or resource set of a transmit terminal; and
request information associated with a sidelink positioning reference signal of a transmit terminal.

Optionally, the apparatus further includes:

a first determining module, configured to determine the start time information for the sidelink positioning reference signal according to target characteristic information; where
the target characteristic information includes at least one of the following:

period information;
terminal quantity information;
zone identification information;
location information of a target terminal;
serving cell information for a target terminal;
zone identification information for a target terminal;
group information of a target terminal;
identification information of the first terminal;
identification information of a second terminal;
quantity information of the first terminal;
quantity information of the second terminal;
on/off indication information for the first terminal;
on/off indication information for the second terminal;
start time information for the first terminal;
end time information for the first terminal;
duration information for the first terminal;
start time information for the second terminal;
end time information for the second terminal;
duration information for the second terminal; and
frequency information.

Optionally, the apparatus further includes:

a third receiving module, configured to receive scheduling information for the target sidelink positioning reference signal; and
a third processing module, configured to perform a scheduling operation on the target sidelink positioning reference signal according to the scheduling information for the target sidelink positioning reference signal.

Optionally, the third receiving module is specifically configured to perform at least one of the following operations:

receiving scheduling information for the target sidelink positioning reference signal from a second terminal; and
receiving scheduling information for the target sidelink positioning reference signal from the network-side device.

Optionally, the third processing module is specifically configured to perform at least one of the following operations:

sending the target sidelink positioning reference signal according to the scheduling information for the target sidelink positioning reference signal;

scheduling, according to the scheduling information for the target sidelink positioning reference signal, a second terminal to perform measurement on the target sidelink positioning reference signal;

sending the scheduling information for the target sidelink positioning reference signal to the second terminal according to the scheduling information for the target sidelink positioning reference signal; and

scheduling, according to the scheduling information for the target sidelink positioning reference signal, the second terminal to send the target sidelink positioning reference signal.

Optionally, the scheduling information for the target sidelink positioning reference signal includes at least one of the following:

identification information of the first terminal;
identification information of a second terminal;
location information of the first terminal;
location information of the second terminal;
antenna information of the first terminal;
antenna information of the second terminal;
identification information of the target sidelink positioning reference signal;
parameter information for the target sidelink positioning reference signal; and
identification information of a target sidelink positioning reference signal set.

Optionally, the parameter information for the target sidelink positioning reference signal includes at least one of the following:

resource pool information associated with the target sidelink positioning reference signal;
BWP information associated with the target sidelink positioning reference signal;
RNTI of the target sidelink positioning reference signal;
period information for the target sidelink positioning reference signal;
first time domain offset information for the target sidelink positioning reference signal;
first reference time information for the target sidelink positioning reference signal;
start time information for the target sidelink positioning reference signal;
end time information for the target sidelink positioning reference signal;
frequency domain information for the target sidelink positioning reference signal;
sequence information for the target sidelink positioning reference signal; and
the number of resource repetitions for the target sidelink positioning reference signal.

Optionally, the scheduling information for the target sidelink positioning reference signal is carried by one of the following information:

DCI;
MAC CE;
RRC;
LPP;
PC5;
PC5-RRC;
PC5-MAC CE;
SCI; and
PSSCH.

Optionally, in a case that the scheduling information for the target sidelink positioning reference signal is carried by DCI, the DCI is used to indicate at least one of the following information:

resource pool indication information;
BWP indication information;
transmission indication information for the target sidelink positioning reference signal;
time interval between the target sidelink positioning reference signal and DCI;
lowest position of a transmission subchannel for the target sidelink positioning reference signal;

frequency domain resource configuration information for the target sidelink positioning reference signal;
time domain resource configuration information for the target sidelink positioning reference signal;
repetition count indication information for the target sidelink positioning reference signal;
duration information for the target sidelink positioning reference signal; and
identification information of the target sidelink positioning reference signal.

Optionally, in a case that the scheduling information for the target sidelink positioning reference signal is carried by SCI, a format of the SCI includes at least one of the following information:

information about first-stage SCI; and
information about second-stage SCI.

Optionally, information about the SCI includes at least one of the following:

priority information for the target sidelink positioning reference signal;
frequency domain resource configuration information for the target sidelink positioning reference signal;
time domain resource configuration information for the target sidelink positioning reference signal;
a time interval between SCI and sending of the target sidelink positioning reference signal;
scheduling indication information for the target sidelink positioning reference signal; and
transmission indication information for the target sidelink positioning reference signal.

Optionally, a target information bit of the first-stage SCI is a first value, and the first value is used to indicate a scheduling or measurement request for the target sidelink positioning reference signal; and
target information of the first-stage SCI includes at least one of the following:

reserved information bit;
additional MCS table indicator information;
time domain resource configuration information;
PSFCH overhead indication information;
MCS indication information; and
format of the second-stage SCI.

Optionally, information about the second-stage SCI includes at least one of the following:

HARQ process number;
new data indicator;
redundancy version;
identification information of the first terminal;
identification information of the second terminal;
HARQ feedback enabled indicator information;
HARQ feedback disabled indicator information;
cast type indicator;
channel state information CSI request;
time interval;
period of the target sidelink positioning reference signal;
repetition count indication information for the target sidelink positioning reference signal; and
duration information for the target sidelink positioning reference signal.

Optionally, information about the second-stage SCI includes at least one of the following:

zone ID;
communication range information;
identification information of the first terminal;
identification information of the second terminal;
location information of the first terminal;
location information of the second terminal;
measurement request information;
measurement feedback information;

time interval;

period of the target sidelink positioning reference signal;

repetition count indication information for the target sidelink positioning reference signal; and

duration information for the target sidelink positioning reference signal.

In this embodiment of this application, the first terminal performs the scheduling operation on the target sidelink positioning reference signal according to the first sidelink positioning reference signal configuration information sent by the network-side device, and provides a scheme related to signal scheduling during the sidelink positioning, so as to implement sidelink positioning.

It should be noted that the sidelink positioning signal scheduling apparatus provided in this embodiment of this application is capable of implementing the processes implemented in the method embodiments in FIG. 2 to FIG. 10, with the same technical effects achieved. To avoid repetition, details are not described herein again.

As shown in FIG. 14, an embodiment of this application provides a sidelink positioning signal scheduling apparatus 1400, which is applied to a network-side device and includes:

a first sending module 1410, configured to send first sidelink positioning reference signal configuration information to a first terminal; where

the first terminal is a transmit terminal or a receive terminal of a target sidelink positioning reference signal.

Optionally, the first terminal is a target terminal for which location information is to be determined, and the location information includes at least one of the following:

relative location information;

absolute location information;

relative distance information; and

SL measurement result; where

the SL measurement result includes information obtained through measurement on the target sidelink positioning reference signal.

Optionally, the apparatus further includes a fourth processing module, where the fourth processing module is configured to perform at least one of the following operations:

sending SL measurement request information to a second terminal;

receiving an SL measurement result sent by the second terminal;

receiving an SL measurement result sent by the first terminal;

receiving location information of the first terminal sent by the first terminal; and

sending SL measurement request information to the first terminal.

Optionally, the apparatus further includes:

a first obtaining module, configured to obtain the first sidelink positioning reference signal configuration information; and/or

a third sending module, configured to send the first sidelink positioning reference signal configuration information to the second terminal.

Optionally, the first obtaining module is configured to perform one of the following:

receiving the first sidelink positioning reference signal configuration information sent by the second terminal; and

sending configuration request information for a sidelink positioning reference signal to the second terminal, and receiving response information sent by the second terminal according to the configuration request information, where the response information includes the first sidelink positioning reference signal configuration information.

Optionally, the apparatus further includes:

a fourth receiving module, configured to receive configuration request information for a sidelink positioning reference signal from the second terminal; and

a third sending module, specifically configured to send the first sidelink positioning reference signal configuration information to the second terminal according to the configuration request information.

Optionally, the first sidelink positioning reference signal configuration information includes at least one of the following:

identification information of the first terminal;
identification information of a second terminal;
parameter information for a sidelink positioning reference signal; and
configuration information for a pre-configured sidelink positioning reference signal set.

Optionally, the configuration information for the pre-configured sidelink positioning reference signal set includes at least one of the following:

identification information of the sidelink positioning reference signal set;
state information of the sidelink positioning reference signal set;
parameter information for sidelink positioning reference signals in the sidelink positioning reference signal set; and
quantity information of sidelink positioning reference signals in the sidelink positioning reference signal set.

Optionally, the target sidelink positioning reference signal is at least one of the following signals:

a sidelink positioning reference signal;
a sidelink positioning reference signal selected from a plurality of sidelink positioning reference signals;
a first sidelink positioning reference signal set selected from a plurality of sidelink positioning reference signal sets; and
a sidelink positioning reference signal selected from a selected first sidelink positioning reference signal set.

Optionally, the parameter information for the sidelink positioning reference signal includes at least one of the following:

identification information of the sidelink positioning reference signal;
resource pool information associated with the sidelink positioning reference signal;
bandwidth part BWP information associated with the sidelink positioning reference signal;
radio network temporary identifier RNTI of the sidelink positioning reference signal;
period information for the sidelink positioning reference signal;
first time domain offset information for the sidelink positioning reference signal;
first reference time information for the sidelink positioning reference signal;
start time information for the sidelink positioning reference signal;
end time information for the sidelink positioning reference signal;
frequency domain information for the sidelink positioning reference signal;
sequence information for the sidelink positioning reference signal; and
the number of resource repetitions of the sidelink positioning reference signal.

Optionally, the first sidelink positioning reference signal configuration information is carried by one of the following information:

downlink control information DCI;
a media access control control element MAC CE;
radio resource control RRC; and
LTE positioning protocol LPP.

Optionally, the first sending module is configured to send the first sidelink positioning reference signal configuration information to the first terminal by using DCI.

The DCI format includes at least one of the following:

DCI 3-0;
DCI 3-1; and
DCI 3-x.

Optionally, the first sending module is specifically configured to send the first sidelink positioning reference signal configuration information to the first terminal by using DCI. The DCI is used to indicate at least one of the following information:

resource pool indication information;
BWP indication information;
time interval;
lowest position of a subchannel;
frequency domain resource configuration information for a sidelink positioning reference signal;
time domain resource configuration information for a sidelink positioning reference signal;
repetition count indication information for a sidelink positioning reference signal; and
duration information for a sidelink positioning reference signal; and
identification information of a sidelink positioning reference signal.

Optionally, the apparatus further includes a fifth receiving module configured to receive request information for the parameter information for the sidelink positioning reference signal; where
the request information includes at least one of the following:

identification information of a pre-configured sidelink positioning reference signal;
on/off indication information;
start time information for the sidelink positioning reference signal;
end time information for the sidelink positioning reference signal; and
duration information for the sidelink positioning reference signal.

Optionally, the request information includes one of the following:

request information associated with identification information of a terminal;
request information associated with identification information of a panel or antenna of a terminal;
request information associated with identification information of a transmit terminal;
request information associated with a carrier of a transmit terminal;
request information associated with a frequency domain range of a transmit terminal;
request information associated with a resource or resource set of a transmit terminal; and
request information associated with a sidelink positioning reference signal of a transmit terminal.

Optionally, the apparatus further includes:
a fourth sending module, configured to send scheduling information for the target sidelink positioning reference signal to the first terminal and/or a second terminal.
Optionally, the scheduling information for the target sidelink positioning reference signal includes at least one of the following:

identification information of the first terminal;
identification information of a second terminal;
location information of the first terminal;
location information of the second terminal;
antenna information of the first terminal;
antenna information of the second terminal;
identification information of the target sidelink positioning reference signal;
parameter information for the target sidelink positioning reference signal; and
identification information of a target sidelink positioning reference signal set.

Optionally, the scheduling information for the target sidelink positioning reference signal includes at least one of the following information:

resource pool indication information;
BWP indication information;
transmission indication information for the target sidelink positioning reference signal;
time interval between the target sidelink positioning reference signal and DCI;
lowest position of a transmission subchannel for the target sidelink positioning reference signal;
frequency domain resource configuration information for the target sidelink positioning reference signal;
time domain resource configuration information for the target sidelink positioning reference signal;
repetition count indication information for the target sidelink positioning reference signal;
duration information for the target sidelink positioning reference signal; and

identification information of the target sidelink positioning reference signal.

In this embodiment of this application, the network-side device sends the first sidelink positioning reference signal configuration information to the first terminal, and the first terminal can perform the scheduling operation on the target sidelink positioning reference signal according to the first sidelink positioning reference signal configuration information, so as to implement sidelink positioning.

It should be noted that the sidelink positioning signal scheduling apparatus provided in this embodiment of this application is capable of implementing the processes implemented in the method embodiments in FIG. 11, with the same technical effects achieved. To avoid repetition, details are not described herein again.

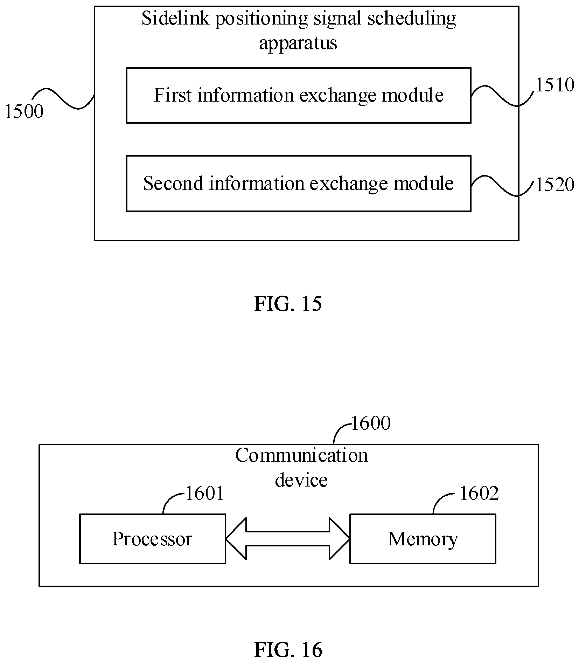

As shown in FIG. 15, an embodiment of this application provides a sidelink positioning signal scheduling apparatus 1500, which is applied to a second terminal and includes:

a first information exchange module 1510, configured to exchange first sidelink positioning reference signal configuration information with a network-side device; and
a second information exchange module 1520, configured to exchange second sidelink positioning reference signal configuration information with a first terminal; where
the first terminal is a transmit terminal or a receive terminal of a target sidelink positioning reference signal, and the second terminal is a peer terminal of the first terminal.

Optionally, the first terminal is a target terminal for which location information is to be determined, and the location information includes at least one of the following:

relative location information;
absolute location information;
relative distance information; and
SL measurement result; where
the SL measurement result includes information obtained through measurement on the target sidelink positioning reference signal.

Optionally, the first information exchange module 1510 is specifically configured to perform at least one of the following operations:

receiving the first sidelink positioning reference signal configuration information sent by the network-side device; and
sending the first sidelink positioning reference signal configuration information to the network-side device.

Optionally, the second information exchange module 1520 is specifically configured to perform at least one of the following operations:

receiving second sidelink positioning reference signal configuration information sent by the first terminal; and
sending the second sidelink positioning reference signal configuration information to the first terminal.

Optionally, when receiving the first sidelink positioning reference signal configuration information sent by the network-side device, the first information exchange module 1510 is specifically configured to:

sending configuration request information for a sidelink positioning reference signal to the network-side device; and
receiving the first sidelink positioning reference signal configuration information sent by the network-side device based on the configuration request information.

Optionally, when sending the first sidelink positioning reference signal configuration information to the network-side device, the first information exchange module 1510 is specifically configured to:

receiving configuration request information for a sidelink positioning reference signal from the network-side device; and
sending response information to the network-side device based on the configuration request information, where the response information includes the first sidelink positioning reference signal configuration information.

Optionally, the apparatus further includes:

a sixth receiving module, configured to receive SL measurement request information sent by the network-side device; and

a first measurement module, configured to perform measurement on the target sidelink positioning reference signal according to the first sidelink positioning reference signal configuration information and/or the SL measurement request information to obtain an SL measurement result.

Optionally, the apparatus further includes:

a seventh receiving module, configured to receive SL measurement request information sent by the first terminal; and

a second measurement module, configured to perform measurement on the target sidelink positioning reference signal according to the second sidelink positioning reference signal configuration information and/or the SL measurement request information to obtain an SL measurement result.

Optionally, the apparatus further includes:

a fifth sending module, configured to send the SL measurement result to the first terminal and/or the network-side device.

Optionally, the apparatus further includes:

a seventh receiving module, configured to receive an SL measurement result sent by the first terminal; and

Optionally, the apparatus further includes at least one of the following:

an eighth receiving module, configured to receive scheduling information for the target sidelink positioning reference signal from the first terminal and/or the network-side device; and

a sixth sending module, configured to send scheduling information for the target sidelink positioning reference signal to the first terminal.

In this embodiment of this application, the second terminal exchanges the first sidelink positioning reference signal configuration information with the network-side device, and/or the second terminal exchanges the second sidelink positioning reference signal configuration information with the first terminal, so that the first terminal and/or the network-side device can perform the scheduling operation on the target sidelink positioning reference signal according to the configuration information for the sidelink positioning reference signal, so as to implement sidelink positioning.

It should be noted that the sidelink positioning signal scheduling apparatus provided in this embodiment of this application is capable of implementing the processes implemented in the method embodiments in FIG. 12, with the same technical effects achieved. To avoid repetition, details are not described herein again.

The sidelink positioning signal scheduling apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The sidelink positioning signal scheduling apparatus provided in this embodiment of this application is capable of implementing the processes implemented in the method embodiments in FIG. 2 to FIG. 10, with the same technical effects achieved. To avoid repetition, details are not described herein again.

Optionally, as shown in FIG. 16, an embodiment of this application further provides a communication device 1600, including a processor 1601 and a memory 1602. A program or instructions capable of running on the processor 1601 are stored in the memory 1602. For example, when the communication device 1600 is a terminal and when the program or the instructions are executed by the processor 1601, the steps of the foregoing embodiments of the sidelink positioning signal scheduling method applied to the first terminal or applied to the second terminal are implemented, with the same technical effects achieved. When the communication device 1600 is a network-side device and when the program or the instructions are executed by the processor 1601, the steps of the foregoing embodiment of the sidelink positioning signal scheduling method applied to the network-side device side are implemented, with the same technical effects achieved. To avoid repetition, details are not described herein again.

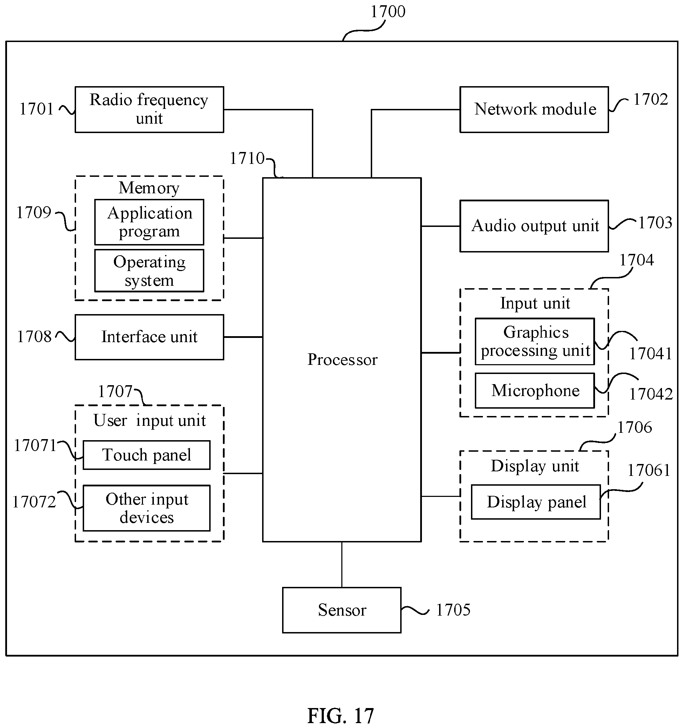

An embodiment of this application further provides a terminal, where the terminal is a first terminal and includes a processor and a communication interface, and the communication interface is configured to receive first sidelink positioning reference signal configuration information. The processor is configured to perform a scheduling operation on a target sidelink positioning reference signal according to the first sidelink positioning reference signal configuration information; where the first terminal is a transmit terminal or a receive terminal of the target sidelink positioning reference signal. The terminal embodiments correspond to the foregoing first-terminal method embodiments, and the implementation processes and implementations of the foregoing method embodiments can be applied to the terminal embodiments, with the same technical effects achieved. Specifically, FIG. 17 is a schematic diagram of a hardware structure of a terminal for implementing the embodiments of this application.

The terminal 1700 is a first terminal, includes but not limited to at least part of components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

Persons skilled in the art can understand that the terminal 1700 may further include a power supply (for example, a battery) supplying power to the components, and the power supply may be logically connected to the processor 1710 through a power management system. In this way, functions such as charge management, discharge management, and power consumption management are implemented by using the power management system. The structure of the terminal shown in FIG. 17 does not constitute any limitation on the terminal. The terminal may include more or fewer components than shown in the figure, or a combination of some components, or the components disposed differently. Details are not described herein again.

It can be understood that in this embodiment of this application, the input unit 1704 may include a graphics processing unit (Graphics Processing Unit, GPU) 17041 and a microphone 17042. The graphics processing unit 17041 processes image data of a still picture or video obtained by an image capture apparatus (such as a camera) in a video capture mode or an image capture mode. The display unit 1706 may include a display panel 17061, and the display panel 17061 may be configured in a form of a liquid crystal display, an organic light-emitting diode, and the like. The user input unit 1707 may include at least one of a touch panel 17071 and other input devices 17072. The touch panel 17071 is also referred to as a touchscreen. The touch panel 17071 may include two parts: a touch detection apparatus and a touch controller. The other input devices 17072 may include but are not limited to a physical keyboard, a function key (such as a volume control key or a power on/off key), a trackball, a mouse, a joystick, and the like. Details are not described herein.

In this embodiment of this application, the radio frequency unit 1701 receives downlink data from a network-side device, and then sends the downlink data to the processor 1710 for processing; and may send uplink data to the network-side device. Generally, the radio frequency unit 1701 includes but is not limited to an antenna, an amplifier, a transceiver, a coupler, a low noise amplifier, a duplexer, and the like.

The memory 1709 may be configured to store software programs or instructions and various data. The memory 1709 may include a first storage area for storing a program or instructions and a second storage area for storing data. The first storage area may store an operating system, an application program or instruction required by at least one function (for example, a sound playback function or an image playback function), and the like. In addition, the memory 1709 may include a volatile memory or a non-volatile memory, or the memory 1709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1709 in the embodiments of this application includes but is not limited to these and any other suitable types of memories.

The processor 1710 may include one or more processing units. Optionally, an application processor and a modem processor may be integrated in the processor 1710. This application processor primarily processes operations involving an operating system, user interfaces, application programs, and the like. The modem processor primarily processes radio communication signals, for example, being a baseband processor. It can be understood that the modem processor may alternatively be not integrated in the processor 1710.

The radio frequency unit 1701 is configured to receive first sidelink positioning reference signal configuration information sent by a network-side device; and

the processor 1710 is configured to perform a scheduling operation on a target sidelink positioning reference signal according to the first sidelink positioning reference signal configuration information; where
the first terminal is a transmit terminal or a receive terminal of the target sidelink positioning reference signal.

In this embodiment of this application, the first terminal performs the scheduling operation on the target sidelink positioning reference signal according to the first sidelink positioning reference signal configuration information sent by the network-side device, and provides a scheme related to signal scheduling during the sidelink positioning, so as to implement sidelink positioning.

Optionally, the first terminal is a target terminal for which location information is to be determined, and the location information includes at least one of the following:

relative location information;

absolute location information;

relative distance information; and

SL measurement result; where

the SL measurement result includes information obtained through measurement on the target sidelink positioning reference signal.

Optionally, the processor is specifically configured to send the target sidelink positioning reference signal according to the first sidelink positioning reference signal configuration information.

Optionally, when performing the scheduling operation on the target sidelink positioning reference signal according to the first sidelink positioning reference signal configuration information, the processor specifically performs at least one of the following operations:

sending second sidelink positioning reference signal configuration information to a second terminal;

sending SL measurement request information to the second terminal;

receiving an SL measurement result sent by the second terminal;

sending an SL measurement result to the network-side device; and

sending location information of the first terminal to the network-side device; where

the second terminal is a receive terminal of the target sidelink positioning reference signal.

Optionally,

the processor is specifically configured to perform measurement on the target sidelink positioning reference signal according to the first sidelink positioning reference signal configuration information to obtain an SL measurement result.

Optionally, the radio frequency unit is specifically configured to:

receive second sidelink positioning reference signal configuration information sent by a second terminal or a third terminal; and/or

the processor is specifically configured to perform a scheduling operation on the target sidelink positioning reference signal according to the second sidelink positioning reference signal configuration information; where

the third terminal is a scheduling terminal other than a transmit terminal and a receive terminal of the target sidelink positioning reference signal.

Optionally, when performing the scheduling operation on the target sidelink positioning reference signal according to the second sidelink positioning reference signal configuration information, the processor is configured to perform at least one of the following operations:

performing measurement on the target sidelink positioning reference signal according to the second sidelink positioning reference signal configuration information to obtain an SL measurement result;

sending the target sidelink positioning reference signal according to the second sidelink positioning reference signal configuration information;

sending the SL measurement result to the second terminal;

sending the SL measurement result to the network-side device; and

sending location information of the first terminal to the network-side device.

Optionally, the first sidelink positioning reference signal configuration information includes at least one of the following:

identification information of the first terminal;

identification information of a second terminal;

parameter information for a sidelink positioning reference signal; and

configuration information for a pre-configured sidelink positioning reference signal set.

Optionally, the configuration information for the pre-configured sidelink positioning reference signal set includes at least one of the following:

identification information of the sidelink positioning reference signal set;

state information of the sidelink positioning reference signal set;

parameter information for sidelink positioning reference signals in the sidelink positioning reference signal set; and

quantity information of sidelink positioning reference signals in the sidelink positioning reference signal set.

Optionally, the second sidelink positioning reference signal configuration information includes at least one of the following:

identification information of a terminal;
location information of a terminal;
antenna information of a terminal; and
parameter information for a sidelink positioning reference signal.

Optionally, the target sidelink positioning reference signal is at least one of the following signals:

a sidelink positioning reference signal;
a sidelink positioning reference signal selected from a plurality of sidelink positioning reference signals;
a sidelink positioning reference signal set selected from a plurality of sidelink positioning reference signal sets; and
a sidelink positioning reference signal selected from a selected sidelink positioning reference signal set.

Optionally, the sending second sidelink positioning reference signal configuration information to a second terminal includes:
sending first SL positioning assistance information to the second terminal, where the first SL positioning assistance information includes the second sidelink positioning reference signal configuration information.

Optionally, a type of the target sidelink positioning reference signal includes at least one of the following:

periodic sidelink positioning reference signal;
semi-static sidelink positioning reference signal;
aperiodic sidelink positioning reference signal; and
on-demand sidelink positioning reference signal.

Optionally, the parameter information for the sidelink positioning reference signal includes at least one of the following:

identification information of the sidelink positioning reference signal;
resource pool information associated with the sidelink positioning reference signal;
bandwidth part BWP information associated with the sidelink positioning reference signal;
radio network temporary identifier RNTI of the sidelink positioning reference signal;
period information for the sidelink positioning reference signal;
first time domain offset information for the sidelink positioning reference signal;
first reference time information for the sidelink positioning reference signal;
start time information for the sidelink positioning reference signal;
end time information for the sidelink positioning reference signal;
frequency domain information for the sidelink positioning reference signal;
sequence information for the sidelink positioning reference signal; and
the number of resource repetitions of the sidelink positioning reference signal.

Optionally, the parameter information for the sidelink positioning reference signal further includes: type information for the sidelink positioning reference signal.

Optionally, the first sidelink positioning reference signal configuration information is carried by one of the following information:

downlink control information DCI;
a media access control control element MAC CE;
radio resource control RRC; and
LTE positioning protocol LPP.

Optionally, the second sidelink positioning reference signal configuration information is carried by one of the following information:

sidelink control information SCI;

PC5-MAC CE;
PC5-RRC; and
PC5-LPP.

Optionally, in a case that the first sidelink positioning reference signal configuration information is carried by DCI, a format of the DCI includes at least one of the following:

DCI 3-0;
DCI 3-1; and
DCI 3-x.

Optionally, in a case that the first sidelink positioning reference signal configuration information is carried by DCI, the DCI is used to indicate at least one of the following information:

resource pool indication information;
BWP indication information;
time interval;
lowest position of a subchannel;
frequency domain resource configuration information for a sidelink positioning reference signal;
time domain resource configuration information for a sidelink positioning reference signal;
repetition count indication information for a sidelink positioning reference signal; and
duration information for a sidelink positioning reference signal; and
identification information of a sidelink positioning reference signal.

Optionally, in a case that the second sidelink positioning reference signal configuration information is carried by SCI, a format of the SCI includes at least one of the following information:

information about first-stage SCI; and
information about second-stage SCI.

Optionally, information about the SCI includes at least one of the following:

priority information for a sidelink positioning reference signal;
frequency domain resource configuration information for a sidelink positioning reference signal;
time domain resource configuration information for a sidelink positioning reference signal;
a time interval between SCI and sending of a sidelink positioning reference signal;
scheduling indication information for a sidelink positioning reference signal; and
transmission indication information for a sidelink positioning reference signal.

Optionally, information about the second-stage SCI includes at least one of the following:

hybrid automatic repeat request HARQ process number;
new data indicator;
redundancy version;
identification information of the first terminal;
identification information of the second terminal;
HARQ feedback enabled indicator information;
HARQ feedback disabled indicator information;
cast type indicator;
channel state information CSI request;
time interval;
period of a sidelink positioning reference signal;
repetition count indication information for a sidelink positioning reference signal; and
duration information for a sidelink positioning reference signal.

Optionally, information about the second-stage SCI includes at least one of the following:

zone ID;

communication range information;
identification information of the first terminal;
identification information of the second terminal;
location information of the first terminal;
location information of the second terminal;
measurement request information;
measurement feedback information;
time interval;
period of a sidelink positioning reference signal;
repetition count indication information for a sidelink positioning reference signal; and
duration information for a sidelink positioning reference signal.

Optionally, the first sidelink positioning reference signal configuration information and the second sidelink positioning reference signal configuration information indicate same transmission information for a sidelink positioning reference signal; and
the transmission information includes at least one of the following: a transmission time, a transmission frequency domain position, a transmission period, and identification information of the sidelink positioning reference signal.

Optionally, in a case that the first sidelink positioning reference signal configuration information is carried by DCI and the second sidelink positioning reference signal configuration information is carried by SCI, the first sidelink positioning reference signal configuration information carried by DCI and the second sidelink positioning reference signal configuration information carried by SCI indicate same transmission information for the sidelink positioning reference signal.

Optionally, the radio frequency unit is further configured to:

send request information for the parameter information for the sidelink positioning reference signal; where
the request information includes at least one of the following:

identification information of a pre-configured sidelink positioning reference signal;
on/off indication information;
start time information for the sidelink positioning reference signal;
end time information for the sidelink positioning reference signal; and
duration information for the sidelink positioning reference signal.

Optionally, the request information includes one of the following:

request information associated with identification information of a terminal;
request information associated with identification information of a panel or antenna of a terminal;
request information associated with identification information of a transmit terminal;
request information associated with a carrier of a transmit terminal;
request information associated with a frequency domain range of a transmit terminal;
request information associated with a resource or resource set of a transmit terminal; and
request information associated with a sidelink positioning reference signal of a transmit terminal.

Optionally, the processor is further configured to determine the start time information for the sidelink positioning reference signal according to target characteristic information; where
the target characteristic information includes at least one of the following:

period information;
terminal quantity information;
zone identification information;
location information of a target terminal;
serving cell information for a target terminal;
zone identification information for a target terminal;
group information of a target terminal;
identification information of the first terminal;
identification information of a second terminal;
quantity information of the first terminal;
quantity information of the second terminal;

on/off indication information for the first terminal;
on/off indication information for the second terminal;
start time information for the first terminal;
end time information for the first terminal;
duration information for the first terminal;
start time information for the second terminal;
end time information for the second terminal;
duration information for the second terminal; and
frequency information.

Optionally, the radio frequency unit is further configured to receive scheduling information for the target sidelink positioning reference signal; and
the processor is further configured to:
perform a scheduling operation on the target sidelink positioning reference signal according to the scheduling information for the target sidelink positioning reference signal.

Optionally, the radio frequency unit is specifically configured to perform at least one of the following operations:

receiving scheduling information for the target sidelink positioning reference signal from a second terminal; and
receiving scheduling information for the target sidelink positioning reference signal from the network-side device.

Optionally, when performing the scheduling operation on the target sidelink positioning reference signal according to the scheduling information for the target sidelink positioning reference signal, the processor specifically performs at least one of the following operations:

sending the target sidelink positioning reference signal according to the scheduling information for the target sidelink positioning reference signal;
scheduling, according to the scheduling information for the target sidelink positioning reference signal, a second terminal to perform measurement on the target sidelink positioning reference signal;
sending the scheduling information for the target sidelink positioning reference signal to the second terminal according to the scheduling information for the target sidelink positioning reference signal; and
scheduling, according to the scheduling information for the target sidelink positioning reference signal, the second terminal to send the target sidelink positioning reference signal.

Optionally, the scheduling information for the target sidelink positioning reference signal includes at least one of the following:

identification information of the first terminal;
identification information of a second terminal;
location information of the first terminal;
location information of the second terminal;
antenna information of the first terminal;
antenna information of the second terminal;
identification information of the target sidelink positioning reference signal;
parameter information for the target sidelink positioning reference signal; and
identification information of a target sidelink positioning reference signal set.

Optionally, the parameter information for the target sidelink positioning reference signal includes at least one of the following:

resource pool information associated with the target sidelink positioning reference signal;
BWP information associated with the target sidelink positioning reference signal;
RNTI of the target sidelink positioning reference signal;
period information for the target sidelink positioning reference signal;
first time domain offset information for the target sidelink positioning reference signal;
first reference time information for the target sidelink positioning reference signal;
start time information for the target sidelink positioning reference signal;
end time information for the target sidelink positioning reference signal;
frequency domain information for the target sidelink positioning reference signal;

sequence information for the target sidelink positioning reference signal; and
the number of resource repetitions for the target sidelink positioning reference signal.

Optionally, the scheduling information for the target sidelink positioning reference signal is carried by one of the following information:

DCI;
MAC CE;
RRC;
LPP;
PC5;
PC5-RRC;
PC5-MAC CE;
SCI; and
physical sidelink shared channel PSSCH.

Optionally, in a case that the scheduling information for the target sidelink positioning reference signal is carried by DCI, the DCI is used to indicate at least one of the following information:

resource pool indication information;
BWP indication information;
transmission indication information for the target sidelink positioning reference signal;
time interval between the target sidelink positioning reference signal and DCI;
lowest position of a transmission subchannel for the target sidelink positioning reference signal;
frequency domain resource configuration information for the target sidelink positioning reference signal;
time domain resource configuration information for the target sidelink positioning reference signal;
repetition count indication information for the target sidelink positioning reference signal;
duration information for the target sidelink positioning reference signal; and
identification information of the target sidelink positioning reference signal.

Optionally, in a case that the scheduling information for the target sidelink positioning reference signal is carried by SCI, a format of the SCI includes at least one of the following information:

information about first-stage SCI; and
information about second-stage SCI.

Optionally, information about the SCI includes at least one of the following:

priority information for the target sidelink positioning reference signal;
frequency domain resource configuration information for the target sidelink positioning reference signal;
time domain resource configuration information for the target sidelink positioning reference signal;
a time interval between SCI and sending of the target sidelink positioning reference signal;
scheduling indication information for the target sidelink positioning reference signal; and
transmission indication information for the target sidelink positioning reference signal.

Optionally, a target information bit of the first-stage SCI is a first value, and the first value is used to indicate a scheduling or measurement request for the target sidelink positioning reference signal; and
target information of the first-stage SCI includes at least one of the following:

reserved information bit;
additional MCS table indicator information;
time domain resource configuration information;
PSFCH overhead indication information;
MCS indication information; and format of the second-stage SCI.

Optionally, information about the second-stage SCI includes at least one of the following:

HARQ process number;

new data indicator;
redundancy version;
identification information of the first terminal;
identification information of the second terminal;
HARQ feedback enabled indicator information;
HARQ feedback disabled indicator information;
cast type indicator;
channel state information CSI request;
time interval;
period of the target sidelink positioning reference signal;
repetition count indication information for the target sidelink positioning reference signal; and
duration information for the target sidelink positioning reference signal.

Optionally, information about the second-stage SCI includes at least one of the following:

zone ID;
communication range information;
identification information of the first terminal;
identification information of the second terminal;
location information of the first terminal;
location information of the second terminal;
measurement request information;
measurement feedback information;
time interval;
period of the target sidelink positioning reference signal;
repetition count indication information for the target sidelink positioning reference signal; and
duration information for the target sidelink positioning reference signal.

In this embodiment of this application, the first terminal performs the scheduling operation on the target sidelink positioning reference signal according to the first sidelink positioning reference signal configuration information sent by the network-side device, and provides a scheme related to signal scheduling during the sidelink positioning, so as to implement sidelink positioning.

It should be noted that the terminal in this embodiment of this application can implement all the steps implemented in the foregoing method embodiment applied to the first terminal, with the same technical effects achieved. Details are not repeated herein.

An embodiment of this application further provides a network-side device, including a processor and a communication interface, where the communication interface is configured to send first sidelink positioning reference signal configuration information to a first terminal, where the first terminal is a transmit terminal or a receive terminal of a target sidelink positioning reference signal. The network-side device embodiments correspond to the foregoing network-side device method embodiments, and the implementation processes and implementations of the foregoing method embodiments can be applied to the network-side device embodiments, with the same technical effects achieved.

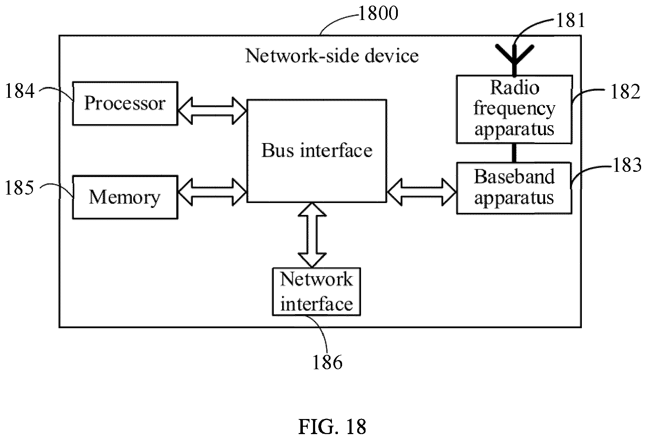

Specifically, an embodiment of this application further provides a network-side device. As shown in FIG. 18, the network-side device 1800 includes an antenna 181, a radio frequency apparatus 182, a baseband apparatus 183, a processor 184, and a memory 185. The antenna 181 is connected to the radio frequency apparatus 182. In an uplink direction, the radio frequency apparatus 182 receives information by using the antenna 181, and sends the received information to the baseband apparatus 183 for processing. In a downlink direction, the baseband apparatus 183 processes to-be-sent information, and sends the information to the radio frequency apparatus 182; and the radio frequency apparatus 182 processes the received information and then sends the information out by using the antenna 181.

The method executed by the network-side device in the foregoing embodiments can be implemented in the baseband apparatus 183, and the baseband apparatus 183 includes a baseband processor.

The baseband apparatus 183 may include, for example, at least one baseband board, where a plurality of chips are disposed on the baseband board. As shown in FIG. 18, one of the chips is, for example, a baseband processor, and is connected to the memory 185 through the bus interface, to invoke a program in the memory 185 to perform the operations of the network device shown in the foregoing method embodiments.

The network-side device may further include a network interface 186, where the interface is, for example, a common public radio interface (common public radio interface, CPRI).

Specifically, the network-side device 1800 in this embodiment of the present invention further includes: instructions or a program stored in the memory 185 and capable of running on the processor 184. The processor 184 invokes the instructions or program in the memory 185 to execute the method executed by the modules shown in FIG. 14, with the same technical effects achieved. To avoid repetition, details are not repeated herein.

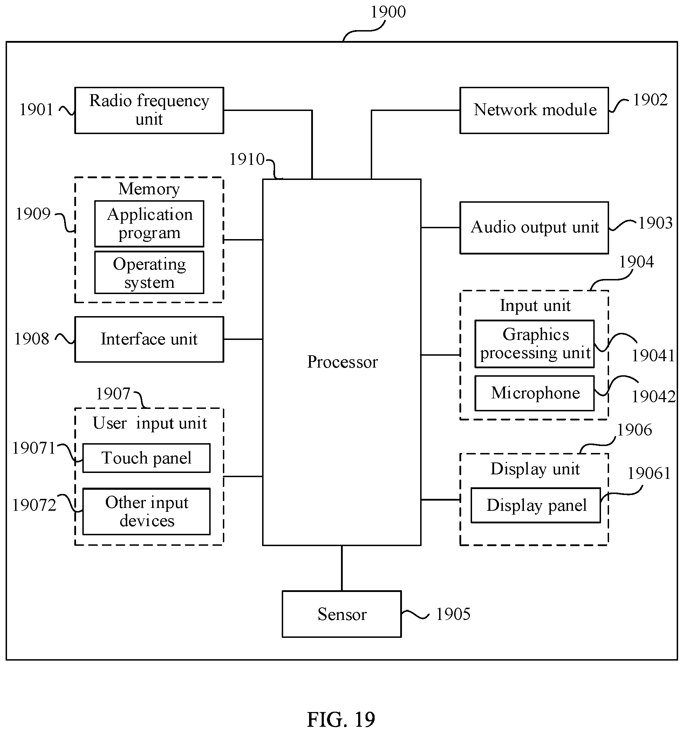

An embodiment of this application further provides a terminal, where the terminal is a second terminal and includes a processor and a communication interface, and the communication interface is configured to exchange sidelink positioning reference signal configuration information with a network-side device; and/or exchange sidelink positioning reference signal configuration information with a first terminal; where the first terminal is a transmit terminal or a receive terminal of a target sidelink positioning reference signal, and the second terminal is a peer terminal of the first terminal. The terminal embodiments correspond to the foregoing method embodiments applied to the second terminal, and the implementation processes and implementations of the foregoing method embodiments can be applied to the terminal embodiments, with the same technical effects achieved. Specifically, FIG. 19 is a schematic diagram of a hardware structure of a terminal for implementing the embodiments of this application.

The terminal 1900 is a second terminal, includes but not limited to at least part of components such as a radio frequency unit 1901, a network module 1902, an audio output unit 1903, an input unit 1904, a sensor 1905, a display unit 1906, a user input unit 1907, an interface unit 1908, a memory 1909, and a processor 1910.

Persons skilled in the art can understand that the terminal 1900 may further include a power supply (for example, a battery) supplying power to the components, and the power supply may be logically connected to the processor 1910 through a power management system. In this way, functions such as charge management, discharge management, and power consumption management are implemented by using the power management system. The structure of the terminal shown in FIG. 19 does not constitute any limitation on the terminal. The terminal may include more or fewer components than shown in the figure, or a combination of some components, or the components disposed differently. Details are not described herein again.

It can be understood that in this embodiment of this application, the input unit 1904 may include a graphics processing unit (Graphics Processing Unit, GPU) 19041 and a microphone 19042. The graphics processing unit 19041 processes image data of a still picture or video obtained by an image capture apparatus (such as a camera) in a video capture mode or an image capture mode. The display unit 1906 may include a display panel 19061, and the display panel 19061 may be configured in a form of a liquid crystal display, an organic light-emitting diode, and the like. The user input unit 1907 may include at least one of a touch panel 19071 and other input devices 19072. The touch panel 19071 is also referred to as a touchscreen. The touch panel 19071 may include two parts: a touch detection apparatus and a touch controller. The other input devices 19072 may include but are not limited to a physical keyboard, a function key (such as a volume control key or a power on/off key), a trackball, a mouse, a joystick, and the like. Details are not described herein.

In this embodiment of this application, the radio frequency unit 1901 receives downlink data from a network-side device, and then sends the downlink data to the processor 1910 for processing. In addition, the radio frequency unit 1901 may send uplink data to the network-side device. Generally, the radio frequency unit 1901 includes but is not limited to an antenna, an amplifier, a transceiver, a coupler, a low noise amplifier, a duplexer, and the like.

The memory 1909 may be configured to store software programs or instructions and various data. The memory 1909 may include a first storage area for storing a program or instructions and a second storage area for storing data. The first storage area may store an operating system, an application program or instruction required by at least one function (for example, a sound playback function or an image playback function), and the like. In addition, the memory 1909 may include a volatile memory or a non-volatile memory, or the memory 1909 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 1909 in the embodiments of this application includes but is not limited to these and any other suitable types of memories.

The processor 1910 may include one or more processing units. Optionally, an application processor and a modem processor may be integrated in the processor 1910. This application processor primarily processes operations involving an operating system, user interfaces, application programs, and the like. The modem processor primarily processes radio communication signals, for example, being a baseband processor. It can be understood that the modem processor may alternatively be not integrated in the processor 1910.

The radio frequency unit 1901 is configured to exchange first sidelink positioning reference signal configuration information with a network-side device; and/or exchange second sidelink positioning reference signal configuration information with a first terminal.

The first terminal is a transmit terminal or a receive terminal of a target sidelink positioning reference signal, and the second terminal is a peer terminal of the first terminal.

In this embodiment of this application, the second terminal exchanges the first sidelink positioning reference signal configuration information with the network-side device, and/or the second terminal exchanges the second sidelink positioning reference signal configuration information with the first terminal, so that the first terminal and/or the network-side device can perform the scheduling operation on the target sidelink positioning reference signal according to the configuration information for the sidelink positioning reference signal, so as to implement sidelink positioning.

Optionally, the first terminal is a target terminal for which location information is to be determined, and the location information includes at least one of the following:

relative location information;
absolute location information;
relative distance information; and
SL measurement result; where
the SL measurement result includes information obtained through measurement on the target sidelink positioning reference signal.

Optionally, the radio frequency unit is specifically configured to perform at least one of the following operations:

receiving the first sidelink positioning reference signal configuration information sent by the network-side device; and
sending the first sidelink positioning reference signal configuration information to the network-side device.

Optionally, the radio frequency unit is specifically configured to perform at least one of the following operations:

receiving second sidelink positioning reference signal configuration information sent by the first terminal; and
sending the first sidelink positioning reference signal configuration information to the first terminal.

Optionally, when receiving the first sidelink positioning reference signal configuration information sent by the network-side device, the radio frequency unit is specifically configured to:

sending configuration request information for a sidelink positioning reference signal to the network-side device; and
receiving the first sidelink positioning reference signal configuration information sent by the network-side device based on the configuration request information.

Optionally, when sending the first sidelink positioning reference signal configuration information to the network-side device, the radio frequency unit is specifically configured to:

receiving configuration request information for a sidelink positioning reference signal from the network-side device; and
sending response information to the network-side device based on the configuration request information, where the response information includes the first sidelink positioning reference signal configuration information.

Optionally, the radio frequency unit is further configured to receive SL measurement request information sent by the network-side device; and
the processor is further configured to perform measurement on the target sidelink positioning reference signal according to the first sidelink positioning reference signal configuration information and/or the SL measurement request information to obtain an SL measurement result.

Optionally, the radio frequency unit is further configured to receive SL measurement request information sent by the first terminal; and
perform measurement on the target sidelink positioning reference signal according to the second sidelink positioning reference signal configuration information and/or the SL measurement request information to obtain an SL measurement result.

Optionally, the radio frequency unit is further configured to send the SL measurement result to the first terminal and/or the network-side device.

Optionally, the radio frequency unit is further configured to receive an SL measurement result sent by the first terminal.

Optionally, the radio frequency unit is further configured to perform at least one of the following operations:

receiving scheduling information for the target sidelink positioning reference signal from the first terminal and/or the network-side device; and
sending the scheduling information for the target sidelink positioning reference signal to the first terminal.

In this embodiment of this application, the second terminal exchanges the first sidelink positioning reference signal configuration information with the network-side device, and/or the second terminal exchanges the second sidelink positioning reference signal configuration information with the first terminal, so that the first terminal and/or the network-side device can perform the scheduling operation on the target sidelink positioning reference signal according to the configuration information for the sidelink positioning reference signal, so as to implement sidelink positioning.

An embodiment of this application further provides a readable storage medium, where a program or instructions are stored in the readable storage medium. When the program or the instructions are executed by a processor, the processes of the foregoing embodiment of the sidelink positioning signal scheduling method described above can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing sidelink positioning signal scheduling method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a readable storage medium, and when being executed by at least one processor, the computer program product is configured to implement the processes of the foregoing sidelink positioning signal scheduling method embodiments, with the same technical effects achieved. To avoid repetition, details are not repeated herein.

An embodiment of this application further provides a sidelink positioning signal scheduling system, including a terminal and a network-side device, where the terminal includes a first terminal and a second terminal; the first terminal may be configured to perform the steps of the sidelink positioning signal scheduling method applied to the first terminal; the second terminal may be configured to perform the steps of the sidelink positioning signal scheduling method applied to the second terminal; and the network-side device may be configured to perform the sidelink positioning signal scheduling method applied to the network-side device.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A sidelink positioning signal scheduling method, comprising:

   receiving, by a first terminal, first sidelink positioning reference signal configuration information sent by a network-side device; and
   performing, by the first terminal, a scheduling operation on a target sidelink positioning reference signal according to the first sidelink positioning reference signal configuration information; wherein
   the first terminal is a transmit terminal or a receive terminal of the target sidelink positioning reference signal.

2. The method according to claim 1, wherein the first terminal is a target terminal for which location information is to be determined, and the location information comprises at least one of the following:

   relative location information;
   absolute location information;
   relative distance information; and
   SL measurement result; wherein
   the SL measurement result comprises information obtained through measurement on the target sidelink positioning reference signal.

3. The method according to claim 1 or 2, wherein the performing a scheduling operation on a target sidelink positioning reference signal according to the first sidelink positioning reference signal configuration information comprises:
   sending the target sidelink positioning reference signal according to the first sidelink positioning reference signal configuration information.

4. The method according to claim 3, wherein the performing a scheduling operation on a target sidelink positioning reference signal according to the first sidelink positioning reference signal configuration information further comprises at least one of the following operations:

   sending second sidelink positioning reference signal configuration information to a second terminal;
   sending SL measurement request information to the second terminal;
   receiving an SL measurement result sent by the second terminal;
   sending an SL measurement result to the network-side device; and
   sending location information of the first terminal to the network-side device; wherein
   the second terminal is a receive terminal of the target sidelink positioning reference signal.

5. The method according to claim 1, wherein in a case that the first terminal is a receive terminal of the target sidelink positioning reference signal, the receiving first sidelink positioning reference signal configuration information comprises:

   receiving the first sidelink positioning reference signal configuration information sent by the network-side device; and
   the performing a scheduling operation on a target sidelink positioning reference signal according to the first sidelink positioning reference signal configuration information comprises:
   performing measurement on the target sidelink positioning reference signal according to the first sidelink positioning reference signal configuration information to obtain an SL measurement result.

6. The method according to claim 1, wherein the method further comprises:

   receiving second sidelink positioning reference signal configuration information sent by a second terminal or a third terminal; and/or
   performing a scheduling operation on the target sidelink positioning reference signal according to the second sidelink positioning reference signal configuration information; wherein
   the third terminal is a scheduling terminal other than a transmit terminal and a receive terminal of the target sidelink positioning reference signal.

7. The method according to claim 6, wherein the performing a scheduling operation on the target sidelink positioning reference signal according to the second sidelink positioning reference signal configuration information comprises at least one of the following operations:

performing measurement on the target sidelink positioning reference signal according to the second sidelink positioning reference signal configuration information to obtain an SL measurement result;
sending the target sidelink positioning reference signal according to the second sidelink positioning reference signal configuration information;
sending the SL measurement result to the second terminal;
sending the SL measurement result to the network-side device; and
sending location information of the first terminal to the network-side device.

8. The method according to claim 1, wherein the first sidelink positioning reference signal configuration information comprises at least one of the following:

identification information of the first terminal;
identification information of a second terminal;
parameter information for a sidelink positioning reference signal; and
configuration information for a pre-configured sidelink positioning reference signal set.

9. The method according to claim 8, wherein the configuration information for the pre-configured sidelink positioning reference signal set comprises at least one of the following:

identification information of the sidelink positioning reference signal set;
state information of the sidelink positioning reference signal set;
parameter information for sidelink positioning reference signals in the sidelink positioning reference signal set; and
quantity information of sidelink positioning reference signals in the sidelink positioning reference signal set.

10. The method according to claim 4, wherein the second sidelink positioning reference signal configuration information comprises at least one of the following:

identification information of a terminal;
location information of a terminal;
antenna information of a terminal; and
parameter information for a sidelink positioning reference signal.

11. The method according to any one of claims 8 to 10, wherein the target sidelink positioning reference signal is at least one of the following:

a sidelink positioning reference signal;
a sidelink positioning reference signal selected from a plurality of sidelink positioning reference signals;
a sidelink positioning reference signal set selected from a plurality of sidelink positioning reference signal sets; and
a sidelink positioning reference signal selected from a selected sidelink positioning reference signal set.

12. The method according to claim 4, wherein the sending second sidelink positioning reference signal configuration information to a second terminal comprises:
sending first SL positioning assistance information to the second terminal, wherein the first SL positioning assistance information comprises the second sidelink positioning reference signal configuration information.

13. The method according to claim 1, wherein a type of the target sidelink positioning reference signal comprises at least one of the following:

periodic sidelink positioning reference signal;
semi-static sidelink positioning reference signal;
aperiodic sidelink positioning reference signal; and
on-demand sidelink positioning reference signal.

14. The method according to any one of claims 8 to 10, wherein the parameter information for the sidelink positioning reference signal comprises at least one of the following:

identification information of the sidelink positioning reference signal;
resource pool information associated with the sidelink positioning reference signal;
bandwidth part BWP information associated with the sidelink positioning reference signal;
radio network temporary identifier RNTI of the sidelink positioning reference signal;
period information for the sidelink positioning reference signal;
first time domain offset information for the sidelink positioning reference signal;
first reference time information for the sidelink positioning reference signal;
start time information for the sidelink positioning reference signal;
end time information for the sidelink positioning reference signal;
frequency domain information for the sidelink positioning reference signal;
sequence information for the sidelink positioning reference signal; and
the number of resource repetitions of the sidelink positioning reference signal.

15. The method according to claim 14, wherein the parameter information for the sidelink positioning reference signal further comprises:
type information for the sidelink positioning reference signal.

16. The method according to claim 1, wherein the first sidelink positioning reference signal configuration information is carried by one of the following information:

downlink control information DCI;
a media access control control element MAC CE;
radio resource control RRC; and
LTE positioning protocol LPP.

17. The method according to claim 4 or 6, wherein the second sidelink positioning reference signal configuration information is carried by one of the following information:

sidelink control information SCI;
PC5-MAC CE;
PC5-RRC; and
PC5-LPP.

18. The method according to claim 16, wherein in a case that the first sidelink positioning reference signal configuration information is carried by DCI, a format of the DCI comprises at least one of the following:

DCI 3-0;
DCI 3-1; and
DCI 3-x.

19. The method according to claim 16, wherein in a case that the first sidelink positioning reference signal configuration information is carried by DCI, the DCI is used to indicate at least one of the following information:

resource pool indication information;
BWP indication information;
time interval;
lowest position of a subchannel;
frequency domain resource configuration information for a sidelink positioning reference signal;
time domain resource configuration information for a sidelink positioning reference signal;
repetition count indication information for a sidelink positioning reference signal;
duration information for a sidelink positioning reference signal; and
identification information of a sidelink positioning reference signal.

20. The method according to claim 17, wherein in a case that the second sidelink positioning reference signal configuration information is carried by SCI, a format of the SCI comprises at least one of the following information:

information about first-stage SCI; and
information about second-stage SCI.

21. The method according to claim 20, wherein information about the SCI comprises at least one of the following:

priority information for a sidelink positioning reference signal;
frequency domain resource configuration information for a sidelink positioning reference signal;
time domain resource configuration information for a sidelink positioning reference signal;
a time interval between SCI and sending of a sidelink positioning reference signal;
scheduling indication information for a sidelink positioning reference signal; and
transmission indication information for a sidelink positioning reference signal.

22. The method according to claim 20, wherein information about the second-stage SCI comprises at least one of the following:

hybrid automatic repeat request HARQ process number;
new data indicator;
redundancy version;
identification information of the first terminal;
identification information of the second terminal;
HARQ feedback enabled indicator information;
HARQ feedback disabled indicator information;
cast type indicator;
channel state information CSI request;
time interval;
period of a sidelink positioning reference signal;
repetition count indication information for a sidelink positioning reference signal; and
duration information for a sidelink positioning reference signal.

23. The method according to claim 20, wherein information about the second-stage SCI comprises at least one of the following:

zone ID;
communication range information;
identification information of the first terminal;
identification information of the second terminal;
location information of the first terminal;
location information of the second terminal;
measurement request information;
measurement feedback information;
time interval;
period of a sidelink positioning reference signal;
repetition count indication information for a sidelink positioning reference signal; and
duration information for a sidelink positioning reference signal.

24. The method according to any one of claims 4, 6, 12, and 17, wherein the first sidelink positioning reference signal configuration information and the second sidelink positioning reference signal configuration information indicate same transmission information for a sidelink positioning reference signal; and
the transmission information comprises at least one of the following: a transmission time, a transmission frequency domain position, a transmission period, and identification information of the sidelink positioning reference signal.

25. The method according to claim 24, wherein in a case that the first sidelink positioning reference signal configuration information is carried by DCI and the second sidelink positioning reference signal configuration information is carried by SCI, the first sidelink positioning reference signal configuration information carried by DCI and the second sidelink positioning reference signal configuration information carried by SCI indicate same transmission information for the sidelink positioning reference signal.

26. The method according to any one of claims 8 to 10, wherein the method further comprises:

sending request information for the parameter information for the sidelink positioning reference signal; wherein the request information comprises at least one of the following:

identification information of a pre-configured sidelink positioning reference signal;
on/off indication information;
start time information for the sidelink positioning reference signal;
end time information for the sidelink positioning reference signal; and
duration information for the sidelink positioning reference signal.

27. The method according to claim 26, wherein the request information comprises one of the following:

request information associated with identification information of a terminal;
request information associated with identification information of a panel or antenna of a terminal;
request information associated with identification information of a transmit terminal;
request information associated with a carrier of a transmit terminal;
request information associated with a frequency domain range of a transmit terminal;
request information associated with a resource or resource set of a transmit terminal; and
request information associated with a sidelink positioning reference signal of a transmit terminal.

28. The method according to claim 26, wherein the method further comprises:

determining the start time information for the sidelink positioning reference signal according to target characteristic information; wherein
the target characteristic information comprises at least one of the following:

period information;
terminal quantity information;
zone identification information;
location information of a target terminal;
serving cell information for a target terminal;
zone identification information for a target terminal;
group information of a target terminal;
identification information of the first terminal;
identification information of the second terminal;
quantity information of the first terminal;
quantity information of the second terminal;
on/off indication information for the first terminal;
on/off indication information for the second terminal;
start time information for the first terminal;
end time information for the first terminal;
duration information for the first terminal;
start time information for the second terminal;
end time information for the second terminal;
duration information for the second terminal; and
frequency information.

29. The method according to claim 1, wherein the method further comprises:

receiving scheduling information for the target sidelink positioning reference signal; and
performing a scheduling operation on the target sidelink positioning reference signal according to the scheduling information for the target sidelink positioning reference signal.

30. The method according to claim 29, wherein the receiving scheduling information for the target sidelink positioning reference signal comprises at least one of the following:

receiving scheduling information for the target sidelink positioning reference signal from a second terminal; and
receiving scheduling information for the target sidelink positioning reference signal from the network-side device.

31. The method according to claim 29, wherein the performing a scheduling operation on the target sidelink positioning reference signal according to the scheduling information for the target sidelink positioning reference signal comprises at least one of the following operations:

sending the target sidelink positioning reference signal according to the scheduling information for the target sidelink positioning reference signal;

scheduling, according to the scheduling information for the target sidelink positioning reference signal, a second terminal to perform measurement on the target sidelink positioning reference signal;

sending the scheduling information for the target sidelink positioning reference signal to the second terminal according to the scheduling information for the target sidelink positioning reference signal; and

scheduling, according to the scheduling information for the target sidelink positioning reference signal, the second terminal to send the target sidelink positioning reference signal.

32. The method according to claim 29, wherein the scheduling information for the target sidelink positioning reference signal comprises at least one of the following:

identification information of the first terminal;

identification information of a second terminal;

location information of the first terminal;

location information of the second terminal;

antenna information of the first terminal;

antenna information of the second terminal;

identification information of the target sidelink positioning reference signal;

parameter information for the target sidelink positioning reference signal; and

identification information of a target sidelink positioning reference signal set.

33. The method according to claim 32, wherein the parameter information for the target sidelink positioning reference signal comprises at least one of the following:

resource pool information associated with the target sidelink positioning reference signal;

BWP information associated with the target sidelink positioning reference signal;

RNTI of the target sidelink positioning reference signal;

period information for the target sidelink positioning reference signal;

first time domain offset information for the target sidelink positioning reference signal;

first reference time information for the target sidelink positioning reference signal;

start time information for the target sidelink positioning reference signal;

end time information for the target sidelink positioning reference signal;

frequency domain information for the target sidelink positioning reference signal;

sequence information for the target sidelink positioning reference signal; and

the number of resource repetitions for the target sidelink positioning reference signal.

34. The method according to claim 29, wherein the scheduling information for the target sidelink positioning reference signal is carried by one of the following information:

DCI;

MAC CE;

RRC;

LPP;

PC5;

PC5-RRC;

PC5-MAC CE;

SCI; and

physical sidelink shared channel PSSCH.

35. The method according to claim 34, wherein in a case that the scheduling information for the target sidelink positioning reference signal is carried by DCI, the DCI is used to indicate at least one of the following information:

resource pool indication information;

BWP indication information;

transmission indication information for the target sidelink positioning reference signal;

time interval between the target sidelink positioning reference signal and DCI; lowest position of a transmission subchannel for the target sidelink positioning reference signal;

frequency domain resource configuration information for the target sidelink positioning reference signal;

time domain resource configuration information for the target sidelink positioning reference signal;

repetition count indication information for the target sidelink positioning reference signal;

duration information for the target sidelink positioning reference signal; and

identification information of the target sidelink positioning reference signal.

36. The method according to claim 34, wherein in a case that the scheduling information for the target sidelink positioning reference signal is carried by SCI, a format of the SCI comprises at least one of the following information:

information about first-stage SCI; and

information about second-stage SCI.

37. The method according to claim 36, wherein information about the SCI comprises at least one of the following:

priority information for the target sidelink positioning reference signal;

frequency domain resource configuration information for the target sidelink positioning reference signal;

time domain resource configuration information for the target sidelink positioning reference signal;

a time interval between SCI and sending of the target sidelink positioning reference signal;

scheduling indication information for the target sidelink positioning reference signal; and

transmission indication information for the target sidelink positioning reference signal.

38. The method according to claim 20 or 36, wherein a target information bit of the first-stage SCI is a first value, and the first value is used to indicate a scheduling or measurement request for the target sidelink positioning reference signal; and

target information of the first-stage SCI comprises at least one of the following:

reserved information bit;

additional MCS table indicator information;

time domain resource configuration information;

PSFCH overhead indication information;

MCS indication information; and

format of the second-stage SCI.

39. The method according to claim 36, wherein information about the second-stage SCI comprises at least one of the following:

HARQ process number;

new data indicator;

redundancy version;

identification information of the first terminal;

identification information of the second terminal;

HARQ feedback enabled indicator information;

HARQ feedback disabled indicator information;

cast type indicator;

channel state information CSI request;

time interval;

period of the target sidelink positioning reference signal;

repetition count indication information for the target sidelink positioning reference signal; and

duration information for the target sidelink positioning reference signal.

40. The method according to claim 36, wherein information about the second-stage SCI comprises at least one of the following:

zone ID;

communication range information;
identification information of the first terminal;
identification information of the second terminal;
location information of the first terminal;
location information of the second terminal;
measurement request information;
measurement feedback information;
time interval;
period of the target sidelink positioning reference signal;
repetition count indication information for the target sidelink positioning reference signal; and
duration information for the target sidelink positioning reference signal.

41. A sidelink positioning signal scheduling method, comprising:

sending, by a network-side device, first sidelink positioning reference signal configuration information to a first terminal; wherein
the first terminal is a transmit terminal or a receive terminal of a target sidelink positioning reference signal.

42. The method according to claim 41, wherein the first terminal is a target terminal for which location information is to be determined, and the location information comprises at least one of the following:

relative location information;
absolute location information;
relative distance information; and
SL measurement result; wherein
the SL measurement result comprises information obtained through measurement on the target sidelink positioning reference signal.

43. The method according to claim 41, wherein the method further comprises at least one of the following operations:

sending SL measurement request information to a second terminal;
receiving an SL measurement result sent by the second terminal;
receiving an SL measurement result sent by the first terminal;
receiving location information of the first terminal sent by the first terminal; and
sending SL measurement request information to the first terminal.

44. The method according to claim 41, wherein the method further comprises:

obtaining first sidelink positioning reference signal configuration information; and/or
sending the first sidelink positioning reference signal configuration information to a second terminal.

45. The method according to claim 44, wherein the obtaining first sidelink positioning reference signal configuration information comprises one of the following:

receiving the first sidelink positioning reference signal configuration information sent by the second terminal; and
sending configuration request information for a sidelink positioning reference signal to the second terminal, and receiving response information sent by the second terminal according to the configuration request information, wherein the response information comprises the first sidelink positioning reference signal configuration information.

46. The method according to claim 44, wherein the sending the first sidelink positioning reference signal configuration information to a second terminal comprises:

receiving configuration request information for a sidelink positioning reference signal from the second terminal; and
sending the first sidelink positioning reference signal configuration information to the second terminal according to the configuration request information.

**47.** The method according to claim 41, wherein the first sidelink positioning reference signal configuration information comprises at least one of the following:

identification information of the first terminal;
identification information of a second terminal;
parameter information for a sidelink positioning reference signal; and
configuration information for a pre-configured sidelink positioning reference signal set.

**48.** The method according to claim 47, wherein the configuration information for the pre-configured sidelink positioning reference signal set comprises at least one of the following:

identification information of the sidelink positioning reference signal set;
state information of the sidelink positioning reference signal set;
parameter information for sidelink positioning reference signals in the sidelink positioning reference signal set; and
quantity information of sidelink positioning reference signals in the sidelink positioning reference signal set.

**49.** The method according to claim 47 or 48, wherein the target sidelink positioning reference signal is at least one of the following:

a sidelink positioning reference signal;
a sidelink positioning reference signal selected from a plurality of sidelink positioning reference signals;
a first sidelink positioning reference signal set selected from a plurality of sidelink positioning reference signal sets; and
a sidelink positioning reference signal selected from a selected first sidelink positioning reference signal set.

**50.** The method according to claim 47 or 48, wherein the parameter information for the sidelink positioning reference signal comprises at least one of the following:

identification information of the sidelink positioning reference signal;
resource pool information associated with the sidelink positioning reference signal;
bandwidth part BWP information associated with the sidelink positioning reference signal;
radio network temporary identifier RNTI of the sidelink positioning reference signal;
period information for the sidelink positioning reference signal;
first time domain offset information for the sidelink positioning reference signal;
first reference time information for the sidelink positioning reference signal;
start time information for the sidelink positioning reference signal;
end time information for the sidelink positioning reference signal;
frequency domain information for the sidelink positioning reference signal;
sequence information for the sidelink positioning reference signal; and
the number of resource repetitions of the sidelink positioning reference signal.

**51.** The method according to claim 41, wherein the first sidelink positioning reference signal configuration information is carried by one of the following information:

downlink control information DCI;
a media access control control element MAC CE;
radio resource control RRC; and
LTE positioning protocol LPP.

**52.** The method according to claim 51, wherein the sending first sidelink positioning reference signal configuration information to a first terminal comprises:

sending the first sidelink positioning reference signal configuration information to the first terminal by using DCI; wherein
the DCI format comprises at least one of the following:

DCI 3-0;

DCI 3-1; and
DCI 3-x.

53. The method according to claim 51, wherein the sending first sidelink positioning reference signal configuration information to a first terminal comprises:
sending the first sidelink positioning reference signal configuration information to the first terminal by using DCI, wherein the DCI is used to indicate at least one of the following information:

> resource pool indication information;
> BWP indication information;
> time interval;
> lowest position of a subchannel;
> frequency domain resource configuration information for a sidelink positioning reference signal;
> time domain resource configuration information for a sidelink positioning reference signal;
> repetition count indication information for a sidelink positioning reference signal;
> duration information for a sidelink positioning reference signal; and
> identification information of a sidelink positioning reference signal.

54. The method according to claim 47 or 48, wherein the method further comprises:
receiving request information for the parameter information for the sidelink positioning reference signal, wherein the request information comprises at least one of the following:

> identification information of a pre-configured sidelink positioning reference signal;
> on/off indication information;
> start time information for the sidelink positioning reference signal;
> end time information for the sidelink positioning reference signal; and
> duration information for the sidelink positioning reference signal.

55. The method according to claim 54, wherein the request information comprises one of the following:

> request information associated with identification information of a terminal;
> request information associated with identification information of a panel or antenna of a terminal;
> request information associated with identification information of a transmit terminal;
> request information associated with a carrier of a transmit terminal;
> request information associated with a frequency domain range of a transmit terminal;
> request information associated with a resource or resource set of a transmit terminal; and
> request information associated with a sidelink positioning reference signal of a transmit terminal.

56. The method according to claim 41, wherein the method further comprises:
sending scheduling information for the target sidelink positioning reference signal to the first terminal and/or a second terminal.

57. The method according to claim 56, wherein the scheduling information for the target sidelink positioning reference signal comprises at least one of the following:

> identification information of the first terminal;
> identification information of a second terminal;
> location information of the first terminal;
> location information of the second terminal;
> antenna information of the first terminal;
> antenna information of the second terminal;
> identification information of the target sidelink positioning reference signal;
> parameter information for the target sidelink positioning reference signal; and
> identification information of a target sidelink positioning reference signal set.

58. The method according to claim 56 or 57, wherein the scheduling information for the target sidelink positioning reference signal comprises at least one of the following information:

resource pool indication information;

BWP indication information;

transmission indication information for the target sidelink positioning reference signal;

time interval between the target sidelink positioning reference signal and DCI;

lowest position of a transmission subchannel for the target sidelink positioning reference signal;

frequency domain resource configuration information for the target sidelink positioning reference signal;

time domain resource configuration information for the target sidelink positioning reference signal;

repetition count indication information for the target sidelink positioning reference signal;

duration information for the target sidelink positioning reference signal; and

identification information of the target sidelink positioning reference signal.

59. A sidelink positioning signal scheduling method, comprising:

exchanging, by a second terminal, first sidelink positioning reference signal configuration information with a network-side device; and/or

exchanging, by the second terminal, second sidelink positioning reference signal configuration information with a first terminal; wherein

the first terminal is a transmit terminal or a receive terminal of a target sidelink positioning reference signal, and the second terminal is a peer terminal of the first terminal.

60. The method according to claim 59, wherein the first terminal is a target terminal for which location information is to be determined, and the location information comprises at least one of the following:

relative location information;

absolute location information;

relative distance information; and

SL measurement result; wherein

the SL measurement result comprises information obtained through measurement on the target sidelink positioning reference signal.

61. The method according to claim 59, wherein the exchanging first sidelink positioning reference signal configuration information with a network-side device comprises at least one of the following operations:

receiving first sidelink positioning reference signal configuration information sent by the network-side device; and

sending the first sidelink positioning reference signal configuration information to the network-side device.

62. The method according to claim 59, wherein the exchanging second sidelink positioning reference signal configuration information with a first terminal comprises at least one of the following operations:

receiving second sidelink positioning reference signal configuration information sent by the first terminal; and

sending the second sidelink positioning reference signal configuration information to the first terminal.

63. The method according to claim 61, wherein the receiving first sidelink positioning reference signal configuration information sent by the network-side device comprises:

sending configuration request information for a sidelink positioning reference signal to the network-side device; and

receiving the first sidelink positioning reference signal configuration information sent by the network-side device based on the configuration request information.

64. The method according to claim 61, wherein the sending the first sidelink positioning reference signal configuration information to the network-side device comprises:

receiving configuration request information for a sidelink positioning reference signal from the network-side device; and

sending response information to the network-side device based on the configuration request information, wherein the response information comprises the first sidelink positioning reference signal configuration information.

**65.** The method according to claim 61, wherein the method further comprises:

receiving SL measurement request information sent by the network-side device; and
performing measurement on the target sidelink positioning reference signal according to the first sidelink positioning reference signal configuration information and/or the SL measurement request information to obtain an SL measurement result.

**66.** The method according to claim 62, wherein the method further comprises:

receiving SL measurement request information sent by the first terminal; and
performing measurement on the target sidelink positioning reference signal according to the second sidelink positioning reference signal configuration information and/or the SL measurement request information to obtain an SL measurement result.

**67.** The method according to claim 65 or 66, wherein the method further comprises:
sending the SL measurement result to the first terminal and/or the network-side device.

**68.** The method according to claim 62, wherein the method further comprises:
receiving an SL measurement result sent by the first terminal.

**69.** The method according to claim 59, wherein the method further comprises at least one of the following operations:

receiving scheduling information for the target sidelink positioning reference signal from the first terminal and/or the network-side device; and
sending the scheduling information for the target sidelink positioning reference signal to the first terminal.

**70.** A sidelink positioning signal scheduling apparatus, applied to a first terminal and comprising:

a first receiving module, configured to receive first sidelink positioning reference signal configuration information sent by a network-side device; and
a first processing module, configured to perform a scheduling operation on a target sidelink positioning reference signal according to the first sidelink positioning reference signal configuration information; wherein
the first terminal is a transmit terminal or a receive terminal of the target sidelink positioning reference signal.

**71.** A sidelink positioning signal scheduling apparatus, applied to a network-side device and comprising:

a first sending module, configured to send first sidelink positioning reference signal configuration information to a first terminal; wherein
the first terminal is a transmit terminal or a receive terminal of a target sidelink positioning reference signal.

**72.** A sidelink positioning signal scheduling apparatus, applied to a second terminal and comprising:

a first information exchange module, configured to exchange first sidelink positioning reference signal configuration information with a network-side device; and
a second information exchange module, configured to exchange second sidelink positioning reference signal configuration information with a first terminal; wherein
the first terminal is a transmit terminal or a receive terminal of a target sidelink positioning reference signal, and the second terminal is a peer terminal of the first terminal.

**73.** A terminal, comprising a processor and a memory, wherein the memory stores a program or instructions capable of running on the processor; and when the program or the instructions are executed by the processor, the steps of the sidelink positioning signal scheduling method according to any one of claims 1 to 40 are implemented.

**74.** A network-side device, comprising a processor and a memory, wherein the memory stores a program or instructions capable of running on the processor; and when the program or the instructions are executed by the processor, the steps of the sidelink positioning signal scheduling method according to any one of claims 41 to 58 are implemented.

**75.** A terminal, comprising a processor and a memory, wherein the memory stores a program or instructions capable of running on the processor; and when the program or the instructions are executed by the processor, the steps of the sidelink positioning signal scheduling method according to any one of claims 59 to 69 are implemented.

76. A readable storage medium, wherein a program or instructions are stored in the readable storage medium; and when the program or the instructions are executed by a processor, the steps of the sidelink positioning signal scheduling method according to any one of claims 1 to 40 are implemented; the steps of the sidelink positioning signal scheduling method according to any one of claims 41 to 58 are implemented; and the steps of the sidelink positioning signal scheduling method according to any one of claims 59 to 69 are implemented.

FIG. 1

Start

A first terminal receives first sidelink positioning reference signal configuration information sent by a network-side device

201

The first terminal performs a scheduling operation on a target sidelink positioning reference signal according to the first sidelink positioning reference signal configuration information

202

End

FIG. 2

FIG. 3

| Network-side device | First terminal/target terminal/transmit terminal | | Second terminal/recei ve terminal |
|---|---|---|---|

Send first sidelink positioning reference signal configuration information to the first terminal

Send a target sidelink positioning reference signal

Send second sidelink positioning reference signal configuration information and/or SL measurement request information to the second terminal

Perform measurement on the target sidelink positioning reference signal

Feed back an SL measurement result and/or location information of the first terminal and/or HARQ information to the first terminal

Feed back the SL measurement result and/or the location information of the first terminal and/or HARQ information to the network-side device

FIG. 4

Second terminal

Schedule the second terminal to perform measurement on an SL PRS signal

Schedule the first terminal to send an SL PRS signal

First terminal

FIG. 5

Second terminal/receive terminal

Network-side device

First terminal/target terminal/transmit terminal

Send first sidelink positioning reference signal configuration information to the first terminal

Send first sidelink positioning reference signal configuration information and/or SL measurement request information to the second terminal

Send a target sidelink positioning reference signal

Perform measurement on the target sidelink positioning reference signal

Feed back an SL measurement result and/or location Information of the first terminal and/or HARQ information to the network-side device

FIG. 6

Second terminal

Schedule the second
terminal to send an SL
PRS signal

Schedule the first terminal
to perform measurement
on an SL PRS signal

First terminal

FIG. 7

FIG. 8

Second terminal

Schedule the second terminal to send an SL PRS signal

Schedule the first terminal to perform measurement on an SL PRS signal

First terminal

FIG. 9

| Network-side device | Second terminal/transmit terminal | First terminal/target terminal/receive terminal |

Exchange first sidelink positioning reference signal configuration information with the second terminal

Send a target sidelink positioning reference signal

Send second sidelink positioning reference signal configuration information and/or SL measurement request information to the first terminal

Perform measurement on the target sidelink positioning reference signal

Feed back an SL measurement result and/or location information of the first terminal and/or HARQ information to the second terminal

FIG. 10

Start

A network-side device sends first sidelink
positioning reference signal configuration
information to a first terminal; where the first
terminal is a transmit terminal or a receive terminal
of a target sidelink positioning reference signal

111

End

FIG. 11

Start

A second terminal exchanges first sidelink
positioning reference signal configuration
information with a network-side device; and/or
the second terminal exchanges second sidelink
positioning reference signal configuration
information with a first terminal

121

End

FIG. 12

Sidelink positioning signal scheduling apparatus

First receiving module ⟋1310

1300

First processing module ⟋1320

FIG. 13

Sidelink positioning signal scheduling apparatus

First sending module 1410

1400

FIG. 14

Sidelink positioning signal scheduling apparatus

First information exchange module — 1510

Second information exchange module — 1520

1500

FIG. 15

Communication device — 1600

Processor — 1601

Memory — 1602

FIG. 16

FIG. 17

FIG. 18

FIG. 19

## INTERNATIONAL SEARCH REPORT

| International application No. |
|---|
| **PCT/CN2022/140327** |

**A. CLASSIFICATION OF SUBJECT MATTER**

H04W 72/12(2023.01)i

According to International Patent Classification (IPC) or to both national classification and IPC

**B. FIELDS SEARCHED**

Minimum documentation searched (classification system followed by classification symbols)

H04W,H04Q

Documentation searched other than minimum documentation to the extent that such documents are included in the fields searched

Electronic data base consulted during the international search (name of data base and, where practicable, search terms used)

CNKI, CNPAT, WPI, EPODOC, 3GPP: 侧链, 侧链路, 旁链路, 旁链, 副链路, 定位, 参考, 信号, 信息, 资源, 配置, 位置, 距离, sidelink, position, reference, signal, information, resource, configuration, distance

**C. DOCUMENTS CONSIDERED TO BE RELEVANT**

| Category* | Citation of document, with indication, where appropriate, of the relevant passages | Relevant to claim No. |
|---|---|---|
| X | US 2021297206 A1 (QUALCOMM INC.) 23 September 2021 (2021-09-23) description, paragraphs 58-129 and 219-221 | 1-76 |
| A | CN 112119607 A (BEIJING XIAOMI MOBILE SOFTWARE CO., LTD.) 22 December 2020 (2020-12-22) entire document | 1-76 |
| A | US 2020313743 A1 (KT CORP.) 01 October 2020 (2020-10-01) entire document | 1-76 |
| A | US 2021099265 A1 (SAMSUNG ELECTRONICS CO., LTD.) 01 April 2021 (2021-04-01) entire document | 1-76 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 January 2023** | **16 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/140327**

| Patent document cited in search report | | | Publication date (day/month/year) | Patent family member(s) | | | Publication date (day/month/year) |
|---|---|---|---|---|---|---|---|
| US | 2021297206 | A1 | 23 September 2021 | WO | 2021188208 | A1 | 23 September 2021 |
| | | | | TW | 202137785 | A | 01 October 2021 |
| | | | | BR | 112022018215 | A2 | 25 October 2022 |
| | | | | KR | 20220155429 | A | 22 November 2022 |
| CN | 112119607 | A | 22 December 2020 | WO | 2022011753 | A1 | 20 January 2022 |
| US | 2020313743 | A1 | 01 October 2020 | KR | 20200116026 | A | 08 October 2020 |
| | | | | CN | 111756515 | A | 09 October 2020 |
| US | 2021099265 | A1 | 01 April 2021 | EP | 4018591 | A1 | 29 June 2022 |
| | | | | WO | 2021066551 | A1 | 08 April 2021 |
| | | | | KR | 20210038270 | A | 07 April 2021 |
| | | | | CN | 114503493 | A | 13 May 2022 |

Form PCT/ISA/210 (patent family annex) (July 2022)

**EP 4 456 644 A1**

**Patent documents cited in the description**

- CN 202111572848